# EUROPEAN PATENT APPLICATION

(11) **EP 1 271 996 A2**
(43) Date of publication of application: **02.01.2003**
(21) Application number: 02014321.0
(22) Date of filing: 27.06.2002
(51) Int. Cl.: H04Q 11/04

(54) **Optical transmission apparatus**

(30) Priority: 25.04.2002 JP 2002123975; 28.06.2001 JP 2001196035; 25.09.2001 JP 2001291627; 29.11.2001 JP 2001364089
(71) Applicant: MATSUSHITA ELECTRIC INDUSTRIAL CO., LTD, Kadoma-shi, Osaka 571-0000 (JP)
(72) Inventor: Fuse, Masaru, Neyagawa-shi, Osaka-fu (JP)
(74) Representative: Gassner, Wolfgang, Dr.

(57) **Abstract**

In a transmission apparatus (8), modulation sections (201) convert digital data signals into DSL modulated signals, which are thereafter subjected to frequency conversion so as to span respectively different frequency bands. A combination section (207) frequency-division-multiplexes output signals from the modulation sections (201). An optical modulation section (102) converts the frequency-division-multiplexed signal into an optical signal. An optical detection section (104) reconverts the optical signal which has been transmitted over the optical transmission section (103) into an electrical signal. A splitter section (408) demultiplexes the electrical signal. Each of second frequency conversion sections 811 subjects either one of the demultiplexed signals to frequency conversion, and sends a resultant DSL modulated signal onto an electrical transmission section (105). The DSL demodulation section (106) reconverts the DSL modulated signal which has been transmitted over the electrical transmission section (105) into the original digital data signal.

## Description

### BACKGROUND OF THE INVENTION

### Field of the Invention

The present invention relates to a transmission apparatus for providing DSL (Digital Subscriber Line) services.

### Description of the Background Art

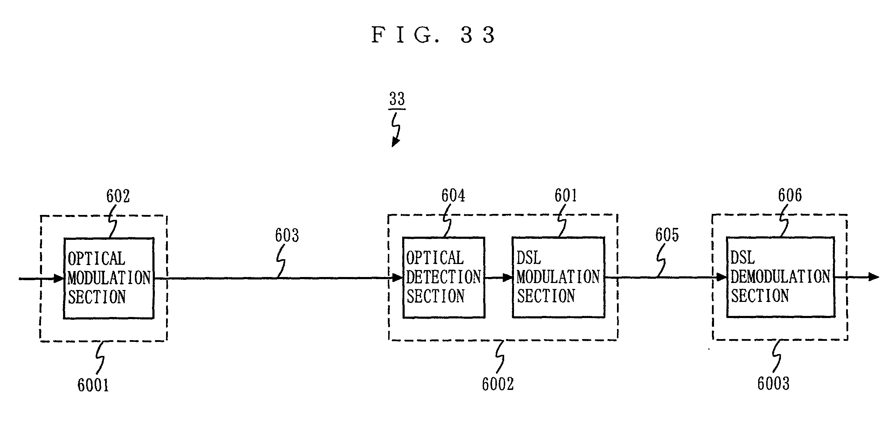

The following technique is known for providing digital subscriber line (hereinafter abbreviated as "DSL") services, which will be described with reference to FIG. 33. FIG. 33 is a block diagram illustrating an exemplary structure of a conventional transmission apparatus for providing DSL services. The transmission apparatus 33 shown in FIG. 33 comprises a DSL modulation section 601, an optical modulation section 602, an optical transmission section 603, an optical detection section 604, an electrical transmission section 605, and a DSL demodulation section 606.

The transmission apparatus 33 operates as follows. The optical modulation section 602 converts an inputted digital data signal into an optical signal, and sends it to the optical transmission section 603. The optical detection section 604 reconverts the optical signal which has been transmitted over the optical transmission section 603 into the digital data signal, which is an electrical signal. The DSL modulation section 601 converts the digital data signal outputted from the optical detection section 604 into a DSL modulated signal of a predetermined format, and sends it to the electrical transmission section 605. The DSL demodulation section 606 reconverts the DSL modulated signal which has been transmitted over the electrical transmission section 605 into the original digital data signal.

The transmission apparatus 33 is generally employed for DSL services. A typical DSL service is realized as follows: An optical transmission installation 6001 including the optical modulation section 602 may be installed at a central station of a telephone company or the like. An optical terminal device 6002 including the optical detection section 604 and the DSL modulation section 601 may be installed on top of a utility pole, on a side wall of a subscriber's residence, or in a common utility portion of a multi-dwelling, etc. A subscriber terminal 6003 including the DSL demodulation section 606 may be installed within a subscriber's residence.

In the above-described conventional transmission apparatus, a large part of the entire transmission path from the station equipment to the subscriber terminal is constructed of optical fibers (which have a relatively low loss) and digital signals are transmitted through this portion, thereby improving the transmission characteristics and relaxing the requirements for the performance of the transmission path. On the other hand, the end portion (i.e., from the optical terminal device to the subscriber terminal) of the entire transmission path, -- that is, the wiring within the subscriber's residence-- is composed of electric wiring such as twisted-pair cables, and DSL modulated signals are transmitted through this portion. Thus, the handling of the wiring within the subscriber's residence is facilitated, and the costs thereof can be reduced. In accordance with this conventional technique, the entire transmission system can be elongated, while providing good installability and economy of the equipment within the subscriber's residence.

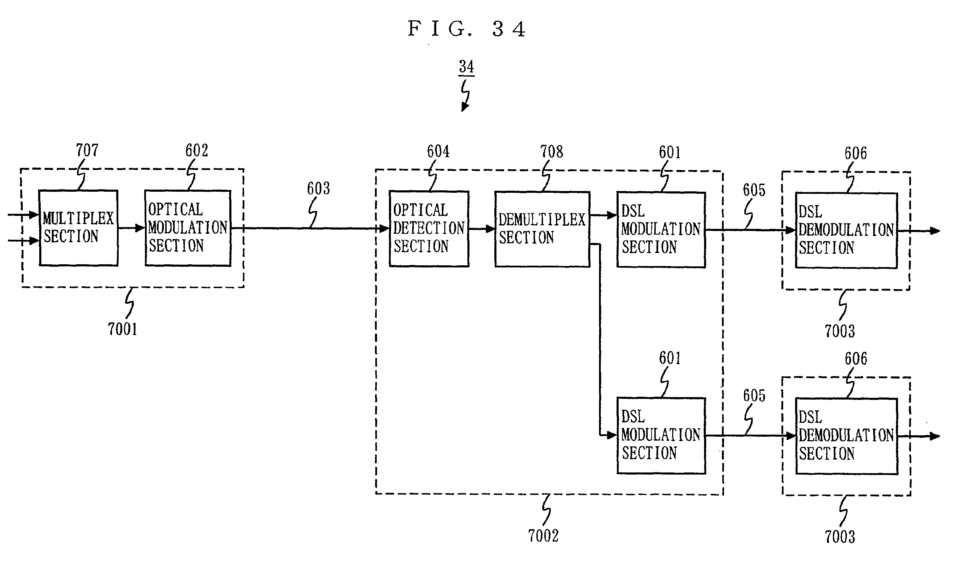

However, the above-described conventional transmission apparatus has a problem in that, due to the large size of the optical terminal device, there is a limit to the number of subscribers that can be accommodated, leading to high equipment costs, as described below. In the structure shown in FIG. 33, the DSL modulation section 601 needs to be included in the optical terminal device 6002, thereby increasing the size of the optical terminal device 6002 and the costs associated with the optical terminal device 6002. In the case where a plurality of subscribers are to be accommodated by this transmission apparatus as shown in FIG. 34 (two such subscribers are illustrated in the transmission apparatus 34 of FIG. 34), the optical transmission installation 7001 needs to include a multiplex section 707 for multiplexing a plurality of digital signals; and the optical terminal device 7002 needs to include a demultiplex section 708 for demultiplexing the digital signal outputted from the optical detection section 604 and two DSL modulation sections 601 for converting the plurality of demultiplexed digital signals into respective DSL modulated signals. In particular, the optical terminal device 7002, which is installed on the subscriber side, increases in size and the costs associated therewith increase, thereby unfavorably affecting the economy of the overall transmission apparatus.

In the case where an ATM mode (Asynchronous Transfer Mode), which is commonly used for DSL systems, is adopted as the transmission format of the digital signals, the optical transmission installation and the optical terminal device need to be equipped with equipment and circuitry which support the ATM mode, thereby further increasing the costs associated therewith.

### SUMMARY OF THE INVENTION

Therefore, an object of the present invention is to provide a transmission apparatus which can provide DSL services and the like at low costs and which allows the accommodatable number of subscribers to be easily expanded.

The present invention has the following features to attain the object above.

A first aspect of the present invention is directed to a transmission apparatus for providing a DSL (Digital Subscriber Line) service, comprising: a DSL modulation section for generating a DSL modulated signal based on an inputted digital data signal; an optical modulation section for converting the DSL modulated signal outputted from the DSL modulation section into an optical signal; an optical transmission section for transmitting the optical signal outputted from the optical modulation section; an optical detection section for reconverting the optical signal transmitted over the optical transmission section into the DSL modulated signal, the DSL modulated signal being an electrical signal; an electrical transmission section for transmitting the DSL modulated signal outputted from the optical detection section; and a DSL demodulation section for demodulating the DSL modulated signal transmitted over the electrical transmission section to reproduce the digital data signal.

Thus, according to the first aspect, a digital signal is converted into a DSL modulated signal in an optical transmission installation, and the DSL modulated signal is optically transmitted. On the other hand, the DSL modulated signal is electrically transmitted from an optical terminal device to a subscriber terminal. Thus, the DSL modulation section can be installed within the optical transmission installation. As a result, the optical terminal device can be realized so as to be compact and low-cost, and both good installability and low cost of the transmission apparatus can be attained.

A second aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; an optical modulation section for converting a signal outputted from the modulation section into an optical signal; an optical transmission section for transmitting the optical signal outputted from the optical modulation section; an optical detection section for reconverting the optical signal transmitted over the optical transmission section into an electrical signal; an electrical transmission section for transmitting the electrical signal outputted from the optical detection section; and a demodulation section including a second frequency conversion section for subjecting the electrical signal transmitted over the electrical transmission section to a frequency conversion so as to span a predetermined second frequency band, and a DSL demodulation section for demodulating a signal outputted from the second frequency conversion section to reproduce the digital data signal.

Thus, according to the second aspect, a DSL modulated signal generated within an optical transmission installation is subjected to frequency conversion, and thereafter optically transmitted. As a result, the optical terminal device can be realized so as to be compact and low-cost, and both good installability and low cost of the transmission apparatus can be attained. Moreover, based on a simple a construction, optical transmission can be effected using a selected frequency band.

A third aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; an optical modulation section for converting a signal outputted from the modulation section into an optical signal; an optical transmission section for transmitting the optical signal outputted from the optical modulation section; an optical detection section for reconverting the optical signal transmitted over the optical transmission section into an electrical signal; a second frequency conversion section for subjecting a signal outputted from the optical detection section to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

Thus, according to the third aspect, a DSL modulated signal generated within an optical transmission installation is subjected to frequency conversion, and thereafter optically transmitted. As a result, the optical terminal device can be realized so as to be compact and low-cost, and both good installability and low cost of the transmission apparatus can be attained. Moreover, based on a simple construction, optical transmission can be effected using a selected frequency band.

A fourth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM (Frequency Division Multiplexed) signal; an optical modulation section for converting the FDM signal outputted from the combination section into an optical signal; an optical transmission section for transmitting the optical signal outputted from the optical modulation section; an optical detection section for reconverting the optical signal transmitted over the optical transmission section into the FDM signal, the FDM signal being an electrical signal; an electrical transmission section for transmitting the FDM signal outputted from the optical detection section; and a demodulation section including a second frequency conversion section for selecting one of the M signals contained in the FDM signal transmitted over the electrical transmission section and subjecting the selected signal to frequency conversion so as to span a predetermined second frequency band, and a DSL demodulation section for demodulating a signal outputted from the second frequency conversion section to reproduce the digital data signal.

Thus, according to the fourth aspect, digital data signals on a plurality of channels are converted into DSL modulated signals, subjected to frequency conversion and multiplex, and then optically transmitted. As a result, a multi-channel transmission apparatus can be provided based on a simple construction.

A fifth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; an optical modulation section for converting the FDM signal outputted from the combination section into an optical signal; an optical transmission section for transmitting the optical signal outputted from the optical modulation section; an optical detection section for reconverting the optical signal transmitted over the optical transmission section into the FDM signal, the FDM signal being an electrical signal; a second frequency conversion section for selecting one of the M signals contained in the FDM signal outputted from the optical detection section, and subjecting the selected signal to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

Thus, according to the fifth aspect, digital data signals on a plurality of channels are converted to DSL modulated signals, subjected to frequency conversion and multiplexed, optically transmitted, again subjected to frequency conversion, and then electrically transmitted. Thus, equipment and circuitry similar to those used in conventional systems can be utilized for the demodulation section, so that the costs associated with the multi-channel transmission apparatus can be reduced.

A sixth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; an optical modulation section for converting the FDM signal outputted from the combination section into an optical signal; an optical transmission section for transmitting the optical signal outputted from the optical modulation section; an optical detection section for reconverting the optical signal transmitted over the optical transmission section into the FDM signal, the FDM signal being an electrical signal; a branching section for branching the FDM signal outputted from the optical detection section into N FDM signals (where N is an integer equal to or greater than two); N electrical transmission sections provided respectively corresponding to the N FDM signals outputted from the branching section for transmitting the respective branched-out FDM signals; N demodulation sections provided respectively corresponding to the N electrical transmission sections, each including a second frequency conversion section for selecting one of the M signals contained in the FDM signal transmitted over the respective electrical transmission section and subjecting the selected signal to frequency conversion so as to span a predetermined second frequency band, and a DSL demodulation section for demodulating a signal outputted from the second frequency conversion section to reproduce the digital data signal.

Thus, according to the sixth aspect, digital data signals on a plurality of channels are converted into DSL modulated signals, subjected to frequency conversion and multiplexed, and then optically transmitted. Thereafter, the received signal is branched out so as to be inputted to a plurality of subscriber terminals. Thus, there is provided a large-capacity transmission apparatus which is capable of accommodating a large number of subscribers based on an economical construction.

A seventh aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; an optical modulation section for converting the FDM signal outputted from the combination section into an optical signal; an optical transmission section for transmitting the optical signal outputted from the optical modulation section; an optical detection section for reconverting the optical signal transmitted over the optical transmission section into the FDM signal, the FDM signal being an electrical signal; a splitter section for extracting L different signals (where L is an integer equal to or greater than two and equal to or smaller than M) from among the M signals contained in the FDM signal outputted from the optical detection section, the L different signals being separately outputted; L electrical transmission sections provided respectively corresponding to the L signals outputted from the splitter section for transmitting the respective L signals; L demodulation sections provided respectively corresponding to the L electrical transmission sections, each including a second frequency conversion section for subjecting the signal transmitted over the respective electrical transmission section to frequency conversion so as to span a predetermined second frequency band, and a DSL demodulation section for demodulating a signal outputted from the second frequency conversion section to reproduce the digital data signal.

Thus, according to the seventh aspect, digital data signals for transmission to a plurality of subscribers are converted into DSL modulated signals, subjected to frequency conversion and multiplexed, optically transmitted, and thereafter demultiplexed so as to be transmitted to the respective subscriber terminals. Thus, there is provided a transmission apparatus which is capable of accommodating a large number of subscribers based on an economical construction.

An eighth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; an optical modulation section for converting the FDM signal outputted from the combination section into an optical signal; an optical transmission section for transmitting the optical signal outputted from the optical modulation section; an optical detection section for reconverting the optical signal transmitted over the optical transmission section into the FDM signal, the FDM signal being an electrical signal; a splitter section for extracting L different signals (where L is an integer equal to or greater than two and equal to or smaller than M) from among the M signals contained in the FDM signal outputted from the optical detection section, the L different signals being separately outputted; L second frequency conversion sections provided respectively corresponding to the L signals outputted from the splitter section, wherein each second frequency conversion section subjects the respective signal to frequency conversion so as to span a predetermined second frequency band; L electrical transmission sections provided respectively corresponding to the L second frequency conversion sections for transmitting the respective L signals outputted therefrom; and L DSL demodulation sections provided respectively corresponding to the L electrical transmission sections for demodulating the respective signals transmitted over the respective electrical transmission sections to reproduce the digital data signals.

Thus, according to the eighth aspect, digital data signals for transmission to a plurality of subscribers are converted into DSL modulated signals, subjected to frequency conversion and multiplexed, optically transmitted, and then demultiplex and again subjected to frequency conversion. The resultant DSL modulated signals are electrically transmitted to the respective subscriber terminals. Thus, equipment and circuitry similar to those used in conventional systems can be utilized for the plurality of demodulation sections. Therefore, there is provided a transmission apparatus which is capable of accommodating a large number of subscribers based on an economical construction.

In the sixth, seventh, and eighth aspects, M may be equal to N. Thus, the number of digital data to be inputted to the transmission installation an the number of subscriber terminals can be made equal. As a result, a plurality of subscribers can be efficiently accommodated, thereby improving the economy of the transmission apparatus.

In the second, third, and eighth aspects, the second frequency band may be a frequency band spanned by the DSL modulated signal. Thus, by ensuring that the frequency band of the DSL modulated signal outputted from the DSL modulation section provided in an optical transmission installation is equal to the second frequency band resulting from the second frequency conversion section, it becomes possible to utilize circuitry having a commonly-used construction for the DSL modulation section and DSL demodulation section, thereby improving the economy of the transmission apparatus.

In the first, third, and eighth aspects, the DSL modulated signal may be one selected from the group consisting of: a signal modulated by DMT (Discrete Multi Tone)modulation technique, a signal modulated by CAP (Carrierless Amplitude/Phase modulation) modulation technique, and a signal modulated by QAM (Quadrature Amplitude Modulation) modulation technique. Thus, by adopting a widely-used format as the format of the DSL modulated signals, it becomes possible to employ commonly-used circuitry for the DSL modulation section and the DSL demodulation section, thereby improving the economy of the transmission apparatus.

In the first, third, and eighth aspects, the electrical transmission section may comprise a twisted-pair cable or a coaxial cable. Thus, by employing a widely-used twisted-pair cable or coaxial cable as the electrical transmission section from an optical terminal device to a subscriber terminal, the economy of the transmission apparatus can be improved.

A ninth aspect of the present invention is directed to a transmission apparatus for providing a DSL service, comprising: a DSL modulation section for generating a DSL modulated signal based on an inputted digital data signal; a first FM modulation section for generating a frequency-modulated signal based on the DSL modulated signal outputted from the DSL modulation section; an optical modulation section for converting the frequency-modulated signal outputted from the first FM modulation section into an optical signal; an optical transmission section for transmitting the optical signal outputted from the optical modulation section; an optical detection section for reconverting the optical signal transmitted over the optical transmission section into the frequency-modulated signal, the frequency-modulated signal being an electrical signal; a first FM demodulation section for demodulating the frequency-modulated signal outputted from the optical detection section to reproduce the DSL modulated signal; an electrical transmission section for transmitting the DSL modulated signal outputted from the first FM demodulation section; and a DSL demodulation section for demodulating the DSL modulated signal transmitted over the electrical transmission section to reproduce the digital data signal.

A tenth aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; a first FM modulation section for generating a frequency-modulated signal based on a signal outputted from the modulation section; an optical modulation section for converting the frequency-modulated signal outputted from the first FM modulation section into an optical signal; an optical transmission section for transmitting the optical signal outputted from the optical modulation section; an optical detection section for reconverting the optical signal transmitted over the optical transmission section into the frequency-modulated signal, the frequency-modulated signal being an electrical signal; a first FM demodulation section for demodulating the frequency-modulated signal outputted from the optical detection section to reproduce the signal outputted from the modulation section; a second frequency conversion section for subjecting a signal outputted from the first FM demodulation section to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

An eleventh aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a first combination section for multiplexing the M signals outputted from the M modulation sections and outputting an FDM signal; a first FM modulation section for generating a frequency-modulated signal based on the FDM signal outputted from the first combination section; an optical modulation section for converting the frequency-modulated signal outputted from the first FM modulation section into an optical signal; an optical transmission section for transmitting the optical signal outputted from the optical modulation section; an optical detection section for reconverting the optical signal transmitted over the optical transmission section into the frequency-modulated signal, the frequency-modulated signal being an electrical signal; a first FM demodulation section for demodulating the frequency-modulated signal outputted from the optical detection section to reproduce the FDM signal; a second frequency conversion section for selecting one of the M signals contained in the FDM signal outputted from the first FM demodulation section and subjecting the selected signal to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

A twelfth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a first combination section for multiplexing the M signals outputted from the M modulation sections and outputting an FDM signal; a first FM modulation section for generating a frequency-modulated signal based on the FDM signal outputted from the first combination section; an optical modulation section for converting the frequency-modulated signal outputted from the first FM modulation section into an optical signal; an optical transmission section for transmitting the optical signal outputted from the optical modulation section; an optical detection section for reconverting the optical signal transmitted over the optical transmission section into the frequency-modulated signal, the frequency-modulated signal being an electrical signal; a first FM demodulation section for demodulating the frequency-modulated signal outputted from the optical detection section to reproduce the FDM signal; a splitter section for extracting L different signals (where L is an integer equal to or greater than two and equal to or smaller than M) from among the M signals contained in the FDM signal outputted from the first FM demodulation section, the L different signals being separately outputted; L second frequency conversion sections provided respectively corresponding to the L signals outputted from the splitter section, wherein each second frequency conversion section subjects the respective signal to frequency conversion so as to span a predetermined second frequency band; L electrical transmission sections provided respectively corresponding to the L second frequency conversion sections for transmitting the respective L signals outputted therefrom; and L DSL demodulation sections provided respectively corresponding to the L electrical transmission sections for demodulating the respective signals transmitted over the respective electrical transmission sections to reproduce the digital data signals.

Thus, the ninth to twelfth aspects of the present invention are directed to the subject matter of the first, third, fifth, and eight aspects, respectively, plus FM modulation/demodulation functions introduced before and after the optical transmission. Therefore, according to the ninth to twelfth aspects, the noise characteristics and multiple reflection resistance during optical transmission can be improved by utilizing the advantages of FM transmission technique, in addition to the effects attained by the first, third, fifth, and eight aspects. Thus, a good transmission quality can be secured even in the case where a low-quality optical transmission path is used. As a result, a high-quality and low-cost transmission apparatus can be provided.

A thirteenth aspect of the present invention is directed to a transmission apparatus for providing a DSL service, comprising: a DSL modulation section for generating a DSL modulated signal based on an inputted digital data signal; an optical modulation section for converting the DSL modulated signal outputted from the DSL modulation section into an optical signal; an optical transmission section for transmitting the optical signal outputted from the optical modulation section; an optical distribution section for distributing the optical signal transmitted over the optical transmission section as a plurality of optical signals; a plurality of optical detection sections provided respectively corresponding to the plurality of optical signals outputted from the optical distribution section for reconverting each of the distributed optical signals into the DSL modulated signal, the DSL modulated signal being an electrical signal; a plurality of electrical transmission sections provided respectively corresponding to the plurality of optical detection sections for transmitting the respective DSL modulated signals outputted therefrom; and a plurality of DSL demodulation sections provided respectively corresponding to the plurality of electrical transmission sections for demodulating the respective DSL modulated signals transmitted over the respective electrical transmission sections to reproduce the digital data signal.

A fourteenth aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; an optical modulation section for converting a signal outputted from the modulation section into an optical signal; an optical transmission section for transmitting the optical signal outputted from the optical modulation section; an optical distribution section for distributing the optical signal transmitted over the optical transmission section as a plurality of optical signals; a plurality of optical detection sections provided respectively corresponding to the plurality of optical signals outputted from the optical distribution section for reconverting each of the distributed optical signals into an electrical signal; a plurality of second frequency conversion sections provided respectively corresponding to the plurality of optical detection sections, wherein each second frequency conversion section subjects the signal outputted from the respective optical detection section to frequency conversion so as to span a predetermined second frequency band; a plurality of electrical transmission sections provided respectively corresponding to the plurality of second frequency conversion sections for transmitting the respective signals outputted therefrom; and a plurality of DSL demodulation sections provided respectively corresponding to the plurality of electrical transmission sections for demodulating the respective signals transmitted over the respective electrical transmission sections to reproduce the digital data signal.

A fifteenth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; an optical modulation section for converting the FDM signal outputted from the combination section into an optical signal; an optical transmission section for transmitting the optical signal outputted from the optical modulation section; an optical distribution section for distributing the optical signal transmitted over the optical transmission section as a plurality of optical signals; a plurality of optical detection sections provided respectively corresponding to the plurality of optical signals outputted from the optical distribution section for reconverting each of the distributed optical signals into the FDM signal, the FDM signal being an electrical signal; a plurality of second frequency conversion sections provided respectively corresponding to the plurality of optical detection sections, wherein each second frequency conversion section selects one of the M signals contained in the FDM signal outputted from the respective optical detection section, and subjects the selected signal to frequency conversion so as to span a predetermined second frequency band; a plurality of electrical transmission sections provided respectively corresponding to the plurality of second frequency conversion sections for transmitting the respective signals outputted therefrom; a plurality of DSL demodulation sections provided respectively corresponding to the plurality of electrical transmission sections for demodulating the respective signals transmitted over the respective electrical transmission sections to reproduce the digital data signals.

Thus, the thirteenth to fifteenth aspects of the present invention are directed to the subject matter of the first, third, and fifth aspects, respectively, plus the function of distributing a received optical signal. Thus, according to the thirteenth to fifteenth aspects, in addition to the effects attained by the first, third, and fifth aspects, a received optical signal is distributed into a plurality of optical signals, thereby making it possible to accommodate an even greater number of subscriber terminals, and hence improving the economy of the transmission apparatus.

In the fifteenth aspect, the respective optical detection sections, the respective second frequency conversion sections, the respective electrical transmission sections, and the respective DSL demodulation sections may select to process signals spanning respectively different frequency bands from among the M signals contained in the FDM signal resulting from the reconversion by the optical detection section. Thus, the respective subscriber terminals can process respectively different frequency-converted signals. As a result, there is provided a transmission apparatus which is capable of accommodating a large number of subscriber terminals, and which enables signals to be transmitted with an excellent quality.

A sixteenth aspect of the present invention is directed to a transmission apparatus for providing a DSL service, comprising: a DSL modulation section for generating a DSL modulated signal based on an inputted digital data signal; a frequency division multiplex section for multiplexing a predetermined second electrical signal onto the DSL modulated signal outputted from the DSL modulation section; an optical modulation section for converting a signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating the DSL modulated signal from the second electrical signal in the electrical signal outputted from the optical detection section; an electrical transmission section for transmitting the DSL modulated signal outputted from the frequency separation section; a DSL demodulation section for demodulating the DSL modulated signal transmitted over the electrical transmission section to reproduce the digital data signal.

A seventeenth aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; a frequency division multiplex section for multiplexing a predetermined second electrical signal onto a signal outputted from the modulation section; an optical modulation section for converting the signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating a signal corresponding to the outputted signal from the modulation section from the second electrical signal in the electrical signal outputted from the optical detection section; a second frequency conversion section for subjecting the signal corresponding to the outputted signal from the modulation section separated by the frequency separation section to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

An eighteenth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination/multiplex section for multiplexing the M signals outputted from the M modulation sections to generate an FDM signal, and multiplexing a predetermined second electrical signal onto the FDM signal; an optical modulation section for converting a signal outputted from the combination/multiplex section into an optical signal; an optical transmission section for transmitting the optical signal outputted from the optical modulation section; an optical detection section for reconverting the optical signal transmitted over the optical transmission section into an electrical signal; a frequency separation section for separating the FDM signal from the second electrical signal in the electrical signal outputted from the optical detection section; a second frequency conversion section for selecting one of the M signals contained in the FDM signal outputted from the frequency separation section, and subjecting the selected signal to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

A nineteenth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination/multiplex section for multiplexing the M signals outputted from the M modulation sections to generate an FDM signal, and multiplexing a predetermined second electrical signal onto the FDM signal; an optical modulation section for converting a signal outputted from the combination/multiplex section into an optical signal; an optical transmission section for transmitting the optical signal outputted from the optical modulation section; an optical detection section for reconverting the optical signal transmitted over the optical transmission section into an electrical signal; a frequency separation section for separating the FDM signal from the second electrical signal in the electrical signal outputted from the optical detection section; a splitter section for extracting L different signals (where L is an integer equal to or greater than two and equal to or smaller than M) from among the M signals contained in the FDM signal outputted from the frequency separation section, the L different signals being separately outputted; L second frequency conversion sections provided respectively corresponding to the L signals outputted from the splitter section, wherein each second frequency conversion section subjects the respective signal to frequency conversion so as to span a predetermined second frequency band; L electrical transmission sections provided respectively corresponding to the L second frequency conversion sections for transmitting the respective L signals outputted therefrom; and L DSL demodulation sections provided respectively corresponding to the L electrical transmission sections for demodulating the respective signals transmitted over the respective electrical transmission sections to reproduce the digital data signals.

Thus, the sixteenth to nineteenth aspects of the present invention are directed to the subject matter of the first, third, fifth and eighth aspects, respectively, plus, the function of frequency-division-multiplex a second electrical signal onto an optical signal for transmission. Thus, according to the sixteenth to nineteenth aspects, in addition to the effects attained by the first, third, fifth, and eighth aspects, there is provided a transmission apparatus which has a high expandability and flexibility such that it is also capable of supporting services other than DSL services.

In the seventeenth and nineteenth aspects, the second electrical signal may be a base-band digital data signal or an audio signal. Thus, there is provided a transmission apparatus which can provide new services by frequency-division-multiplexing a digital data signal or an audio signal onto a DSL modulated signal or an FDM signal for transmission.

A twentieth aspect of the present invention is directed to a transmission apparatus for providing a DSL service, comprising: a DSL modulation section for generating a DSL modulated signal based on an inputted digital data signal; a first FM modulation section for generating a frequency-modulated signal based on the DSL modulated signal outputted from the DSL modulation section; a frequency division multiplex section for multiplexing a predetermined second electrical signal onto the frequency-modulated signal outputted from the first FM modulation section; an optical modulation section for converting a signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating the frequency-modulated signal from the second electrical signal in the electrical signal outputted from the optical detection section; a first FM demodulation section for demodulating the frequency-modulated signal outputted from the frequency separation section to reproduce the DSL modulated signal, the DSL modulated signal being an electrical signal; an electrical transmission section for transmitting the DSL modulated signal outputted from the first FM demodulation section; and a DSL demodulation section for demodulating the DSL modulated signal transmitted over the electrical transmission section to reproduce the digital data signal.

A twenty-first aspect of the present invention is directed to a transmission apparatus for providing a DSL service, comprising: a modulation section including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band; a first FM modulation section for generating a frequency-modulated signal based on a signal outputted from the modulation section; a frequency division multiplex section for multiplexing a predetermined second electrical signal onto the frequency-modulated signal outputted from the first FM modulation section; an optical modulation section for converting a signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating the frequency-modulated signal from the second electrical signal in the electrical signal outputted from the optical detection section; a first FM demodulation section for demodulating the frequency-modulated signal outputted from the frequency separation section to reproduce a signal corresponding to the outputted signal from the modulation section; a second frequency conversion section for subjecting a signal outputted from the first FM demodulation section to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

A twenty-second aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; a first FM modulation section for generating a frequency-modulated signal based on the FDM signal outputted from the combination section; a frequency division multiplex section for multiplexing a predetermined second electrical signal onto the frequency-modulated signal outputted from the first FM modulation section; an optical modulation section for converting a signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating the frequency-modulated signal from the second electrical signal in the electrical signal outputted from the optical detection section; a first FM demodulation section for demodulating the frequency-modulated signal outputted from the frequency separation section to reproduce the FDM signal; a second frequency conversion section for selecting one of the M signals contained in the FDM signal outputted from the first FM demodulation section and subjecting the selected signal to frequency conversion so as to span a predetermined second frequency band; an electrical transmission section for transmitting a signal outputted from the second frequency conversion section; and a DSL demodulation section for demodulating the signal transmitted over the electrical transmission section to reproduce the digital data signal.

A twenty-third aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; a combination section for multiplexing the M signals outputted from the M modulation sections and outputting an FDM signal; a first FM modulation section for generating a frequency-modulated signal based on the FDM signal outputted from the combination section; a frequency division multiplex section for multiplexing a predetermined second electrical signal onto the frequency-modulated signal outputted from the first FM modulation section; an optical modulation section for converting a signal outputted from the frequency division multiplex section into an optical signal; an optical transmission section for transmitting the optical signal outputted from the optical modulation section; an optical detection section for reconverting the optical signal transmitted over the optical transmission section into an electrical signal; a frequency separation section for separating the frequency-modulated signal from the second electrical signal in the electrical signal outputted from the optical detection section; a first FM demodulation section for demodulating the frequency-modulated signal outputted from the frequency separation section to reproduce the FDM signal; a splitter section for extracting L different signals (where L is an integer equal to or greater than two and equal to or smaller than M) from among the M signals contained in the FDM signal outputted from the first FM demodulation section, the L different signals being separately outputted; L second frequency conversion sections provided respectively corresponding to the L signals outputted from the splitter section, wherein each second frequency conversion section subjects the respective signal to frequency conversion so as to span a predetermined second frequency band; L electrical transmission sections provided respectively corresponding to the L second frequency conversion sections for transmitting the respective L signals outputted therefrom; and L DSL demodulation sections provided respectively corresponding to the L electrical transmission sections for demodulating the respective signals transmitted over the respective electrical transmission sections to reproduce the digital data signals.

Thus, the twentieth to twenty-third aspects of the present invention are directed to the subject matter of the first, third, fifth, and eighth aspects, respectively, plus the function of frequency-division-multiplexing a second electrical signal onto an optical signal for transmission and the FM modulation/demodulation functions introduced before and after optical transmission. Thus, according to the twentieth to twenty-third aspects, in addition to the effects attained by the first, third, fifth and eighth aspects, there is provided a transmission apparatus which has not only a high transmission quality but also a high expandability and flexibility such that it is also capable of supporting services other than DSL services.

A twenty-fourth aspect of the present invention is directed to a transmission apparatus for providing a DSL service, comprising: M modulation sections provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands; an FDM section for multiplexing a plurality of second electrical signals; a second FM modulation section for generating a frequency-modulated signal based on a signal outputted from the FDM section; a combination/multiplex section for multiplexing the M signals outputted from the M modulation sections to generate an FDM signal, and multiplexing the frequency-modulated signal outputted from the second FM modulation section onto the FDM signal; an optical modulation section for converting a signal outputted from the combination/multiplex section into an optical signal; an optical transmission section for transmitting the optical signal outputted from the optical modulation section; an optical detection section for reconverting the optical signal transmitted over the optical transmission section into an electrical signal; a frequency separation section for separating the FDM signal from the frequency-modulated signal in the electrical signal outputted from the optical detection section; a second frequency conversion section for selecting one of the M signals contained in the FDM signal outputted from the frequency separation section, and subjecting the selected signal to frequency conversion so as to span a predetermined second frequency band; an electrical transmission section for transmitting a signal outputted from the second frequency conversion section; a DSL demodulation section for demodulating the signal transmitted over the electrical transmission section to reproduce the digital data signals; a second FM demodulation section for demodulating the frequency-modulated signal outputted from the frequency separation section to reproduce the signal outputted from the FDM section; and an FDM separation section for subjecting a signal outputted from the second FM demodulation section to frequency separation to output the plurality of second electrical signals.

Thus, according to the twenty-fourth aspect, digital data signals on a plurality of channels are converted into DSL modulated signals, subjected to frequency conversion and multiplexed, and optically transmitted, together with a second electrical signal being frequency-division-multiplexed thereon. As a result, there is provided a transmission apparatus which has a high expandability and flexibility such that it is also capable of supporting services other than DSL services.

A twenty-fifth aspect of the present invention is directed to a transmission apparatus for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices, M first DSL modulation sections provided respectively corresponding to the M first communication devices, wherein each first DSL modulation section generates a first DSL modulated signal based on the first digital data signal outputted from the respective first communication device; M first frequency conversion sections provided respectively corresponding to the M first DSL modulation sections for subjecting the respective first DSL modulated signals outputted from the respective first DSL modulation sections to frequency conversion so as to span respectively different predetermined first frequency bands; a first combination section for multiplexing the M signals outputted from the M first frequency conversion sections and outputting a first FDM signal; a first optical modulation section for converting the first FDM signal outputted from the first combination section into an optical signal; a first optical transmission section for transmitting the optical signal outputted from the first optical modulation section; a first optical detection section for reconverting the optical signal transmitted over the first optical transmission section into the first FDM signal, the first FDM signal being an electrical signal; a first splitter section for separately outputting the M signals contained in the first FDM signal outputted from the first optical detection section; M second frequency conversion sections provided respectively corresponding to the M signals outputted from the first splitter section, wherein each second frequency conversion section subjects the respective separated signal to frequency conversion so as to span a predetermined second frequency band; M first electrical transmission sections provided respectively corresponding to the M second frequency conversion sections for transmitting the respective signals outputted from the respective second frequency conversion sections; M first DSL demodulation sections provided respectively corresponding to the M first electrical transmission sections, wherein each first DSL demodulation section demodulates the signal transmitted over the respective first electrical transmission section to reproduce the first digital data signal for output to the corresponding second communication device; M second DSL modulation sections provided respectively corresponding to the M second communication devices, wherein each second DSL modulation section generates a second DSL modulated signal based on the second digital data signal outputted from the respective second communication device; M second electrical transmission sections provided respectively corresponding to the M second DSL modulation sections for transmitting the respective second DSL modulated signals outputted from the respective second DSL modulation sections; M third frequency conversion sections provided respectively corresponding to the M second electrical transmission sections for subjecting the respective second DSL modulated signals transmitted over the respective second electrical transmission sections to frequency conversion so as to span respectively different predetermined third frequency bands; a second combination section for multiplexing the M signals outputted from the M third frequency conversion sections and outputting a second FDM signal; a second optical modulation section for converting the second FDM signal outputted from the second combination section into an optical signal; a second optical transmission section for transmitting the optical signal outputted from the second optical modulation section; a second optical detection section for reconverting the optical signal transmitted over the second optical transmission section into the second FDM signal, the second FDM signal being an electrical signal; a second splitter section for separately outputting the M signals contained in the second FDM signal outputted from the second optical detection section; M fourth frequency conversion sections provided respectively corresponding to the M signals outputted from the second splitter section, wherein each fourth frequency conversion section subjects the respective separated signal to frequency conversion so as to span a predetermined fourth frequency band; and M second DSL demodulation sections provided respectively corresponding to the M fourth frequency conversion sections, wherein each second DSL demodulation section demodulates the signal outputted from the respective fourth frequency conversion section to reproduce the second digital data signal for output to the corresponding first communication device.

Thus, according to the twenty-fifth aspect, a plurality of bi-directional signals outputted from transmission/reception circuits corresponding to a plurality of subscriber pairs are converted so as to span respectively different frequency bands, and transmitted as one FDM signal. As a result, the number of optical transmission lines can be reduced. Even in the case where there is a large number of subscriber pairs, a bi-directional transmission apparatus can be provided at low costs.

A twenty-sixth aspect of the present invention is directed to a transmission apparatus for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices, M first modulation/demodulation sections provided respectively corresponding to the M first communication devices, wherein each first modulation/demodulation section generates a first DSL modulated signal based on the first digital data signal outputted from the respective first communication device, and demodulates an inputted second DSL modulated signal to reproduce the respective second digital data signal for output to the corresponding first communication device; M first separation sections provided respectively corresponding to the M first modulation/demodulation sections, where each first separation section outputs the first DSL modulated signal outputted from the respective first modulation/demodulation section, and outputs the respective inputted second DSL modulated signal to the corresponding first modulation/demodulation section; M first frequency conversion sections provided respectively corresponding to the M first separation sections for subjecting the respective first DSL modulated signals outputted from the respective first separation sections to frequency conversion so as to span respectively different predetermined first frequency bands; a first combination section for multiplexing the M signals outputted from the M first frequency conversion sections and outputting a first FDM signal; a first optical modulation section for converting the first FDM signal outputted from the first combination section into an optical signal; a first optical transmission section for transmitting the optical signal outputted from the first optical modulation section; a first optical detection section for reconverting the optical signal transmitted over the first optical transmission section into the first FDM signal, the first FDM signal being an electrical signal; a first splitter section for separately outputting the M signals contained in the first FDM signal outputted from the first optical detection section; M second frequency conversion sections provided respectively corresponding to the M signals outputted from the first splitter section, wherein each second frequency conversion section subjects the respective separated signal to frequency conversion so as to span a predetermined second frequency band, thereby obtaining the respective first DSL modulated signal; M bi-directional electrical transmission sections provided respectively corresponding to the M second communication devices; M second separation sections provided respectively corresponding to the M second frequency conversion sections, wherein each second separation section transmits the first DSL modulated signal outputted from the respective second frequency conversion section to a corrooponding one of the M bi-directional electrical transmission sections, and receives for output the second DSL modulated signal transmitted over the corresponding bi-directional electrical transmission section; M second modulation/demodulation sections provided respectively corresponding to the M bi-directional electrical transmission sections, wherein each second modulation/demodulation section demodulates the first DSL modulated signal transmitted over the respective bi-directional electrical transmission section to reproduce the respective first digital data signal for output to the corresponding second communication device, and generates the second DSL modulated signal based on the second digital data signal outputted from the second communication device for output to the corresponding bi-directional electrical transmission section; M third frequency conversion sections provided respectively corresponding to M second separation sections for subjecting the respective second DSL modulated signals outputted from the respective second separation sections to frequency conversion so as to span respectively different predetermined third frequency bands; a second combination section for multiplexing the M signals outputted from the M third frequency conversion sections and outputting a second FDM signal; a second optical modulation section for converting the second FDM signal outputted from the second combination section into an optical signal; a second optical transmission section for transmitting the optical signal outputted from the second optical modulation section; a second optical detection section for reconverting the optical signal transmitted over the second optical transmission section into the second FDM signal, the second FDM signal being an electrical signal; a second splitter section for separately outputting the M signals contained in the second FDM signal outputted from the second optical detection section; and M fourth frequency conversion sections provided respectively corresponding to the M signals outputted from the second splitter section, wherein each fourth frequency conversion section subjects the respective separated signal to frequency conversion so as to span a predetermined fourth frequency band, thereby obtaining the second DSL modulated signal for output to the corresponding first separation section.

Thus, according to the twenty-sixth aspect, a plurality of bi-directional signals outputted from transmission/reception circuits corresponding to a plurality of subscriber pairs are converted so as to span respectively different frequency bands, and transmitted as one FDM signal. As a result, the number of optical transmission lines can be reduced. Even in the case where there is a large number of subscriber pairs, an economical bi-directional transmission apparatus can be provided at low costs.

A twenty-seventh aspect of the present invention is directed to a transmission apparatus for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices, M first modulation/demodulation sections provided respectively corresponding to the M first communication devices, wherein each first modulation/demodulation section generates a first DSL modulated signal based on the first digital data signal outputted from the respective first communication device, and demodulates an inputted second DSL modulated signal to reproduce the respective second digital data signal for output to the corresponding first communication device; M first separation sections provided respectively corresponding to the M first modulation/demodulation sections, where each first separation section outputs the first DSL modulated signal outputted from the respective first modulation/demodulation section, and outputs the respective inputted second DSL modulated signal to the corresponding first modulation/demodulation section; M first frequency conversion sections provided respectively corresponding to the M first separation sections for subjecting the respective first DSL modulated signals outputted from the respective first separation sections to frequency conversion so as to span respectively different predetermined first frequency bands; a first combination section for multiplexing the M signals outputted from the M first frequency conversion sections and outputting a first FDM signal; a first optical modulation section for converting the first FDM signal outputted from the first combination section into a first optical signal; a bi-directional optical transmission section for transmitting an optical signal in a bi-directional manner; a first optical combination/splitter section for transmitting the first optical signal outputted from the first optical modulation section to the bi-directional optical transmission section, and receiving and outputting a second optical signal transmitted over the bi-directional optical transmission section; a second optical combination/splitter section for receiving and outputting the first optical signal transmitted over the bi-directional optical transmission section, and sending the inputted second optical signal onto the bi-directional optical transmission section, a first optical detection section for reconverting the first optical signal outputted from the second optical combination/splitter section into the first FDM signal, the first FDM signal being an electrical signal; a first splitter section for separately outputting the M signals contained in the first FDM signal outputted from the first optical detection section; M second frequency conversion sections provided respectively corresponding to the M signals outputted from the first splitter section, wherein each second frequency conversion section subjects the respective separated signal to frequency conversion so as to span a predetermined second frequency band, thereby obtaining the respective first DSL modulated signal; M bi-directional electrical transmission sections provided respectively corresponding to the M second communication devices; M second separation sections provided respectively corresponding to the M second frequency conversion sections, wherein each second separation section transmits the first DSL modulated signal outputted from the respective second frequency conversion section to a corresponding one of the M bi-directional electrical transmission sections, and receives for output the second DSL modulated signal transmitted over the corresponding bi-directional electrical transmission section; M second modulation/demodulation sections provided respectively corresponding to the M bi-directional electrical transmission sections, wherein each second modulation/demodulation section demodulates the first DSL modulated signal transmitted over the respective bi-directional electrical transmission section to reproduce the respective first digital data signal for output to the corresponding second communication device, and generates the second DSL modulated signal based on the second digital data signal outputted from the second communication device for output to the corresponding bi-directional electrical transmission section; M third frequency conversion sections provided respectively corresponding to M second separation sections for subjecting the respective second DSL modulated signals outputted from the respective second separation sections to frequency conversion so as to span respectively different predetermined third frequency bands; a second combination section for multiplexing the M signals outputted from the M third frequency conversion sections and outputting a second FDM signal; a second optical modulation section for converting the second FDM signal outputted from the second combination section into the second optical signal and outputting the second optical signal to the second optical combination/splitter section; a second optical detection section for reconverting the second optical signal outputted from the second optical combination/splitter section into the second FDM signal, the second FDM signal being an electrical signal; a second splitter section for separately outputting the M signals contained in the second FDM signal outputted from the second optical detection section; and M fourth frequency conversion sections provided respectively corresponding to the M signals outputted from the second splitter section, wherein each fourth frequency conversion section subjects the respective separated signal to frequency conversion so as to span a predetermined fourth frequency band, thereby obtaining the second DSL modulated signal for output to the corresponding first separation section.

Thus, according to the twenty-seventh aspect, a plurality of bi-directional signals outputted from transmission/reception circuits corresponding to a plurality of subscriber pairs are converted so as to span respectively different frequency bands, and transmitted as one FDM signal. Moreover, the bi-directional signals are transmitted through one optical fiber in a direction-multiplexed manner. As a result, the number of optical transmission lines can be further reduced. Even in the case where there is a large number of subscriber pairs, an economical bi-directional transmission apparatus can be provided with a simpler construction.

In the twenty-sixth and twenty-seventh aspects, a frequency band spanned by the first DSL modulated signal outputted from each first modulation/demodulation section and a frequency band spanned by the second DSL modulated signal outputted from each second modulation/demodulation section may adjoin each other on a frequency axis. Alternatively, a frequency band spanned by a first signal and a frequency band spanned by a second signal may adjoin each other on a frequency axis, wherein the first signal is defined as the signal obtained by subjecting the first DSL modulated signal outputted from each first modulation/demodulation section to frequency conversion by the first frequency conversion section, and the second signal is defined as the signal obtained by subjecting the second DSL modulated signal outputted from the second modulation/demodulation section corresponding to the first modulation/demodulation section to frequency conversion by the second frequency conversion section. Thus, by ensuring that the frequency band spanned by the first and second DSL modulated signals (or the aforementioned first and second signals) adjoin each other on the frequency axis, even if cross-talk between bi-directional signals occurs for reasons associated with the performance of the circuitry and devices composing the apparatus, substantial deterioration in the transmission quality does not occur. Thus, a high-quality bi-directional transmission apparatus can be provided.

In the twenty-sixth and twenty-seventh aspects, frequency bands spanned by first signals and frequency bands spanned by second signals may alternate on a frequency axis, wherein each first signal is defined as the signal obtained by subjecting the first DSL modulated signal outputted from each first modulation/demodulation section to frequency conversion by the first frequency conversion section, and each second signal is defined as the signal obtained by subjecting the second DSL modulated signal outputted from the second modulation/demodulation section corresponding to the first modulation/demodulation section to frequency conversion by the second frequency conversion section. Thus, by ensuring that the signals obtained by subjecting the first DSL modulated signal to frequency conversion and the signals obtained by subjecting the second DSL modulated signal to frequency conversion span alternating frequency bands on the frequency axis. Therefore, even if transmission distortion occurs for reasons associated with the performance of the circuitry and devices composing the apparatus, substantial deterioration in the transmission quality does not occur. Thus, a high-quality bi-directional transmission apparatus can be provided.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of a transmission apparatus according to a first embodiment of the present invention;
FIG. 2 is a block diagram illustrating the structure of a transmission apparatus according to a second embodiment of the present invention;
FIG. 3 is a block diagram illustrating the structure of a transmission apparatus according to a third embodiment of the present invention;
FIG. 4 is a block diagram illustrating the structure of a transmission apparatus according to a fourth embodiment of the present invention;
FIG. 5 is a block diagram illustrating the structure of a transmission apparatus according to a fifth embodiment of the present invention;
FIG. 6 is a block diagram illustrating the structure of a transmission apparatus according to a sixth embodiment of the present invention;
FIG. 7 is a block diagram illustrating the structure of a transmission apparatus according to a seventh embodiment of the present invention;
FIG. 8 is a block diagram illustrating the structure of a transmission apparatus according to an eighth embodiment of the present invention;
FIG. 9 is a block diagram illustrating the structure of a transmission apparatus according to a ninth embodiment of the present invention;
FIG. 10 is a block diagram illustrating the structure of a transmission apparatus according to a tenth embodiment of the present invention;
FIG. 11 is a block diagram illustrating the structure of a transmission apparatus according to an eleventh embodiment of the present invention;
FIG. 12 is a block diagram illustrating the structure of a transmission apparatus according to a twelfth embodiment of the present invention;
FIG. 13 is a block diagram illustrating the structure of a transmission apparatus according to a thirteenth embodiment of the present invention;
FIG. 14 is a block diagram illustrating the structure of a transmission apparatus according to a fourteenth embodiment of the present invention;
FIG. 15 is a block diagram illustrating the structure of a transmission apparatus according to a fifteenth embodiment of the present invention;
FIG. 16 is a block diagram illustrating the structure of a transmission apparatus according to a sixteenth embodiment of the present invention;
FIG. 17 is a block diagram illustrating the structure of a transmission apparatus according to a seventeenth embodiment of the present invention;
FIG. 18 is a block diagram illustrating the structure of a transmission apparatus according to an eighteenth embodiment of the present invention;
FIG. 19 is a block diagram illustrating the structure of a transmission apparatus according to a nineteenth embodiment of the present invention;
FIG. 20 is a block diagram illustrating the structure of a transmission apparatus according to a twentieth embodiment of the present invention;
FIG. 21 is a block diagram illustrating the structure of a transmission apparatus according to a twenty-first embodiment of the present invention;
FIG. 22 is a block diagram illustrating the structure of a transmission apparatus according to a twenty-second embodiment of the present invention;
FIG. 23 is a block diagram illustrating the structure of a transmission apparatus according to a twenty-third embodiment of the present invention;
FIG. 24 is a block diagram illustrating the structure of a transmission apparatus according to a twenty-fourth embodiment of the present invention;
FIG. 25 is a block diagram illustrating the structure of a transmission apparatus according to a twenty-fifth embodiment of the present invention;
FIG. 26 is a block diagram illustrating the structure of a transmission apparatus according to a twenty-sixth embodiment of the present invention;
FIG. 27 is a block diagram illustrating the structure of a transmission apparatus according to a twenty-seventh embodiment of the present invention;
FIG. 28 is a block diagram illustrating the structure of a transmission apparatus according to a twenty-eighth embodiment of the present invention;
FIG. 29 is a block diagram illustrating the structure of a transmission apparatus according to a twenty-ninth embodiment of the present invention;
FIGS. 30A, 30B, 30C are schematic diagrams showing frequency allocation of a first DSL modulated signal, a second DSL modulated signal, and respective frequency-converted signals and illustrating cross-talk between both signals in the transmission apparatus according to the twenty-ninth embodiment of the present invention;
FIG. 31 is a schematic diagram illustrating the influence of non-linear distortion of a first FDM signal (or a second FDM signal) in a transmission apparatus according to a twenty-ninth embodiment of the present invention;
FIG. 32 is a block diagram illustrating the structure of a transmission apparatus according to a thirtieth embodiment of the present invention;
FIG. 33 is a block diagram illustrating the structure of a conventional transmission apparatus; and
FIG. 34 is a block diagram illustrating the structure of another conventional transmission apparatus.

### DESCRIPTION OF THE PREFERRED EMBODIMENTS

### (first embodiment)

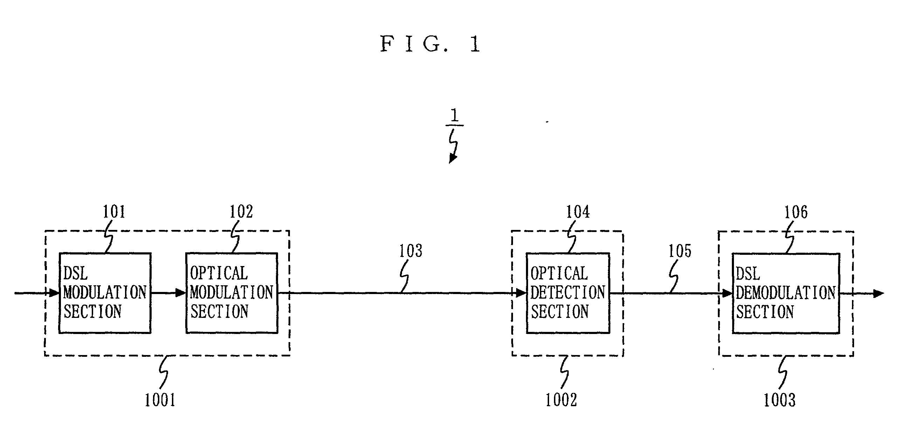

FIG. 1 is a block diagram illustrating the structure of a transmission apparatus according to a first embodiment of the present invention. As shown in FIG. 1, the transmission apparatus 1 according to the present embodiment comprises a DSL modulation section 101, an optical modulation section 102, an optical transmission section 103, an optical detection section 104, an electrical transmission section 105, and a DSL demodulation section 106. The DSL modulation section 101 and the optical modulation section 102 constitute an optical transmission installation 1001. The optical detection section 104 constitutes an optical terminal device 1002. The DSL demodulation section 106 constitutes a subscriber terminal 1003.

The transmission apparatus 1 shown in FIG. 1 operates in the following manner. The DSL modulation section 101 converts an inputted digital data signal into a DSL modulated signal of a predetermined format spanning the base band. The optical modulation section 102 converts the DSL modulated signal into an optical signal and sends it onto the optical transmission section 103. The optical detection section 104 reconverts the optical signal which has been transmitted over the optical transmission section 103 into the DSL modulated signal, which is an electrical signal, and sends the DSL modulated signal onto the electrical transmission section 105. The DSL demodulation section 106 reconverts the DSL modulated signal which has been transmitted over the electrical transmission section 105 into the original digital data signal.

The DSL modulated signal outputted from the DSL modulation section 101 may be a signal modulated by DMT(Discrete Multi Tone) modulation technique, a signal modulated by CAP (Carrierless Amplitude/Phase modulation) modulation technique, or a signal modulated by QAM (Quadrature Amplitude Modulation) modulation technique, or the like. The electrical transmission section 105 may be composed of a twisted-pair cable, a coaxial cable, or the like.

In accordance with the above-described transmission apparatus, a large part of the entire transmission path from the station equipment to the subscriber terminal is constructed of an optical fiber (which has a relatively low loss), whereas the end portion (i.e., from the optical terminal device to the subscriber terminal) of the entire transmission path-- that is, the wiring within the subscriber's residence-- is composed of electric wiring such as twisted-pair cables. The DSL modulation section is installed in the optical transmission installation (which in turn is installed in the station), as opposed to the optical terminal device. Moreover, it is a DSL modulated signal that is transmitted throughout the entire transmission path including the optical transmission section and the electrical transmission section. Based on this structure, the optical terminal device can be downsized and realized at low costs. As a result, both good installability and low cost of the peripheral equipment of the subscriber's residence can be attained, and a transmission apparatus which is low-cost and easy to handle can be provided.

### (second embodiment)

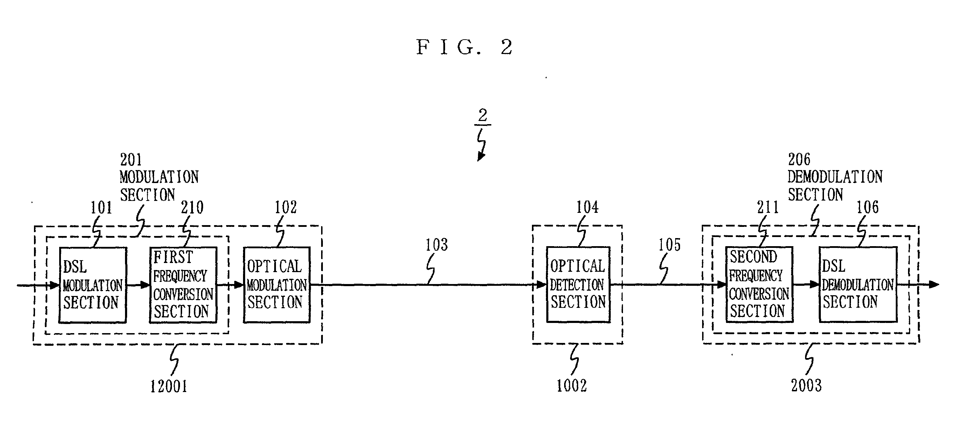

FIG. 2 is a block diagram illustrating the structure of a transmission apparatus according to a second embodiment of the present invention. As shown in FIG. 2, the transmission apparatus 2 according to the present embodiment comprises a modulation section 201, an optical modulation section 102, an optical transmission section 103, an optical detection section 104, an electrical transmission section 105, and a demodulation section 206. The modulation section 201 and the optical modulation section 102 constitute an optical transmission installation 12001. The optical detection section 104 constitutes an optical terminal device 1002. The demodulation section 206 constitutes a subscriber terminal 2003.

The modulation section 201 includes a DSL modulation section 101 and a first frequency conversion section 210. The demodulation section 206 includes a second frequency conversion section 211 and a DSL demodulation section 106. The present embodiment differs from the first embodiment in that the first frequency conversion section 210 and the second frequency conversion section 211 are further comprised. Therefore, any component elements which function in similar manners to their counterparts in the first embodiment are denoted by like numerals, with the descriptions thereof omitted. The differences over the first embodiment will mainly be described below.

In the modulation section 201, the DSL modulation section 101 first converts an inputted digital data signal into a DSL modulated signal. Next, the first frequency conversion section 210 converts the DSL modulated signal outputted from the DSL modulation section 101 into a frequency-converted signal which spans a predetermined first frequency band. The optical modulation section 102 converts this frequency-converted signal into an optical signal, and sends it onto the optical transmission section 103. The optical detection section 104 reconverts the optical signal which has been transmitted over the optical transmission section 103 into the frequency-converted signal, which is an electrical signal, and sends it onto the electrical transmission section 105. In the demodulation section 206, the second frequency conversion section 211 first subjects the frequency-converted signal which has been transmitted over the electrical transmission section 105 to frequency conversion to reproduce the original DSL modulated signal. The DSL demodulation section 106 reconverts the reproduced DSL modulated signal into the original digital data signal.

The embodiment illustrates an example where the second frequency conversion section 211 performs a frequency conversion back to the same frequency band as the frequency band spanned by the DSL modulated signal outputted from the DSL modulation section 101 in order to reproduce the original DSL modulated signal. Alternatively, the frequency conversion may realize a frequency band which is different from the frequency band spanned by the DSL modulated signal outputted from the DSL modulation section 101 so that a DSL modulated signal spanning a different frequency band is reproduced.

Thus, the above-described transmission apparatus converts a digital data signal into a DSL modulated signal, which is then subjected to frequency conversion and optically transmitted. Thus, there is provided a transmission apparatus which can realize optical transmission using a selected frequency band based on a simple construction.

### (third embodiment)

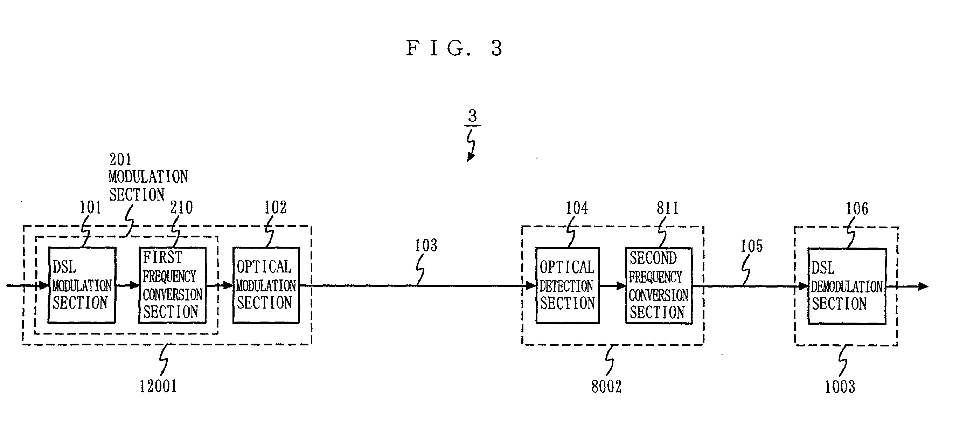

FIG. 3 is a block diagram illustrating the structure of a transmission apparatus according to the third embodiment of the present invention. As shown in FIG. 3, the transmission apparatus 3 according to the present embodiment comprises a modulation section 201, an optical modulation section 102, an optical transmission section 103, an optical detection section 104, a second frequency conversion section 811, an electrical transmission section 105, and a DSL demodulation section 106. The modulation section 201 and the optical modulation section 102 constitute an optical transmission installation 12001. The optical detection section 104 and the second frequency conversion section 811 constitute an optical terminal device 8002. The DSL demodulation section 106 constitutes a subscriber terminal 1003. The present embodiment differs from the second embodiment with respect to the position at which the second frequency conversion section 811 (corresponding to the second frequency conversion section 211 in FIG. 2) is inserted and the connection thereof. Therefore, any component elements which function in similar manners to their counterparts in the second embodiment are denoted by like numerals, with the descriptions thereof omitted. The differences over the second embodiment will mainly be described below.

The optical transmission installation 12001 converts an inputted digital data signal into a frequency-converted signal spanning a predetermined first frequency band, and further converts it to an optical signal, which is sent onto the optical transmission section 103. The optical detection section 104 reconverts the optical signal which has been transmitted over the optical transmission section 103 into the frequency-converted signal, which is an electrical signal. The second frequency conversion section 811 subjects the frequency-converted signal outputted from the optical detection section 104 to frequency conversion to reproduce the original DSL modulated signal, which is sent onto the electrical transmission section 105. The DSL demodulation section 106 reconverts the DSL modulated signal which has been transmitted over the electrical transmission section 105 into the original digital data signal.

As in the second embodiment, the present embodiment may be modified so that the second frequency conversion section 811 performs a frequency conversion to realize a frequency band which is different from the frequency band spanned by the DSL modulated signal outputted from the DSL modulation section 101 so that a DSL modulated signal spanning a different frequency band is reproduced.

Thus, the above-described transmission apparatus converts a digital data signal into a DSL modulated signal, which is then subjected to frequency conversion and optically transmitted. Thus, there is provided a transmission apparatus which can realize optical transmission using a selected frequency band based on a simple construction.

### (fourth embodiment)

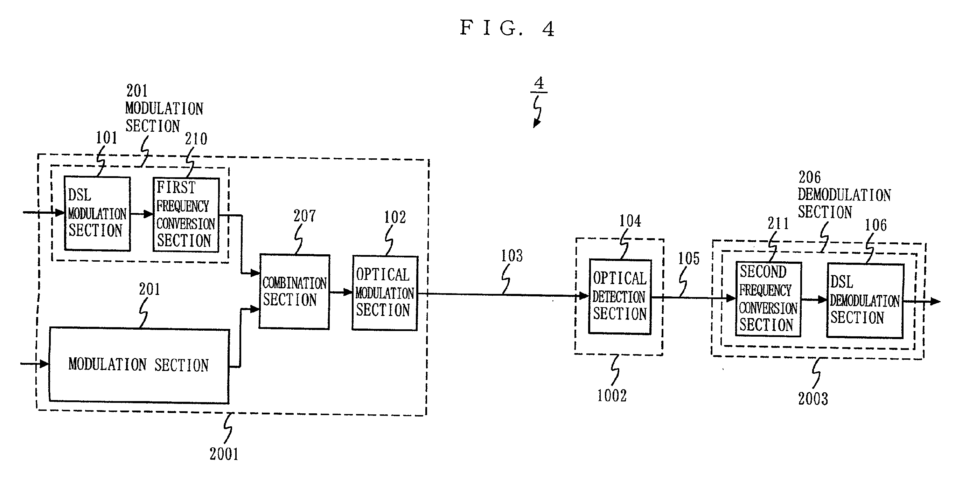

FIG. 4 is a block diagram illustrating the structure of a transmission apparatus according to the fourth embodiment of the present invention. As shown in FIG. 4, the transmission apparatus 4 according to the present embodiment comprises two modulation sections 201, a combination section 207, an optical modulation section 102, an optical transmission section 103, an optical detection section 104, an electrical transmission section 105, and a demodulation section 206. The two modulation sections 201, the combination section 207, and the optical modulation section 102 constitute an optical transmission installation 2001. The optical detection section 104 constitutes an optical terminal device 1002. The demodulation section 206 constitutes a subscriber terminal 2003.

The present embodiment differs from the second embodiment in that a plurality (e.g., two) of modulation sections 201 and the combination section 207 are further comprised, and that the second frequency conversion section 211 has the function of selecting signals. Therefore, any component elements which function in similar manners to their counterparts in the second embodiment are denoted by like numerals, with the descriptions thereof omitted. The differences over the second embodiment will mainly be described below.

The modulation sections 201 are provided respectively corresponding to a plurality of digital data signals inputted to the optical transmission installation 2001 (two such signals are illustrated in FIG. 4). The DSL modulation sections 101 in the modulation sections 201 first convert respective digital data signals into respective DSL modulated signals. Next, the respective first frequency conversion sections 210 convert the DSL modulated signals outputted from the respective DSL modulation sections 101 into first and second frequency-converted signals, which span respectively different predetermined frequency bands.

The combination section 207 combines the first and second frequency-converted signals outputted from the two modulation sections 201 through frequency-division-multiplex (FDM: Frequency Division Multiplex), and outputs the resultant signal to the optical modulation section 102. Hereinafter, such a signal, obtained by subjecting a plurality of signals to frequency division multiplex, will be referred to as an "FDM signal". The optical modulation section 102 converts the FDM signal into an optical signal, and sends it onto the optical transmission section 103. The optical detection section 104 reconverts the optical signal which has been transmitted over the optical transmission section 103 into the FDM signal, which is an electrical signal, and sends it onto the electrical transmission section 105.

In the demodulation section 206, the second frequency conversion section 211 first selectively extracts either a first or second frequency-converted signal from the FDM signal which has been transmitted over the electrical transmission section 105, and subjects the selected signal to frequency conversion. As a result, either one of the DSL modulated signals outputted from the two DSL modulation sections 101 is reproduced. Next, the DSL demodulation section 106 reconverts the reproduced DSL modulated signal into the original digital data signal.

Although the transmission apparatus 4 shown in FIG. 4 is illustrated to include two modulation sections 201, any number of modulation sections 201 --equal to or greater than two-- may be provided in the transmission apparatus 4.

In accordance with the above-described transmission apparatus, digital data signals on a plurality of channels are converted into DSL modulated signals, subjected to frequency conversion and multiplex, and then optically transmitted. As a result, a multi-channel transmission apparatus can be provided based on a simple construction.

### (fifth embodiment)

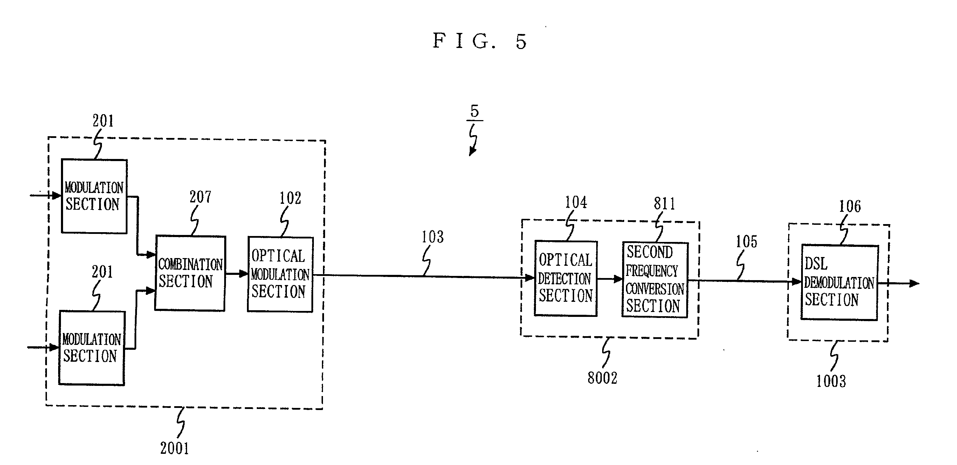

FIG. 5 is a block diagram illustrating the structure of a transmission apparatus according to the fifth embodiment of the present invention. As shown in FIG. 5, the transmission apparatus 5 according to the present embodiment comprises two modulation sections 201, a combination section 207, an optical modulation section 102, an optical transmission section 103, an optical detection section 104, a second frequency conversion section 811, an electrical transmission section 105, and a DSL demodulation section 106. The two modulation sections 201, the combination section 207, and the optical modulation section 102 constitute an optical transmission installation 2001. The optical detection section 104 and the second frequency conversion section 811 constitute an optical terminal device 8002. The DSL demodulation section 106 constitutes a subscriber terminal 1003.

The present embodiment differs from the fourth embodiment with respect to the position at which the second frequency conversion section 811 (corresponding to the second frequency conversion section 211 in FIG. 4) is inserted and the connection thereof. Therefore, any component elements which function in similar manners to their counterparts in the fourth embodiment are denoted by like numerals, with the descriptions thereof omitted. The differences over the fourth embodiment will mainly be described below. Although not shown in detail in FIG. 5 for conciseness, each modulation section 201 includes a DSL modulation section 101 and a first frequency conversion section 210, as in the fourth embodiment. Similarly, in all of the following embodiments, it shall be understood that the modulation section 201 includes a DSL modulation section 101 and a first frequency conversion section 210.

The optical transmission installation 2001 converts a plurality of inputted digital data signals (two such signals are illustrated in FIG. 5) into DSL modulated signals spanning respectively different frequency bands, multiplex these signals to generate an FDM signal, converts the FDM signal into an optical signal, which is sent onto the optical transmission section 103. The optical detection section 104 reconverts the optical signal which has been transmitted over the optical transmission section 103 into the FDM signal, which is an electrical signal. The second frequency conversion section 811 selectively extracts either a first or second frequency-converted signal from the FDM signal outputted from the optical detection section 104, and subjects the selected signal to frequency conversion. As a result, either one of the DSL modulated signals from the two DSL modulation sections 101 is reproduced, and the reproduced DSL signal is transmitted over the electrical transmission section 105. The DSL demodulation section 106 reconverts the DSL modulated signal which has been transmitted over the electrical transmission section 105 into the original digital data signal.

As in the fourth embodiment, any number of modulation sections 201 --equal to or greater than two-- may be provided in the transmission apparatus 5.

Thus, the above-described transmission apparatus converts digital data signals on a plurality of channels into DSL modulated signals, which are subjected to frequency conversion and multiplexed. The resultant signal is optically transmitted, again subjected to frequency conversion, and then electrically transmitted. Thus, since equipment and circuitry similar to those used in conventional systems can be utilized for the demodulation section, a multi-channel transmission apparatus can be provided based on a more economical construction.

### (sixth embodiment)

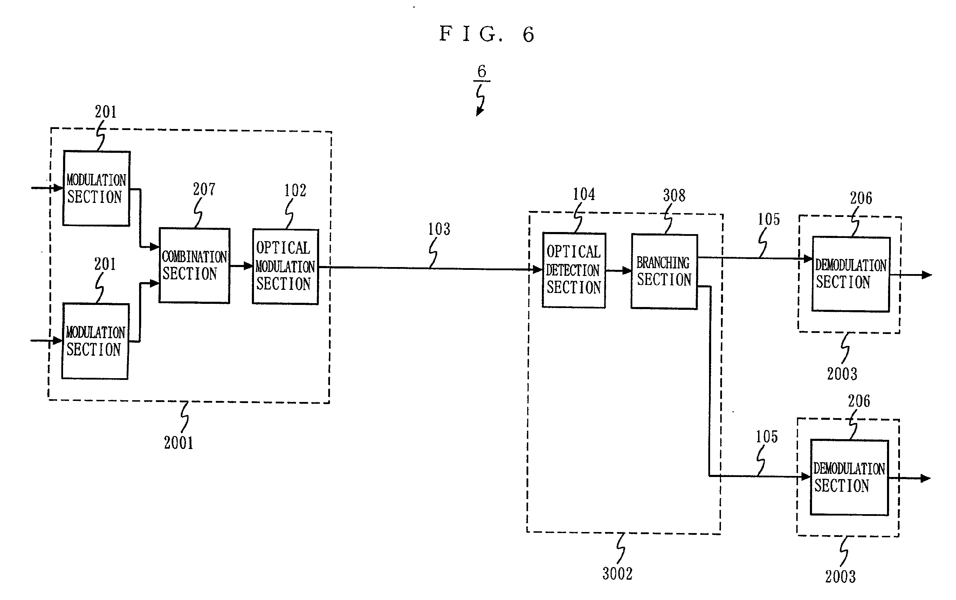

FIG. 6 is a block diagram illustrating the structure of a transmission apparatus according to the sixth embodiment of the present invention. As shown in FIG. 6, the transmission apparatus 6 according to the present embodiment comprises two modulation sections 201, a combination section 207, an optical modulation section 102, an optical transmission section 103, an optical detection section 104, a branching section 308, two electrical transmission sections 105, and two demodulation sections 206. The two modulation sections 201, the combination section 207, and the optical modulation section 102 constitute an optical transmission installation 2001. The optical detection section 104 and the branching section 308 constitute an optical terminal device 3002. Each demodulation section 206 constitutes a subscriber terminal 2003. The present embodiment differs from the fourth embodiment in that the branching section 308 is further comprised, and a plurality (e.g., two in FIG. 6) of electrical transmission sections 105 and demodulation sections 206 are comprised accordingly. Therefore, any component elements which function in similar manners to their counterparts in the fourth embodiment are denoted by like numerals, with the descriptions thereof omitted. The differences over the fourth embodiment will mainly be described below.

The optical transmission installation 2001 converts a plurality of inputted digital data signals (two such signals are illustrated in FIG. 6) into DSL modulated signals spanning respectively different frequency bands, multiplex these signals to generate an FDM signal, converts the FDM signal into an optical signal, which is sent onto the optical transmission section 103. The optical detection section 104 reconverts the optical signal which has been transmitted over the optical transmission section 103 into the FDM signal, which is an electrical signal. The branching section 308 branches the FDM signal which has been reconverted by the optical detection section 104 into two signals. The electrical transmission sections 105 are provided corresponding to the respective branched-out signals obtained from the branching section 308. The branching section 308 sends the respective branched-out FDM signals onto the corresponding electrical transmission sections 105. The demodulation sections 206 are provided respectively corresponding to the electrical transmission sections 105. Each demodulation section 206 selectively demodulates either the first or second frequency-converted signal from the FDM signal which has been transmitted over the electrical transmission section 105, and reconverts it into the original digital data signal.

In the transmission apparatus 6 shown in FIG. 6, the number of digital data signals multiplexed in the optical transmission installation 2001 and the number of branched-out FDM signals in the optical terminal device 3002 are both two. However, the number of multiplexed signals and the number of branched-out signals do not need to be equal; each of these numbers may be any number other than two.

Thus, the above-described transmission apparatus converts digital data signals on a plurality of channels into DSL modulated signals, which are subjected to frequency conversion and multiplexed. The resultant signal is optically transmitted, and the received signal is branched out and distributed to a plurality of subscriber terminals. Thus, there is provided a large-capacity transmission apparatus which is capable of accommodating a large number of subscribers based on an economical construction.

### (seventh embodiment)

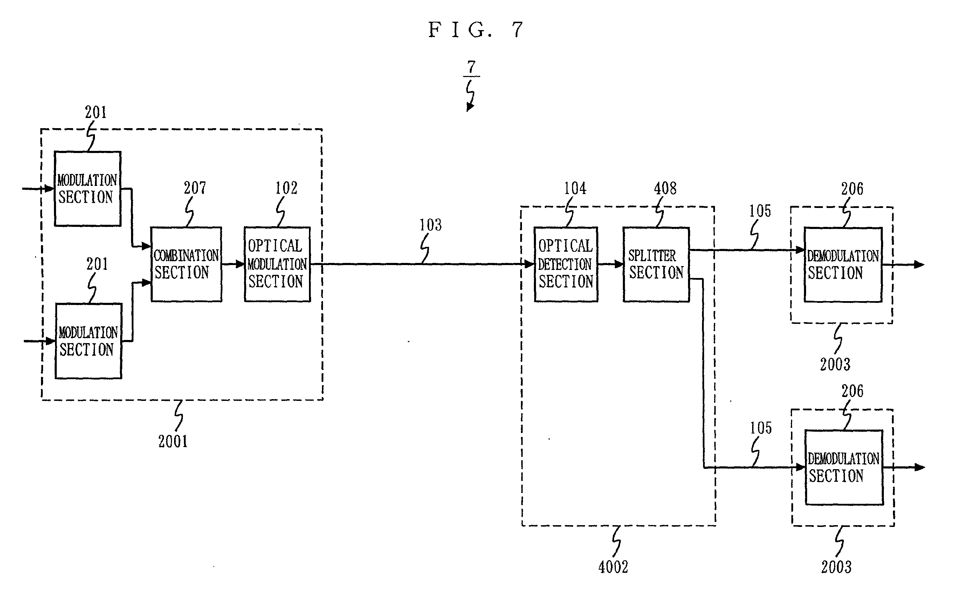

FIG. 7 is a block diagram illustrating the structure of a transmission apparatus according to the seventh embodiment of the present invention. As shown in FIG. 7, the transmission apparatus 7 according to the present embodiment comprises two modulation sections 201, a combination section 207, an optical modulation section 102, an optical transmission section 103, an optical detection section 104, a splitter section 408, two electrical transmission sections 105, and two demodulation sections 206. The two modulation sections 201, the combination section 207, and the optical modulation section 102 constitute an optical transmission installation 2001. The optical detection section 104 and the splitter section 408 constitute an optical terminal device 4002. The demodulation section 206 constitutes a subscriber terminal 2003. The present embodiment differs from the sixth embodiment in that the splitter section 408 is comprised instead of a branching section 308. Therefore, any component elements which function in similar manners to their counterparts in the sixth embodiment are denoted by like numerals, with the descriptions thereof omitted. The differences over the sixth embodiment will mainly be described below.

The optical transmission installation 2001 converts a plurality of inputted digital data signals (two such signals are illustrated in FIG. 7) into DSL modulated signals spanning respectively different frequency bands, multiplex these signals to generate an FDM signal, converts the FDM signal into an optical signal, which is sent onto the optical transmission section 103. The optical detection section 104 reconverts the optical signal which has been transmitted over the optical transmission section 103 in the FDM signal, which is an electrical signal. The splitter section 408 separately output first and second frequency-converted signals. The electrical transmission sections 105 are provided respectively corresponding to the first and second frequency-converted signals. The splitter section 408 sends the first and second frequency-converted signals onto the respective electrical transmission sections 105. The demodulation sections 206 are provided corresponding to the respective electrical transmission sections 105. Each demodulation section 206 demodulates the first or second frequency-converted signal which has been transmitted over the electrical transmission section 105 and reconverts it into the original digital data signal.

The transmission apparatus 7 according to the present embodiment, in which first and second frequency-converted signals are separately outputted from the splitter section 408, differs from the transmission apparatus 6 according to the sixth embodiment, in which the first and second frequency-converted signals are outputted from the branching section 308 in a multiplexed state.

In accordance with the transmission apparatus 7 shown in FIG. 7, the number of digital data signals multiplexed in the optical transmission installation 2001 and the number of split FDM signals in the optical terminal device 4002 are both two. However, the number of multiplexed signals and the number of split signals do not need to be equal, each of these numbers may be any number other than two.

Thus, the above-described transmission apparatus converts digital data signals which are to be transmitted to a plurality of subscribers into DSL modulated signals, which are subjected to frequency conversion and multiplexed. The resultant signal is optically transmitted and then demultiplexed, so as to be transmitted to the respective subscriber terminals. Thus, there is provided a transmission apparatus which is capable of accommodating a large number of subscribers based on an economical construction.

### (eighth embodiment)

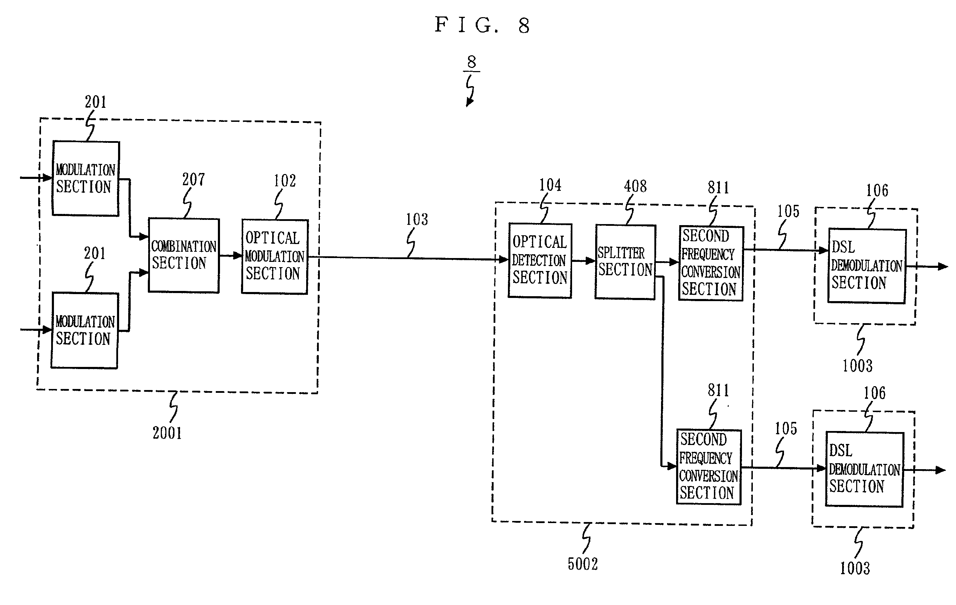

FIG. 8 is a block diagram illustrating the structure of a transmission apparatus according to the eighth embodiment of the present invention. As shown in FIG. 8, the transmission apparatus 8 according to the present embodiment comprises two modulation sections 201, a combination section 207, an optical modulation section 102, an optical transmission section 103, an optical detection section 104, a splitter section 408, two second frequency conversion sections 811, two electrical transmission sections 105, and two DSL demodulation sections 106. The two modulation sections 201, the combination section 207, and the optical modulation section 102 constitute an optical transmission installation 2001. The optical detection section 104, the splitter section 408, and the two second frequency conversion sections 811 constitute an optical terminal device 5002. The DSL demodulation section 106 constitutes a subscriber terminal 1003. The present embodiment differs from the seventh embodiment with respect to the position at which the second frequency conversion section 811 (which is internalized in the demodulation section 206 in FIG. 7) is inserted and the connection thereof. Therefore, any component elements which function in similar manners to their counterparts in the seventh embodiment are denoted by like numerals, with the descriptions thereof omitted. The differences over the seventh embodiment will mainly be described below.

The optical transmission installation 2001 converts a plurality of inputted digital data signals (two such signals are illustrated in FIG. 8) into DSL modulated signals spanning respectively different frequency bands, multiplex these signals to generate an FDM signal, converts the FDM signal into an optical signal, which is sent onto the optical transmission section 103. The optical detection section 104 reconverts the optical signal which has been transmitted over the optical transmission section 103 into the FDM signal, which is an electrical signal. The splitter section 408 separately outputs first and second frequency-converted signals. The second frequency conversion sections 811 are provided respectively corresponding to the first and second frequency-converted signals. Each second frequency conversion section 811 subjects the first or second frequency-converted signal to frequency conversion to reproduce the DSL modulated signal, which is sent onto the respective electrical transmission section 105. Each DSL demodulation section 106 reconverts the reproduced DSL modulated signal which has been transmitted over the electrical transmission section 105 into the original digital data signal.

In accordance with the transmission apparatus 8 shown in FIG. 8, the number of digital data signals multiplexed in the optical transmission installation 2001 and the number of split FDM signals in the optical terminal device 5002 are both two. However, the number of multiplexed signals and the number of split signals do not need to be equal; each of these numbers may be any number other than two.

Thus, the above-described transmission apparatus converts digital data signals which are to be transmitted to a plurality of subscribers into DSL modulated signals, which are subjected to frequency conversion and multiplexed. The resultant signal is optically transmitted and then demultiplexed, and again subjected to frequency conversion to give DSL modulated signals, which are electrically transmitted to the respective subscriber terminals. Thus, equipment and circuitry similar to those used in conventional systems can be utilized for the plurality of demodulation sections. Therefore, there is provided a transmission apparatus which is capable of accommodating a large number of subscribers based on a more economical construction.

### (ninth embodiment)

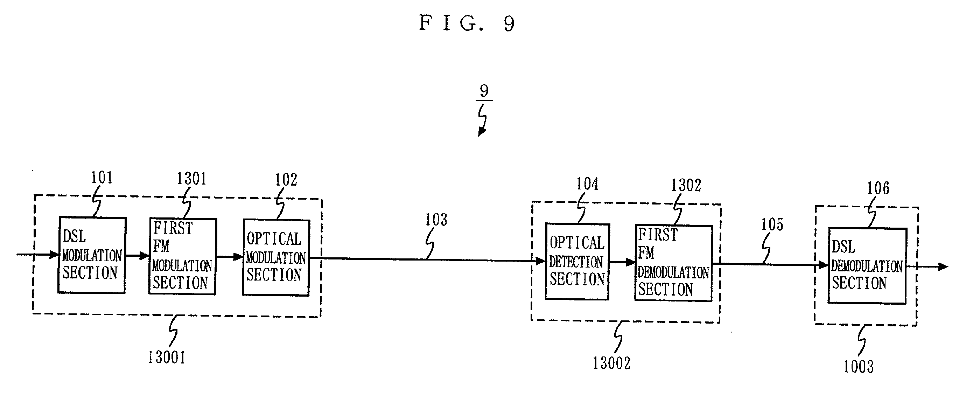

FIG. 9 is a block diagram illustrating the structure of a transmission apparatus according to the ninth embodiment of the present invention. As shown in FIG. 9, the transmission apparatus 9 according to the present embodiment comprises a DSL modulation section 101, a first FM modulation section 1301, an optical modulation section 102, an optical transmission section 103, an optical detection section 104, a first FM demodulation section 1302, an electrical transmission section 105, and a DSL demodulation section 106. The DSL modulation section 101, the first FM modulation section 1301, and the optical modulation section 102 constitute an optical transmission installation 13001. The optical detection section 104 and the first FM demodulation section 1302 constitute an optical terminal device 13002. The DSL demodulation section 106 constitutes a subscriber terminal 1003. The present embodiment differs from the first embodiment in that the first FM modulation section 1301 and the first FM demodulation section 1302 are further comprised. Therefore, any component elements which function in similar manners to their counterparts in the first embodiment are denoted by like numerals, with the descriptions thereof omitted. The differences over the first embodiment will mainly be described below.

The first FM modulation section 1301 generates a frequency-modulated signal based on a DSL modulated signal outputted from the DSL modulation section 101. The optical modulation section 102 converts this frequency-modulated signal into an optical signal, and sends it onto the optical transmission section 103. The first FM demodulation section 1302 demodulates the frequency-modulated signal (which is an electrical signal) outputted from the optical detection section 104 to reproduce the DSL modulated signal, and sends the reproduced DSL modulated signal onto the electrical transmission section 105.

In accordance with the above-described transmission apparatus, in which a DSL modulated signal is subjected to frequency modulation and optically transmitted, and thereafter demodulated to reproduce the DSL modulated signal, the noise characteristics and multiple reflection resistance during optical transmission can be improved by utilizing the advantages of FM transmission technique. Thus, there is provided a high-quality and economical transmission apparatus which has improved transmission characteristics, and in which a good transmission quality can be secured even in the case where a low-quality optical transmission path is used.

### (tenth embodiment)

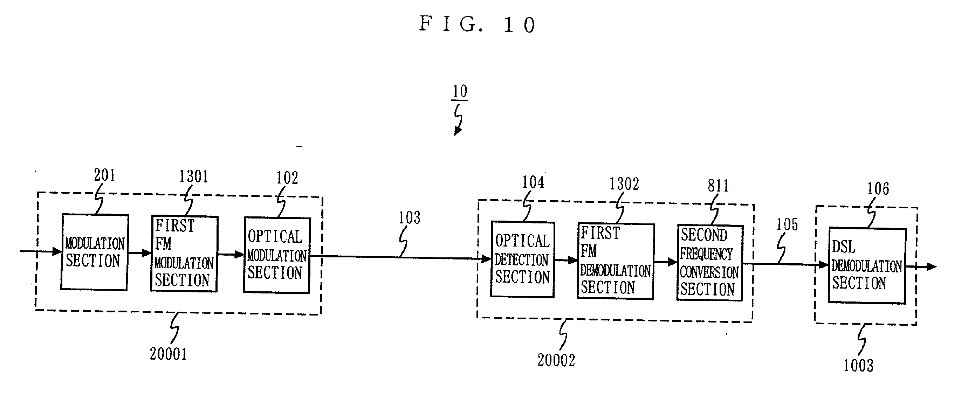

FIG. 10 is a block diagram illustrating the structure of a transmission apparatus according to the tenth embodiment of the present invention. As shown in FIG. 10, the transmission apparatus 10 according to the present embodiment comprises a modulation section 201, a first FM modulation section 1301, an optical modulation section 102, an optical transmission section 103, an optical detection section 104, a first FM demodulation section 1302, a second frequency conversion section 811, an electrical transmission section 105, and a DSL demodulation section 106. The modulation section 201, the first FM modulation section 1301, and the optical modulation section 102 constitute an optical transmission installation 20001. The optical detection section 104, the first FM demodulation section 1302, and the second frequency conversion section 811 constitute an optical terminal device 20002. The DSL demodulation section 106 constitutes a subscriber terminal 1003. The present embodiment differs from the third embodiment in that the first FM modulation section 1301 and the first FM demodulation section 1302 are further comprised. Therefore, any component elements which function in similar manners to their counterparts in the third embodiment are denoted by like numerals, with the descriptions thereof omitted. The differences over the third embodiment will mainly be described below.

The first FM modulation section 1301 generates a frequency-modulated signal based on a signal outputted from the modulation section 201. The optical modulation section 102 converts this frequency-modulated signal into an optical signal, and sends it onto the optical transmission section 103. The first FM demodulation section 1302 demodulates the frequency-modulated signal (which is an electrical signal) outputted from the optical detection section 104 to reproduce a signal corresponding to the signal outputted from the modulation section 201, and outputs the reproduced signal to the second frequency conversion section 811.

In accordance with the above-described transmission apparatus, in which a DSL modulated signal is subjected to frequency conversion, and further subjected to frequency modulation and optically transmitted, and thereafter demodulated and subjected to frequency conversion to reproduce the DSL modulated signal, the noise characteristics and multiple reflection resistance during optical transmission can be improved by utilizing the advantages of FM transmission technique. Thus, there is provided a high-quality and economical transmission apparatus which has improved transmission characteristics, and in which a good transmission quality can be secured even in the case where a low-quality optical transmission path is used.

### (eleventh embodiment)

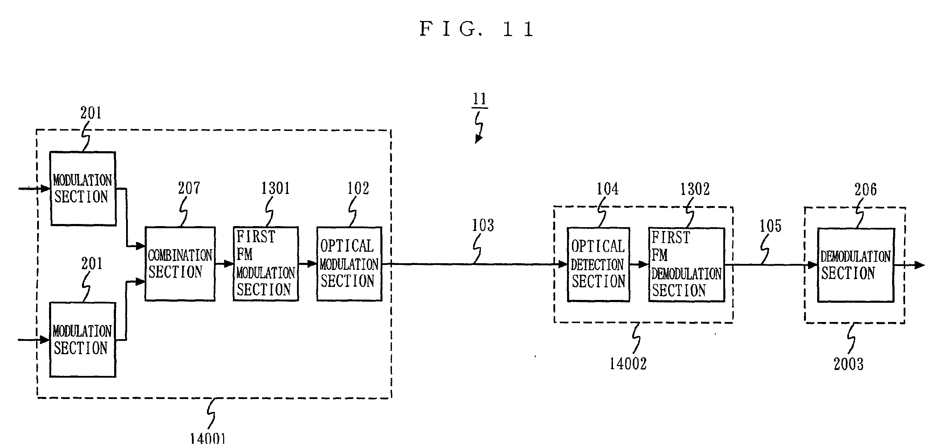

FIG. 11 is a block diagram illustrating the structure of a transmission apparatus according to the eleventh embodiment of the present invention. As shown in FIG. 11, the transmission apparatus 11 according to the present embodiment comprises two modulation sections 201, a combination section 207, a first FM modulation section 1301, an optical modulation section 102, an optical transmission section 103, an optical detection section 104, a first FM demodulation section 1302, an electrical transmission section 105, and a demodulation section 206. The two modulation sections 201, the combination section 207, the first FM modulation section 1301, and the optical modulation section 102 constitute an optical transmission installation 14001. The optical detection section 104 and the first FM demodulation section 1302 constitute an optical terminal device 14002. The demodulation section 206 constitutes a subscriber terminal 2003. The present embodiment differs from the fourth embodiment in that the first FM modulation section 1301 and the first FM demodulation section 1302 are further comprised. Therefore, any component elements which function in similar manners to their counterparts in the fourth embodiment are denoted by like numerals, with the descriptions thereof omitted. The differences over the fourth embodiment will mainly be described below.

The first FM modulation section 1301 generates a frequency-modulated signal based on an FDM signal outputted from the combination section 207. The optical modulation section 102 converts this frequency-modulated signal into an optical signal, and sends it onto the optical transmission section 103. The first FM demodulation section 1302 demodulates the frequency-modulated signal (which is an electrical signal) outputted from the optical detection section 104 to reproduce the FDM signal, and sends the reproduced FDM signal onto the electrical transmission section 105.

In accordance with the above-described transmission apparatus, in which an FDM signal based on multi-channel DSL modulated signals is subjected to frequency modulation and optically transmitted, and thereafter demodulated to reproduce the FDM signal, the noise characteristics and multiple reflection resistance during optical transmission can be improved by utilizing the advantages of FM transmission technique. Thus, there is provided a high-quality and economical multi-channel transmission apparatus which has improved transmission characteristics, and in which a good transmission quality can be secured even in the case where a low-quality optical transmission path is used.

### (twelfth embodiment)

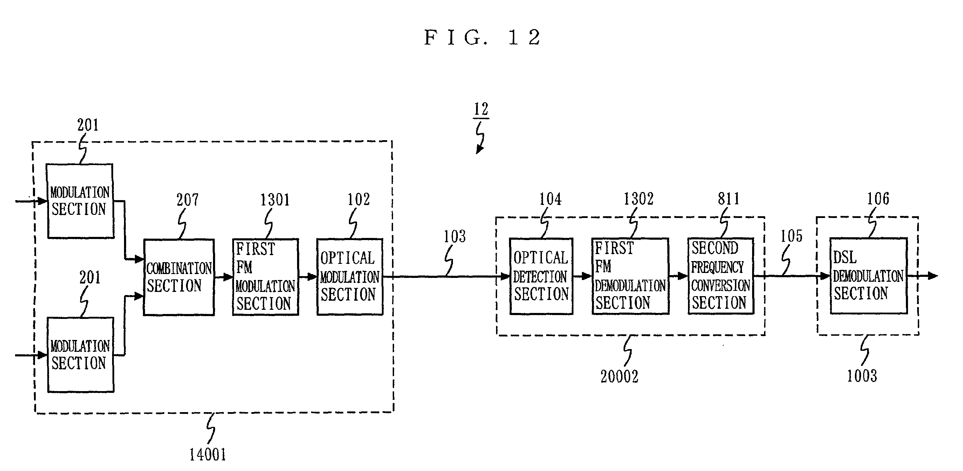

FIG. 12 is a block diagram illustrating the structure of a transmission apparatus according to the twelfth embodiment of the present invention. As shown in FIG. 12, the transmission apparatus 12 according to the present embodiment comprises two modulation sections 201, a combination section 207, a first FM modulation section 1301, an optical modulation section 102, an optical transmission section 103, an optical detection section 104, a first FM demodulation section 1302, a second frequency conversion section 811, an electrical transmission section 105, and a DSL demodulation section 106. The two modulation sections 201, the combination section 207, the first FM modulation section 1301, and the optical modulation section 102 constitute an optical transmission installation 14001. The optical detection section 104, the first FM demodulation section 1302, and the second frequency conversion section 811 constitute an optical terminal device 20002. The DSL demodulation section 106 constitutes a subscriber terminal 1003. The present embodiment differs from the fifth embodiment in that the first FM modulation section 1301 and the first FM demodulation section 1302 are further comprised. Therefore, any component elements which function in similar manners to their counterparts in the fifth embodiment are denoted by like numerals, with the descriptions thereof omitted. The differences over the fifth embodiment will mainly be described below.

The first FM modulation section 1301 generates a frequency-modulated signal based on an FDM signal outputted from the combination section 207. The optical modulation section 102 converts this frequency-modulated signal into an optical signal, and sends it onto the optical transmission section 103. The first FM demodulation section 1302 demodulates the frequency-modulated signal (which is an electrical signal) outputted from the optical detection section 104 to reproduce the FDM signal, which is outputted to the second frequency conversion section 811.

In accordance with the above-described transmission apparatus, in which an FDM signal based on multi-channel DSL modulated signals is subjected to frequency modulation and optically transmitted, and thereafter demodulated to reproduce the FDM signal, the noise characteristics and multiple reflection resistance during optical transmission can be improved by utilizing the advantages of FM transmission technique. Thus, there is provided a high-quality and economical multi-channel transmission apparatus which has improved transmission characteristics, and in which a good transmission quality can be secured even in the case where a low-quality optical transmission path is used.

### (thirteenth embodiment)

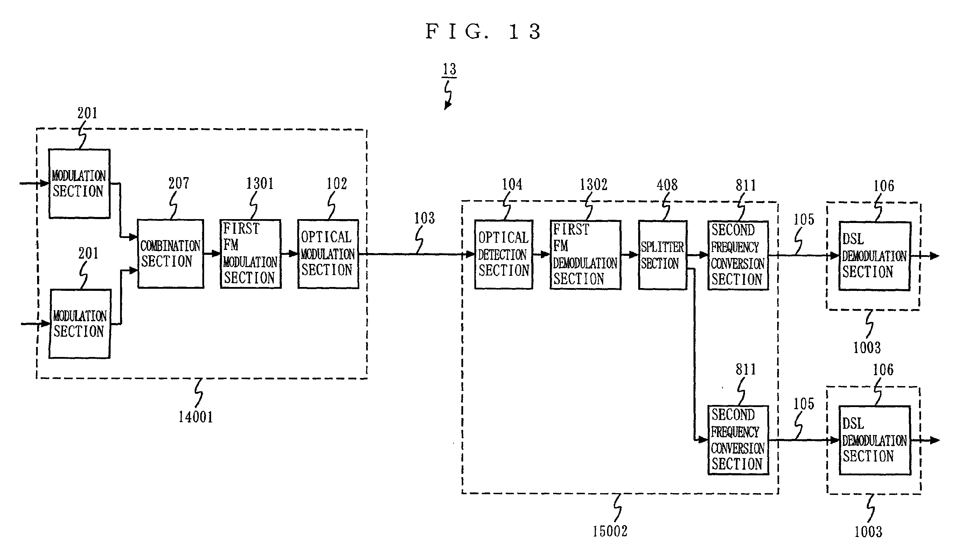

FIG. 13 is a block diagram illustrating the structure of a transmission apparatus according to the thirteenth embodiment of the present invention. As shown in FIG. 13, the transmission apparatus 13 according to the present embodiment comprises two modulation sections 201, a combination section 207, a first FM modulation section 1301, an optical modulation section 102, an optical transmission section 103, an optical detection section 104, a first FM demodulation section 1302, a splitter section 408, two second frequency conversion sections 811, two electrical transmission sections 105, and two DSL demodulation sections 106. The two modulation sections 201, the combination section 207, the first FM modulation section 1301, and the optical modulation section 102 constitute an optical transmission installation 14001. The optical detection section 104, the first FM demodulation section 1302, the splitter section 408, and the two second frequency conversion sections 811 constitute an optical terminal device 15002. The DSL demodulation section 106 constitutes a subscriber terminal 1003. The present embodiment differs from the eighth embodiment in that the first FM modulation section 1301 and the first FM demodulation section 1302 are further comprised. Therefore, any component elements which function in similar manners to their counterparts in the eighth embodiment are denoted by like numerals, with the descriptions thereof omitted. The differences over the eighth embodiment will mainly be described below.

The first FM modulation section 1301 generates a frequency-modulated signal based on an FDM signal outputted from the combination section 207. The optical modulation section 102 converts this frequency-modulated signal into an optical signal, and sends it onto the optical transmission section 103. The first FM demodulation section 1302 demodulates the frequency-modulated signal (which is an electrical signal) outputted from the optical detection section 104 to reproduce the FDM signal, which is outputted to the splitter section 408.

In accordance with the above-described transmission apparatus, in which an FDM signal based on multi-channel DSL modulated signals is subjected to frequency modulation and optically transmitted, and thereafter demodulated to reproduce the FDM signal, the noise characteristics and multiple reflection resistance during optical transmission can be improved by utilizing the advantages of FM transmission technique. Thus, there is provided a high-quality and economical multi-channel transmission apparatus which has improved transmission characteristics, and in which a good transmission quality can be secured even in the case where a low-quality optical transmission path is used.

As described above, the transmission apparatuses according to the ninth to thirteenth embodiments additionally incorporate the first FM modulation section 1301 and the first FM demodulation section 1302 in the structure of transmission apparatuses according to the first, third to fifth, and eighth embodiments, respectively. Also in the transmission apparatuses according to the second, sixth, and the seventh embodiments, similar effects can be obtained by coupling a first FM modulation section before the optical modulation section 102 and a first FM demodulation section after the optical detection section 104.

### (fourteenth embodiment)

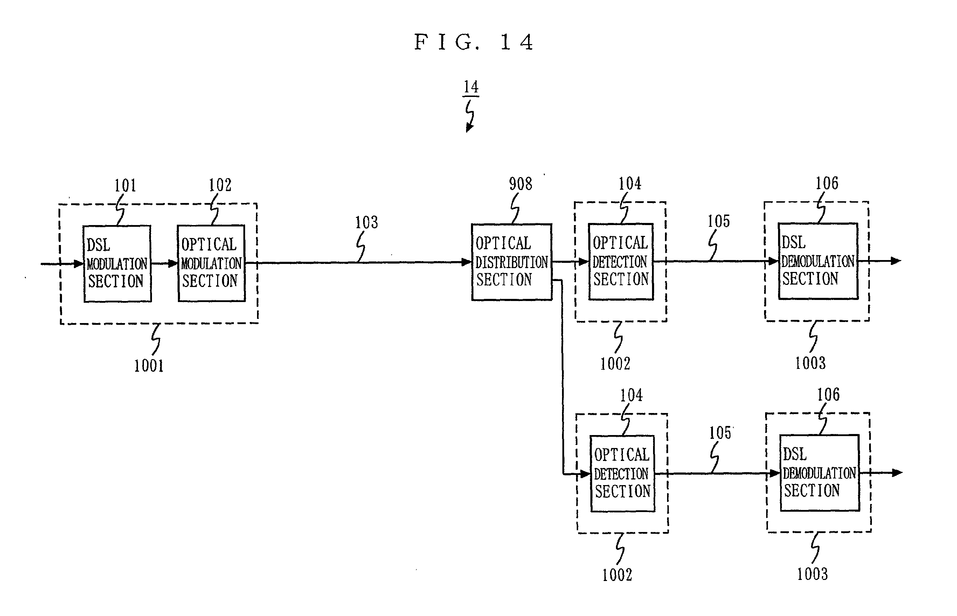

FIG. 14 is a block diagram illustrating the structure of a transmission apparatus according to the fourteenth embodiment of the present invention. As shown in FIG. 14, the transmission apparatus 14 according to the present embodiment comprises a DSL modulation section 101, an optical modulation section 102, an optical transmission section 103, an optical distribution section 908, two optical detection sections 104, two electrical transmission sections 105, and two DSL demodulation sections 106. The DSL modulation section 101 and the optical modulation section 102 constitute an optical transmission installation 1001. The respective optical detection sections 104 constitute two optical terminal devices 1002. The respective DSL demodulation sections 106 constitute two subscriber terminals 1003. The present embodiment differs from the first embodiment in that the optical distribution section 908 is further comprised, and that as many (i.e., two in FIG. 14) optical detection sections 104, electrical transmission sections 105, and DSL demodulation sections 106 are provided as the number of signals distributed by the optical distribution section 908. Therefore, any component elements which function in similar manners to their counterparts in the first embodiment are denoted by like numerals, with the descriptions thereof omitted. The differences over the first embodiment will mainly be described below.

The optical transmission installation 1001 converts an inputted digital data signal into a DSL modulated signal, and further into an optical signal, and sends it onto the optical transmission section 103. The optical distribution section 908 branches the optical signal which has been transmitted over the optical transmission section 103 into two signals. The optical detection sections 104, the electrical transmission sections 105, and the DSL demodulation sections 106 are provided respectively corresponding to the two optical signals branched-out by the optical distribution section 908. Each optical detection section 104 reconverts one of the two optical signals branched-out by the optical distribution section 908 into the DSL modulated signal (which is an electrical signal), and sends it onto the associated electrical transmission section 105. Each DSL demodulation section 106 reconverts the DSL modulated signal which has been transmitted over the electrical transmission section 105 into the original digital data signal.

The transmission apparatus 14 according to the present embodiment, in which the optical signal is branched into two signals by the optical distribution section 908 before being inputted to the optical detection sections 104, differs from any of the above-described transmission apparatuses (for example, the transmission apparatus 7 according to the seventh embodiment) in which the electrical signal which has been outputted from the optical detection section 104 is branched into two signals by the splitter section 408.

Thus, the above-described transmission apparatus converts a digital data signal into a DSL modulated signal and optically transmits it. Thereafter, the optical signal is branched out so as to be distributed to a plurality of subscriber terminals. Thus, there is provided a large-capacity transmission apparatus which is capable of accommodating a larger number of subscribers based on an economical construction.

### (fifteenth embodiment)

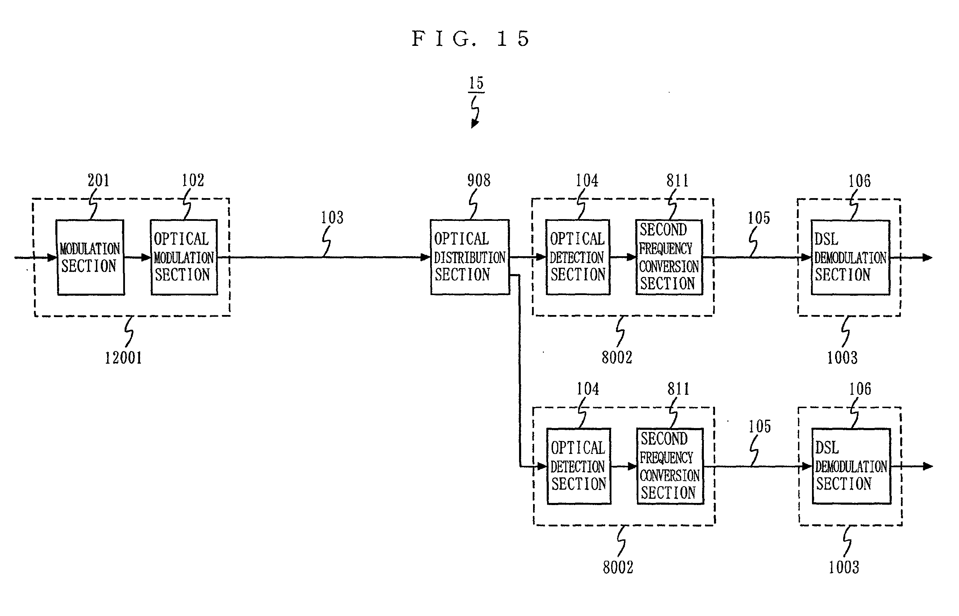

FIG. 15 is a block diagram illustrating the structure of a transmission apparatus according to the fifteenth embodiment of the present invention. As show in FIG. 15, the transmission apparatus 15 according to the present embodiment comprises a modulation section 201, an optical modulation section 102, an optical transmission section 103, an optical distribution section 908, two optical detection sections 104, two second frequency conversion sections 811, two electrical transmission sections 105, and two DSL demodulation sections 106. The modulation section 201 and the optical modulation section 102 constitutes an optical transmission installation 12001. The respective optical detection sections 104 and the associated second frequency conversion sections 811 constitute two optical terminal devices 8002. The respective DSL demodulation sections 106 constitute two subscriber terminals 1003. The present embodiment differs from the third embodiment in that the optical distribution section 908 is further comprised, and that as many (i.e., two in FIG. 15) optical detection sections 104, second frequency conversion sections 811, electrical transmission sections 105, and DSL demodulation sections 106 are provided as the number of signals distributed by the optical distribution section 908. Therefore, any component elements which function in similar manners to their counterparts in the third embodiment are denoted by like numerals, with the descriptions thereof omitted. The differences over the third embodiment will mainly be described below.

The optical transmission installation 12001 converts an inputted digital data signal into a frequency-converted signal spanning a predetermined first frequency band and further converts it to an optical signal, which is sent onto the optical transmission section 103. The optical distribution section 908 branches the optical signal which has been transmitted over the optical transmission section 103 into two signals. The optical detection sections 104, the second frequency conversion sections 811, the electrical transmission sections 105, and the DSL demodulation sections 106 are provided respectively corresponding to the two optical signals branched-out by the optical distribution section 908. Each optical detection section 104 reconverts one of the two optical signals branched-out by the optical distribution section 908 into the frequency-converted signal (which is an electrical signal), and outputs it to the associated second frequency conversion section 811. Each second frequency conversion section 811 subjects the frequency-converted signal outputted from the optical detection section 104 to frequency conversion to reproduce the original DSL modulated signal, which is sent onto the associated electrical transmission section 105. Each DSL demodulation section 106 reconverts the DSL modulated signal which has been transmitted over the electrical transmission section 105 into the original digital data signal.

Thus, the above-described transmission apparatus converts a digital data signal into a DSL modulated signal, which is further subjected to frequency conversion and optically transmitted. Thereafter, the optical signal is branched out so as to be distributed to a plurality of subscriber terminals. Thus, there is provided a large-capacity transmission apparatus which is capable of accommodating a larger number of subscribers based on an economical construction.

### (sixteenth embodiment)

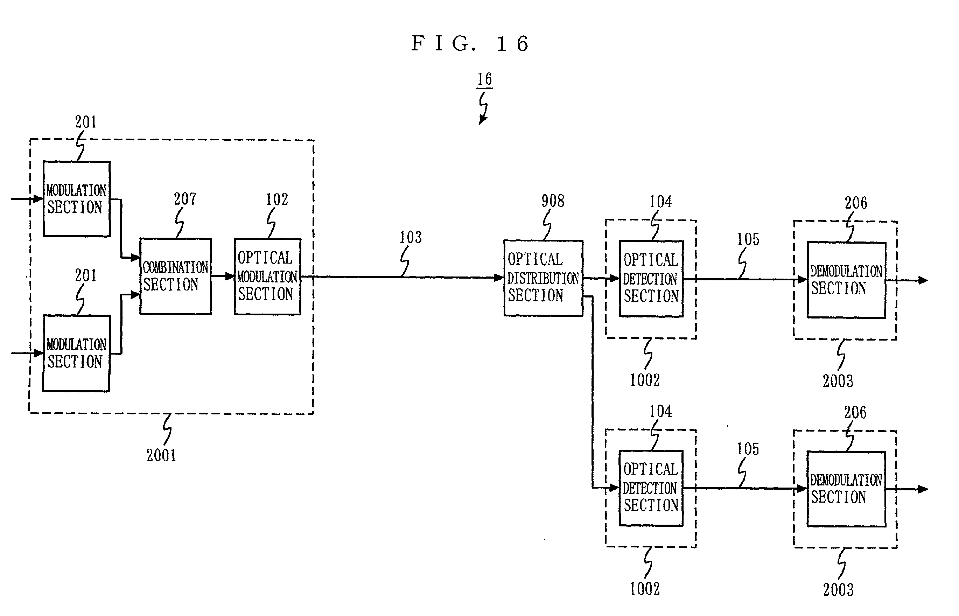

FIG. 16 is a block diagram illustrating the structure of a transmission apparatus according to the sixteenth embodiment of the present invention. As shown in FIG. 16, the transmission apparatus 16 according to the present embodiment comprises two modulation sections 201, a combination section 207, an optical modulation section 102, an optical transmission section 103, an optical distribution section 908, two optical detection sections 104, two electrical transmission sections 105, and two demodulation sections 206. The two modulation sections 201, the combination section 207, and the optical modulation section 102 constitute an optical transmission installation 2001. The respective optical detection sections 104 constitute two optical terminal devices 1002. The respective demodulation sections 206 constitute two subscriber terminals 2003. The present embodiment differs from the fourth embodiment in that the optical distribution section 908 is further comprised, and that as many (i.e., two in FIG. 16) optical detection sections 104, electrical transmission sections 105, and demodulation sections 206 are provided as the number of signals distributed by the optical distribution section 908. Therefore, any component elements which function in similar manners to their counterparts in the fourth embodiment are denoted by like numerals, with the descriptions thereof omitted. The differences over the fourth embodiment will mainly be described below.

The optical transmission installation 2001 converts a plurality of inputted digital data signals (two such signals are illustrated in FIG. 16) into DSL modulated signals spanning respectively different frequency bands, multiplex these signals to generate an FDM signal, converts the FDM signal into an optical signal, which is sent onto the optical transmission section 103. The optical distribution section 908 branches the optical signal which has been transmitted over the optical transmission section 103 into two signals. The optical detection sections 104, the electrical transmission sections 105, and the demodulation sections 206 are provided respectively corresponding to the two optical signals branched-out by the optical distribution section 908. Each optical detection section 104 reconverts one of the two optical signals branched-out by the optical distribution section 908 into the FDM signal (which is an electrical signal), and sends the resultant FDM signal onto the associated electrical transmission section 105. Each demodulation section 206 selectively demodulates the first or second frequency-converted signal from the FDM signal which has been transmitted over the electrical transmission section 105 and reconverts it into the original digital data signal.

Thus, the above-described transmission apparatus converts digital data signals on a plurality of channels into DSL modulated signals, which are subjected to frequency conversion and multiplexed. The resultant signal is optically transmitted, and this optical signal is branched out so as to be distributed to a plurality of subscriber terminals. Thus, there is provided a large-capacity transmission apparatus which is capable of accommodating a larger number of subscribers based on an economical construction.

### (seventeenth embodiment)

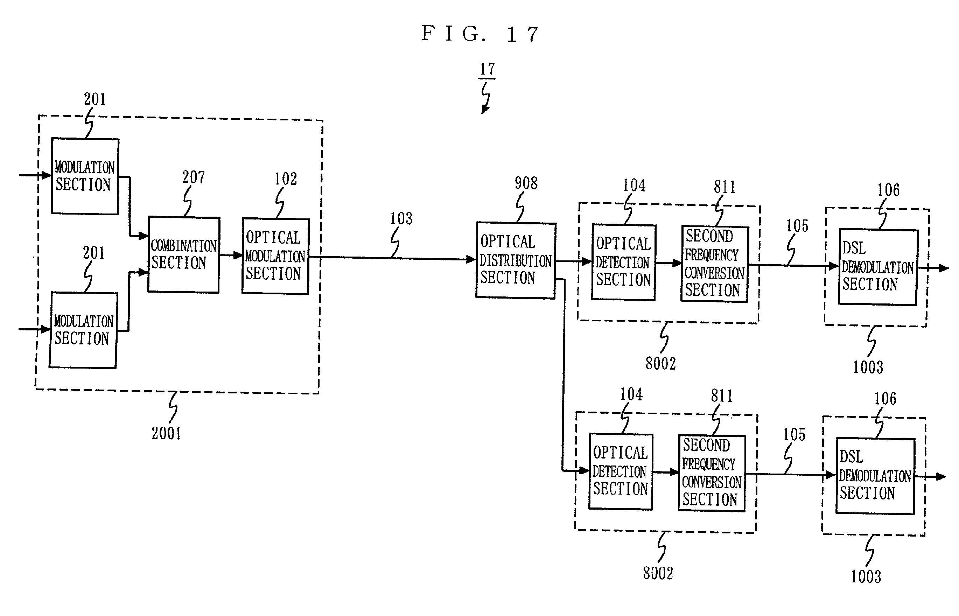

FIG. 17 is a block diagram illustrating the structure of a transmission apparatus according to the seventeenth embodiment of the present invention. As shown in FIG. 17, the transmission apparatus 17 according to the present embodiment comprises two modulation sections 201, a combination section 207, an optical modulation section 102, an optical transmission section 103, an optical distribution section 908, two optical detection sections 104, two second frequency conversion sections 811, two electrical transmission sections 105, and two DSL demodulation sections 106. The two modulation sections 201, the combination section 207, and the optical modulation section 102 constitute an optical transmission installation 2001. The respective optical detection sections 104 and the associated second frequency conversion section 811 constitute two optical terminal devices 8002. The respective DSL demodulation sections 106 constitute two subscriber terminals 1003. The present embodiment differs from the fifth embodiment in that the optical distribution section 908 is further comprised, and that as many (i.e., two in FIG. 17) optical detection sections 104, second frequency conversion sections 811, electrical transmission sections 105, and DSL demodulation sections 106 are provided as the number of signals distributed by the optical distribution section 908. Therefore, any component elements which function in similar manners to their counterparts in the fifth embodiment are denoted by like numerals, with the descriptions thereof omitted. The differences over the fifth embodiment will mainly be described below.

The optical transmission installation 2001 converts a plurality of inputted digital data signals (two such signals are illustrated in FIG. 17) into DSL modulated signals spanning respectively different frequency bands, multiplex these signals to generate an FDM signal, converts the FDM signal into an optical signal, which is sent onto the optical transmission section 103. The optical distribution section 908 branches the optical signal which has been transmitted over the optical transmission section 103 into two signals. The optical detection sections 104, the second frequency conversion sections 811, the electrical transmission sections 105, and the DSL demodulation sections 106 are provided respectively corresponding to the two optical signals branched-out by the optical distribution section 908. Each optical detection section 104 reconverts one of the two optical signals branched-out by the optical distribution section 908 into the FDM signal (which is an electrical signal). Each second frequency conversion section 811 selectively extracts either a first or second frequency-converted signal from the FDM signal outputted from the optical detection section 104, and subjects the selected signal to frequency conversion. Thus, either one of the DSL modulated signals outputted from the respective DSL modulation sections 101 included in the two modulation sections 201 is reproduced, and the reproduced DSL modulated signal is transmitted over the electrical transmission section 105. Each DSL demodulation section 106 reconverts the DSL modulated signal which has been transmitted over the electrical transmission section 105 into the original digital data signal.

Thus, the above-described transmission apparatus converts digital data signals on a plurality of channels into DSL modulated signals, which are subjected to frequency conversion and multiplexed. The resultant signal is optically transmitted, and this optical signal is branched out so as to be distributed to a plurality of subscriber terminals. Thus, there is provided a large-capacity transmission apparatus which is capable of accommodating a larger number of subscribers based on an economical construction.

In the transmission apparatuses according to the sixteenth and seventeenth embodiments, each optical signal outputted from the optical distribution section 908 contains, in a frequency-division-multiplexed form, signals spanning different frequency bands which are outputted from the two modulation sections 201. In this case, the two second frequency conversion sections (which are internalized in the demodulation section 206 in FIG. 16, and which are denoted as 811 in FIG. 17) may extract signals spanning the same frequency band for frequency conversion to reproduce the same DSL modulated signal; alternatively, the two second frequency conversion sections may extract signals spanning different frequency bands for frequency conversion to reproduce different DSL modulated signals. If the latter method is adopted, for example, a first digital data signal can be outputted from one DSL demodulation section 106 and a second digital data signal can be outputted from the other DSL demodulation section 106. Thus, there can be provided a transmission apparatus which is capable of transmitting different pieces of information to respective subscribers.

In the transmission apparatuses according to the fourteenth to seventeenth embodiments, the optical signal is branched into two signals in the optical distribution section 908. However, the number of branched-out optical signals in the optical distribution section 908 may be arbitrary. In the transmission apparatuses according to the sixteenth and seventeenth embodiments, the number of signals multiplexed in the optical transmission installation 2001 and the number of distributed optical signals in the optical distribution section 908 are both two. However, the number of multiplexed signals and the number of branched-out signals do not need to be equal; each of these numbers may be any number other than two.

### (eighteenth embodiment)

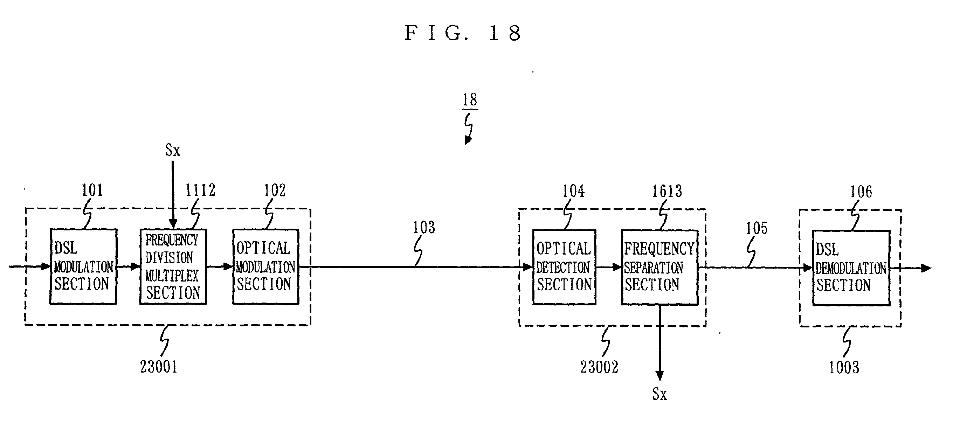

FIG. 18 is a block diagram illustrating the structure of a transmission apparatus according to the eighteenth embodiment of the present invention. As shown in FIG. 18, the transmission apparatus 18 according to the present embodiment comprises a DSL modulation section 101, a frequency division multiplex section 1112, an optical modulation section 102, an optical transmission section 103, an optical detection section 104, a frequency separation section 1613, an electrical transmission section 105, and a DSL demodulation section 106. The DSL modulation section 101, the frequency division multiplex section 1112, and the optical modulation section 102 constitute an optical transmission installation 23001. The optical detection section 104 and the frequency separation section 1613 constitute an optical terminal device 23002. The DSL demodulation section 106 constitutes a subscriber terminal 1003. The present embodiment differs from the first embodiment in that the frequency division multiplex section 1112 and the frequency separation section 1613 are further comprised. Therefore, any component elements which function in similar manners to their counterparts in the first embodiment are denoted by like numerals, with the descriptions thereof omitted. The differences over the first embodiment will mainly be described below.

On a DSL modulated signal outputted from the DSL modulation section 101, the frequency division multiplex section 1112 frequency-division-multiplexes a second electrical signal Sx which spans a frequency band different from that of the DSL modulated signal, and outputs the resultant signal to the optical modulation section 102. The frequency separation section 1613 subjects the electrical signal outputted from the optical detection section 104 to frequency separation so as to separately output the DSL modulated signal and the second electrical signal Sx. The DSL modulated signal separated by the frequency separation section 1613 is transmitted over the electrical transmission section 105. The DSL demodulation section 106 demodulates the DSL modulated signal which has been transmitted over the electrical transmission section 105 to reproduce the original digital data signal.

Thus, the above-described transmission apparatus converts a digital data signal into a DSL modulated signal, which is then optically transmitted with a second electrical signal being frequency-division-multiplexed on the DSL modulated signal. As a result, there is provided a transmission apparatus which has a high expandability and flexibility such that it is also capable of supporting services other than DSL services.

### (nineteenth embodiment)

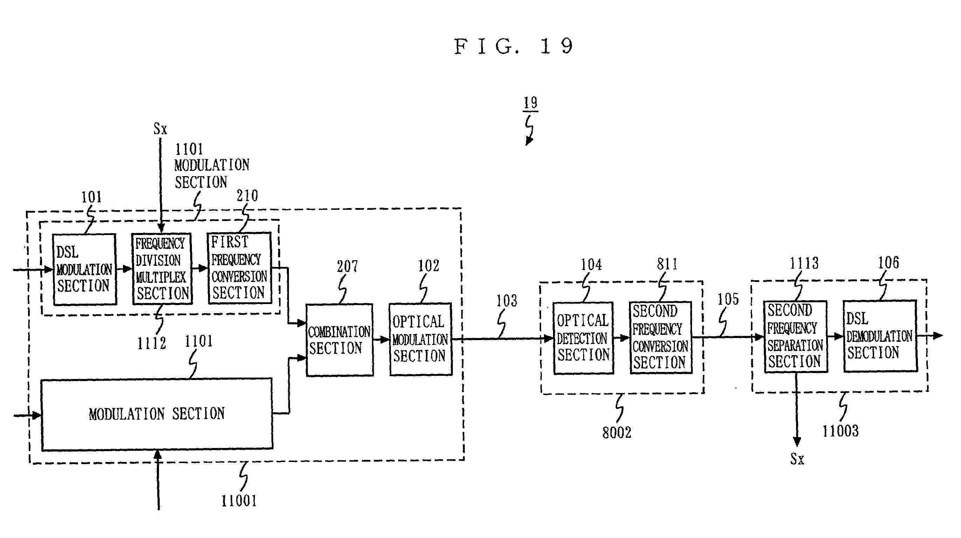

FIG. 19 is a block diagram illustrating the structure of a transmission apparatus according to the nineteenth embodiment of the present invention. As shown in FIG. 19, the transmission apparatus 19 according to the present embodiment comprises two modulation sections 1101, a combination section 207, an optical modulation section 102, an optical transmission section 103, an optical detection section 104, a second frequency conversion section 811, an electrical transmission section 105, a second frequency separation section 1113, and a DSL demodulation section 106. The two modulation sections 1101, the combination section 207, and the optical modulation section 102 constitute an optical transmission installation 11001. The optical detection section 104 and the second frequency conversion section 811 constitute an optical terminal device 8002. The second frequency separation section 1113 and the DSL demodulation section 106 constitute a subscriber terminal 11003.

The modulation section 1101 includes a DSL modulation section 101, a frequency division multiplex section 1112, and a first frequency conversion section 210. The present embodiment differs from the fifth embodiment in that the frequency division multiplex section 1112 and the second frequency separation section 1113 are further comprised. Therefore, any component elements which function in similar manners to their counterparts in the fifth embodiment are denoted by like numerals, with the descriptions thereof omitted. The differences over the fifth embodiment will mainly be described below.

The modulation sections 1101 are provided respectively corresponding to a plurality of digital data signals which are inputted to the optical transmission installation 11001 (two such signals are illustrated in FIG. 19). In each modulation section 1101, the DSL modulation section 101 first converts the respective digital data signal into a DSL modulated signal. Next, the frequency division multiplex section 1112 frequency-division-multiplexes a second electrical signal Sx, which spans a frequency band different from that of the DSL modulated signal, on the DSL modulated signal. Furthermore, the respective first frequency conversion sections 210 convert the multiplexed signals outputted from the respective frequency division multiplex sections 1112 into first and second frequency-converted signals which span respectively different predetermined frequency bands.

The combination section 207 combines the first and second frequency-converted signals outputted from the two modulation sections 1101 through frequency-division-multiplex, and outputs an FDM signal. The optical modulation section 102 converts the FDM signal into an optical signal, and sends it onto the optical transmission section 103. The optical detection section 104 reconverts the optical signal which has been transmitted over the optical transmission section 103 into the FDM signal, which is an electrical signal. The second frequency conversion section 811 selectively extracts either a first or second frequency-converted signal from the FDM signal outputted from the optical detection section 104, and subjects the selected signal to frequency conversion so as to span the base band. The second frequency conversion section 811 sends the frequency-converted signal onto the electrical transmission section 105. The second frequency separation section 1113 subjects the signal which has been transmitted over the electrical transmission section 105 to frequency separation so as to separately output the DSL modulated signal and the second electrical signal Sx. The DSL demodulation section 106 reconverts the DSL modulated signal into the original digital data signal.

Thus, the above-described transmission apparatus converts digital data signals on a plurality of channels into DSL modulated signals, which are subjected to frequency conversion and multiplexed. The resultant signal is optically transmitted with a second electrical signal being multiplexed on the DSL modulated signal. As a result, there is provided a transmission apparatus which has a high expandability and flexibility such that it is also capable of supporting services other than DSL services.

### (twentieth embodiment)

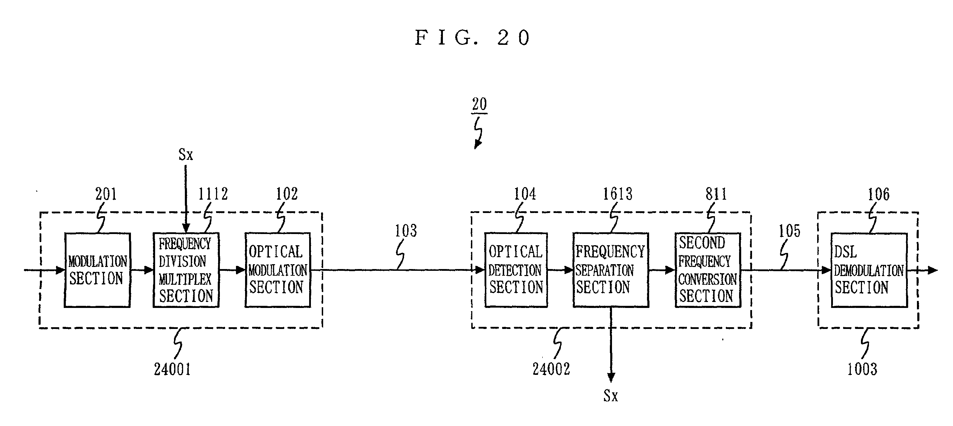

FIG. 20 is a block diagram illustrating the structure of a transmission apparatus according to the twentieth embodiment of the present invention. As shown in FIG. 20, the transmission apparatus 20 according to the present embodiment comprises a modulation section 201, a frequency division multiplex section 1112, an optical modulation section 102, an optical transmission section 103, an optical detection section 104, a frequency separation section 1613, a second frequency conversion section 811, an electrical transmission section 105, and a DSL demodulation section 106. The modulation section 201, the frequency division multiplex section 1112, and the optical modulation section 102 constitute an optical transmission installation 24001. The optical detection section 104, the frequency separation section 1613, and the second frequency conversion section 811 constitute an optical terminal device 24002. The DSL demodulation section 106 constitutes a subscriber terminal 1003. The present embodiment differs from the third embodiment in that the frequency division multiplex section 1112 and the frequency separation section 1613 are further comprised. Therefore, any component elements which function in similar manners to their counterparts in the third embodiment are denoted by like numerals, with the descriptions thereof omitted. The differences over the third embodiment will mainly be described below.

On the frequency-converted signal outputted from the modulation section 201, the frequency division multiplex section 1112 frequency-division-multiplexes a second electrical signal Sx which spans a frequency band different from that of the frequency-converted signal, and outputs the resultant signal to the optical modulation section 102. The frequency separation section 1613 subjects the electrical signal outputted from the optical detection section 104 to frequency separation so as to separately output the frequency-converted signal and the second electrical signal Sx. The second frequency conversion section 811 subjects the frequency-converted signal outputted from the frequency separation section 1613 to frequency conversion to reproduce the original DSL modulated signal, which is sent onto the electrical transmission section 105.

Thus, the above-described transmission apparatus converts a digital data signal to a DSL modulated signal, which is subjected to frequency conversion and then optically transmitted with a second electrical signal being frequency-division-multiplexed thereon. As a result, there is provided a transmission apparatus which has a high expandability and flexibility such that it is also capable of supporting services other than DSL services.

### (twenty-first embodiment)

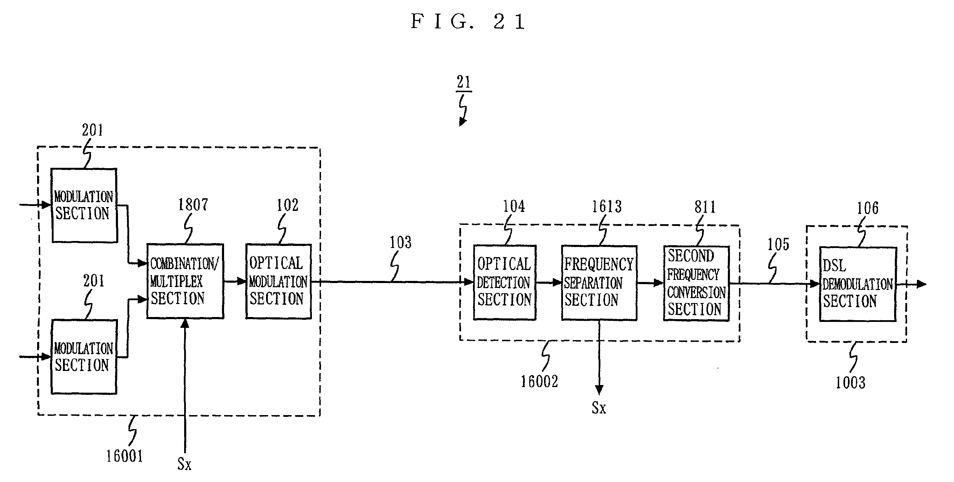

FIG. 21 is a block diagram illustrating the structure of a transmission apparatus according to the twenty-first embodiment of the present invention. As shown in FIG. 21, the transmission apparatus 21 according to the present embodiment comprises two modulation sections 201, a combination/multiplex section 1807, an optical modulation section 102, an optical transmission section 103, an optical detection section 104, a frequency separation section 1613, a second frequency conversion section 811, an electrical transmission section 105, and a DSL demodulation section 106. The two modulation sections 201, the combination/multiplex section 1807, and the optical modulation section 102 constitute an optical transmission installation 16001. The optical detection section 104, the frequency separation section 1613, and the second frequency conversion section 811 constitute an optical terminal device 16002. The DSL demodulation section 106 constitutes a subscriber terminal 1003. The present embodiment differs from the fifth embodiment in that the combination/multiplex section 1807 is comprised instead of a combination section 207, and that the frequency separation section 1613 is further comprised. Therefore, any component elements which function in similar manners to their counterparts in the fifth embodiment are denoted by like numerals, with the descriptions thereof omitted. The differences over the fifth embodiment will mainly be described below.

The combination/multiplex section 1807 first combines the first and second frequency-converted signals outputted from the two modulation sections 201 through frequency-division-multiplex, thereby generating an FDM signal. Next, the combination/multiplex section 1807 frequency-division-multiplexes a second electrical signal Sx, which spans a different frequency band from those of the first and second frequency-converted signals on the FDM signal, and outputs the resultant signal onto the optical modulation section 102.

The frequency separation section 1613 subjects the electrical signal outputted from the optical detection section 104 to frequency separation so as to separately output the FDM signal and the second electrical signal Sx. The second frequency conversion section 811 selectively extracts either a first or second frequency-converted signal from the FDM signal outputted from the optical detection section 104, and subjects the selected signal to frequency conversion. As a result, either one of the DSL modulated signals outputted from the respective DSL modulation sections 101 included in the two modulation sections 201 is reproduced, and the reproduced DSL signal is transmitted over the electrical transmission section 105.

Thus, the above-described transmission apparatus converts digital data signals on a plurality of channels into DSL modulated signals, which are subjected to frequency conversion and multiplexed. The resultant signal is then optically transmitted with a second electrical signal being frequency-division-multiplexed thereon. As a result, there is provided a transmission apparatus which has a high expandability and flexibility such that it is also capable of supporting services other than DSL services.

### (twenty-second embodiment)

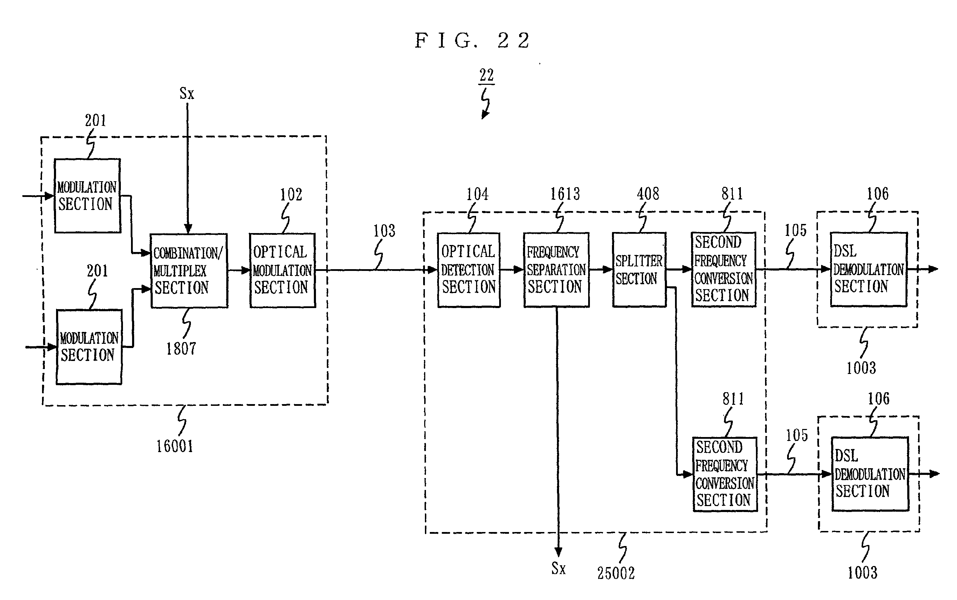

FIG. 22 is a block diagram illustrating the structure of a transmission apparatus according to the twenty-second embodiment of the present invention. As shown in FIG. 22, the transmission apparatus 22 according to the present embodiment comprises two modulation sections 201, a combination/multiplex section 1807, an optical modulation section 102, an optical transmission section 103, an optical detection section 104, a frequency separation section 1613, a splitter section 408, two second frequency conversion sections 811, two electrical transmission sections 105, and two DSL demodulation sections 106. The two modulation sections 201, the combination/multiplex section 1807, and the optical modulation section 102 constitute an optical transmission installation 16001. The optical detection section 104, the frequency separation section 1613, the splitter section 408, and the two second frequency conversion sections 811 constitute an optical terminal device 25002. The respective DSL demodulation sections 106 constitute two subscriber terminals 1003. The present embodiment differs from the eighth embodiment in that, the combination/multiplex section 1807 is comprised instead of a combination section 207, and that the frequency separation section 1613 is further comprised. Therefore, any component elements which function in similar manners to their counterparts in the eighth embodiment are denoted by like numerals, with the descriptions thereof omitted. The differences over the eighth embodiment will mainly be described below.

The combination/multiplex section 1807 first combines the first and second frequency-converted signals outputted from the two modulation sections 201 through frequency-division-multiplex, thereby generating an FDM signal. Next, the combination/multiplex section 1807 frequency-division-multiplexes a second electrical signal Sx, which spans a different frequency band from those of the first and second frequency-converted signals on the FDM signal, and outputs the resultant signal onto the optical modulation section 102. The frequency separation section 1613 subjects the electrical signal outputted from the optical detection section 104 to frequency separation so as to separately output the FDM signal and the second electrical signal Sx. The FDM signal outputted from the frequency separation section 1613 is branched into two signals by the splitter section 408, so as to be inputted to the respective second frequency conversion sections 811.

Thus, the above-described transmission apparatus converts digital data signals on a plurality of channels into DSL modulated signals, which are subjected to frequency conversion and multiplexed. The resultant signal is then optically transmitted with a second electrical signal being frequency-division-multiplexed thereon. Thus, there is provided a transmission apparatus which has a high expandability and flexibility such that it is also capable of supporting services other than DSL services.

### (twenty-third embodiment)

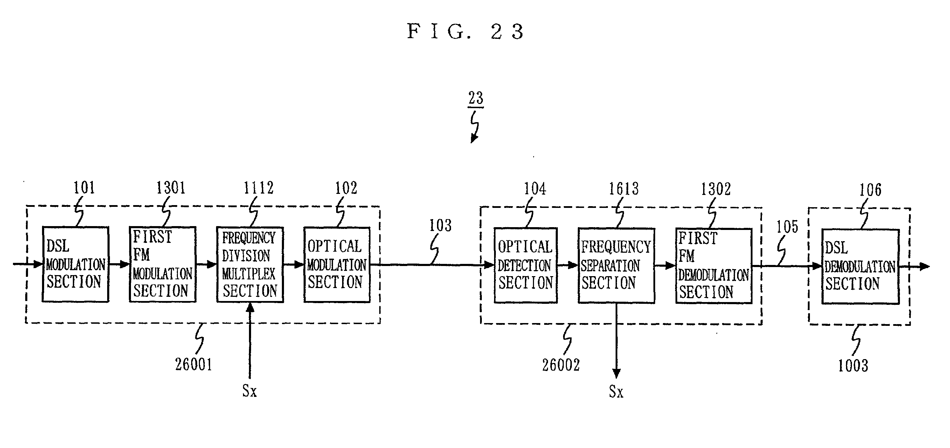

FIG. 23 is a block diagram illustrating the structure of a transmission apparatus according to the twenty-third embodiment of the present invention. As shown in FIG. 23, the transmission apparatus 23 according to the present embodiment comprises a DSL modulation section 101, a first FM modulation section 1301, a frequency division multiplex section 1112, an optical modulation section 102, an optical transmission section 103, an optical detection section 104, a frequency separation section 1613, a first FM demodulation section 1302, an electrical transmission section 105, and a DSL demodulation section 106. The DSL modulation section 101, the first FM modulation section 1301, the frequency division multiplex section 1112, and the optical modulation section 102 constitute an optical transmission installation 26001. The optical detection section 104, the frequency separation section 1613, and the first FM demodulation section 1302 constitute an optical terminal device 26002. The DSL demodulation section 106 constitutes a subscriber terminal 1003. The present embodiment differs from the ninth embodiment in that the frequency division multiplex section 1112 and the frequency separation section 1613 are further comprised. Therefore, any component elements which function in similar manners to their counterparts in the ninth embodiment are denoted by like numerals, with the descriptions thereof omitted. The differences over the ninth embodiment will mainly be described below.

On the frequency-modulated signal outputted from the first FM modulation section 1301, the frequency division multiplex section 1112 frequency-division-multiplexes a second electrical signal Sx which spans a frequency band different from that of the frequency-modulated signal, and outputs the resultant signal to the optical modulation section 102. The frequency separation section 1613 subjects the electrical signal outputted from the optical detection section 104 to frequency separation so as to separately output the frequency-modulated signal and the second electrical signal Sx. The first FM demodulation section 1302 demodulates the frequency-modulated signal outputted from the frequency separation section 1613 to reproduce the DSL modulated signal, and the reproduced DSL modulated signal is sent onto the electrical transmission section 105.

Thus, the above-described transmission apparatus converts a digital data signal into a DSL modulated signal, which is subjected to frequency modulation and then optically transmitted with a second electrical signal being frequency-division-multiplexed thereon. As a result, there is provided a transmission apparatus which has a high expandability and flexibility such that it is also capable of supporting services other than DSL services.

### (twenty-fourth embodiment)

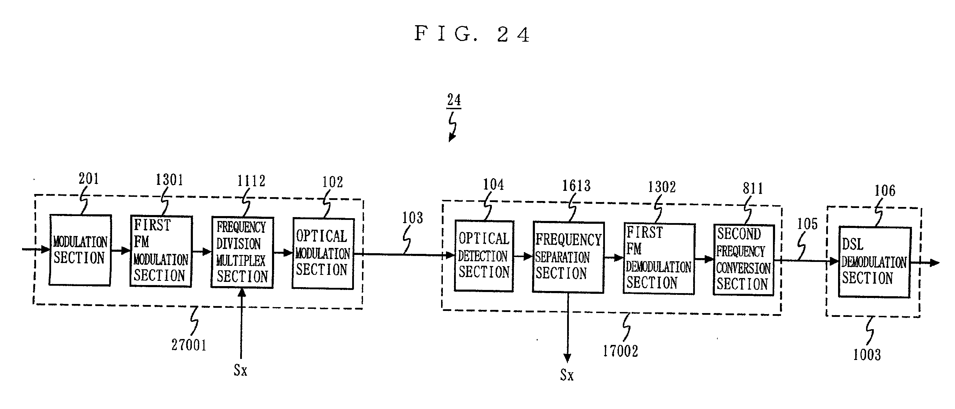

FIG. 24 is a block diagram illustrating the structure of a transmission apparatus according to the twenty-fourth embodiment of the present invention. As shown in FIG. 24, the transmission apparatus 24 according to the present embodiment comprises a modulation section 201, a first FM modulation section 1301, a frequency division multiplex section 1112, an optical modulation section 102, an optical transmission section 103, an optical detection section 104, a frequency separation section 1613, a first FM demodulation section 1302, a second frequency conversion section 811, an electrical transmission section 105, and a DSL demodulation section 106. The modulation section 201, the first FM modulation section 1301, the frequency division multiplex section 1112, and the optical modulation section 102 constitute an optical transmission installation 27001. The optical detection section 104, the frequency separation section 1613, the first FM demodulation section 1302, and the second frequency conversion section 811 constitute an optical terminal device 17002. The DSL demodulation section 106 constitutes a subscriber terminal 1003. The present embodiment differs from the tenth embodiment in that the frequency division multiplex section 1112 and the frequency separation section 1613 are further comprised. Therefore, any component elements which function in similar manners to their counterparts in the tenth embodiment are denoted by like numerals, with the descriptions thereof omitted. The differences over the tenth embodiment will mainly be described below.

On the frequency-modulated signal outputted from the first FM modulation section 1301, the frequency division multiplex section 1112 frequency-division-multiplexes a second electrical signal Sx which spans a frequency band different from that of the frequency-modulated signal, and outputs the resultant signal to the optical modulation section 102. The frequency separation section 1613 subjects the electrical signal outputted from the optical detection section 104 to frequency separation so as to separately output the frequency-modulated signal and the second electrical signal Sx. The first FM demodulation section 1302 demodulates the frequency-modulated signal outputted from the frequency separation section 1613 to reproduce a signal corresponding to the signal outputted from the modulation section 201, and outputs the reproduced signal to the second frequency conversion section 811.

Thus, the above-described transmission apparatus converts a digital data signal into a DSL modulated signal, which is subjected to frequency conversion and frequency modulation. The resultant signal is then optically transmitted with a second electrical signal being frequency-division-multiplexed thereon. As a result, there is provided a transmission apparatus which has a high expandability and flexibility such that it is also capable of supporting services other than DSL services.

### (twenty-fifth embodiment)

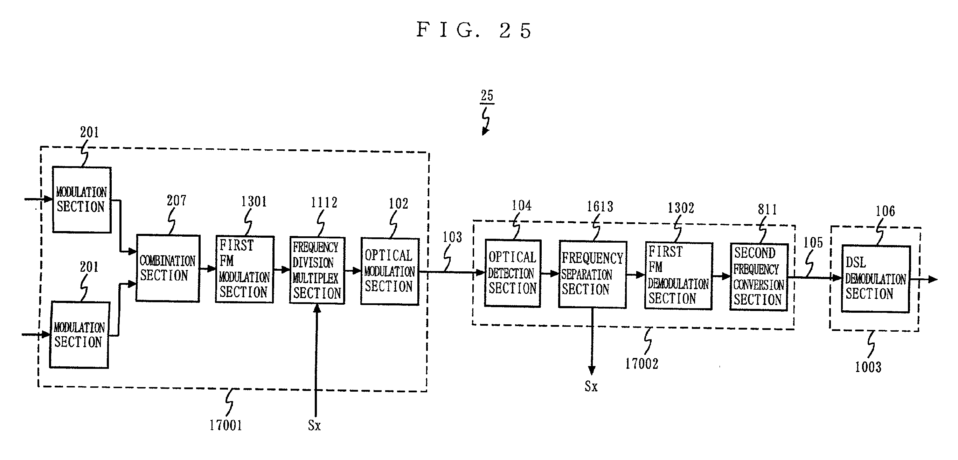

FIG. 25 is a block diagram illustrating the structure of a transmission apparatus according to the twenty-fifth embodiment of the present invention. As shown in FIG. 25, the transmission apparatus 25 according to the present embodiment comprises two modulation sections 201, a combination section 207, a first FM modulation section 1301, a frequency division multiplex section 1112, an optical modulation section 102, an optical transmission section 103, an optical detection section 104, a frequency separation section 1613, a first FM demodulation section 1302, a second frequency conversion section 811, an electrical transmission section 105, and a DSL demodulation section 106. The two modulation sections 201, the combination section 207, the first FM modulation section 1301, the frequency division multiplex section 1112, and the optical modulation section 102 constitute an optical transmission installation 17001. The optical detection section 104, the frequency separation section 1613, the first FM demodulation section 1302, and the second frequency conversion section 811 constitute an optical terminal device 17002. The DSL demodulation section 106 constitutes a subscriber terminal 1003. The present embodiment differs from the twelfth embodiment in that the frequency division multiplex section 1112 and the frequency separation section 1613 are further comprised. Therefore, any component elements which function in similar manners to their counterparts in the twelfth embodiment are denoted by like numerals, with the descriptions thereof omitted. The differences over the twelfth embodiment will mainly be described below.

On the frequency-modulated signal outputted from the first FM modulation section 1301, the frequency division multiplex section 1112 frequency-division-multiplexes a second electrical signal Sx which spans a frequency band different from that of the frequency-modulated signal, and outputs the resultant signal to the optical modulation section 102. The frequency separation section 1613 subjects the electrical signal outputted from the optical detection section 104 to frequency separation so as to separately output the frequency-modulated signal and the second electrical signal Sx. The first FM demodulation section 1302 demodulates the frequency-modulated signal outputted from the frequency separation section 1613 to reproduce the original FDM signal.

Thus, the above-described transmission apparatus converts digital data signals on a plurality of channels into DSL modulated signals, which are subjected to frequency conversion and multiplexed, and subjected to frequency modulation. The resultant signal is then optically transmitted with a second electrical signal being frequency-division-multiplexed thereon. As a result, there is provided a transmission apparatus which has a high expandability and flexibility such that it is also capable of supporting services other than DSL services.

### (twenty-sixth embodiment)

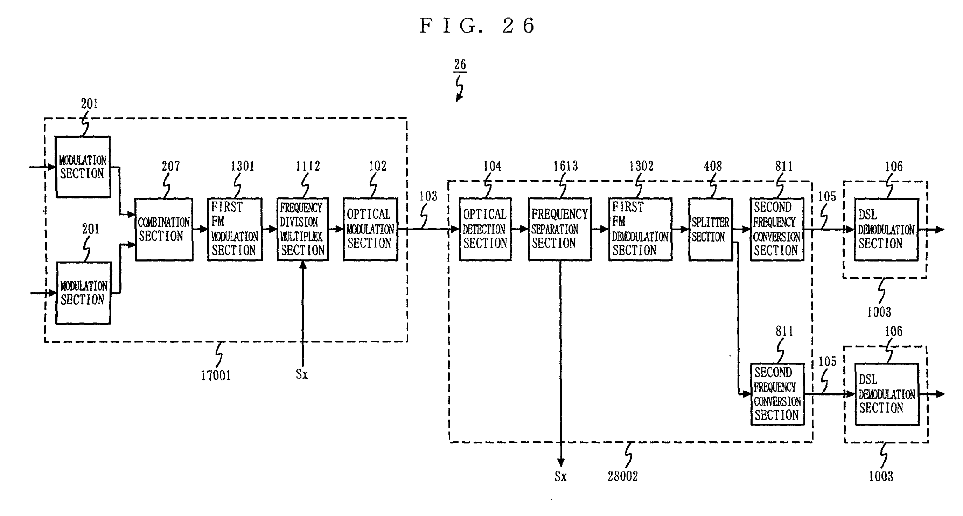

FIG. 26 is a block diagram illustrating the structure of a transmission apparatus according to the twenty-sixth embodiment of the present invention. As shown in FIG. 26, the transmission apparatus according to the present embodiment comprises two modulation sections 201, a combination section 207, a first FM modulation section 1301, a frequency division multiplex section 1112, an optical modulation section 102, an optical transmission section 103, an optical detection section 104, a frequency separation section 1613, a first FM demodulation section 1302, a splitter section 408, two second frequency conversion sections 811, two electrical transmission sections 105, and two DSL demodulation sections 106. The two modulation sections 201, the combination section 207, the first FM modulation section 1301, the frequency division multiplex section 1112, and the optical modulation section 102 constitute an optical transmission installation 17001. The optical detection section 104, the frequency separation section 1613, the first FM demodulation section 1302, the splitter section 408, and the two second frequency conversion sections 811 constitute an optical terminal device 28002. The respective DSL demodulation sections 106 constitute two subscriber terminals 1003. The present embodiment differs from the thirteenth embodiment in that the frequency division multiplex section 1112 and the frequency separation section 1613 are further comprised. Therefore, any component elements which function in similar manners to their counterparts in the thirteenth embodiment are denoted by like numerals, with the descriptions thereof omitted. The differences over the thirteenth embodiment will mainly be described below.

On the frequency-modulated signal outputted from the first FM modulation section 1301, the frequency division multiplex section 1112 frequency-division-multiplexes a second electrical signal Sx which spans a frequency band different from that of the frequency-modulated signal, and outputs the resultant signal to the optical modulation section 102. The frequency separation section 1613 subjects the electrical signal outputted from the optical detection section 104 to frequency separation so as to separately output the frequency-modulated signal and the second electrical signal Sx. The first FM demodulation section 1302 demodulates the frequency-modulated signal outputted from the frequency separation section 1613 to reproduce the original FDM signal.

Thus, the above-described transmission apparatus converts digital data signals on a plurality of channels into DSL modulated signals, which are subjected to frequency conversion and multiplexed, and subjected to frequency modulation. The resultant signal is then optically transmitted with a second electrical signal being frequency-division-multiplexed thereon. As a result, there is provided a transmission apparatus which has a high expandability and flexibility such that it is also capable of supporting services other than DSL services.

### (twenty-seventh embodiment)

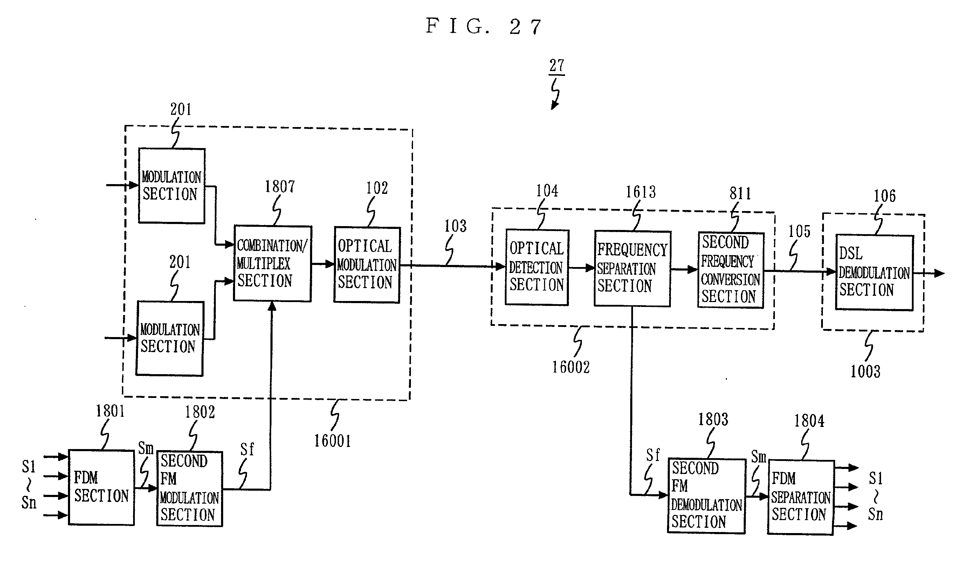

FIG. 27 is a block diagram illustrating the structure of a transmission apparatus according to the twenty-seventh embodiment of the present invention. As shown in FIG. 27, the transmission apparatus 27 according to the present embodiment comprises two modulation sections 201, a combination/multiplex section 1807, an optical modulation section 102, an optical transmission section 103, an optical detection section 104, a frequency separation section 1613, a second frequency conversion section 811, an electrical transmission section 105, a DSL demodulation section 106, an FDM section 1801, a second FM modulation section 1802, a second FM demodulation section 1803, and an FDM separation section 1804. The two modulation sections 201, the combination/multiplex section 1807, and the optical modulation section 102 constitute an optical transmission installation 16001. The optical detection section 104, the frequency separation section 1613, and the second frequency conversion section 811 constitute an optical terminal device 16002. The DSL demodulation section 106 constitutes a subscriber terminal 1003. The present embodiment differs from the twenty-first embodiment in that the FDM section 1801, the second FM modulation section 1802, the second FM demodulation section 1803, and the FDM separation section 1804 are further comprised. Therefore, any component elements which function in similar manners to their counterparts in the twenty-first embodiment are denoted by like numerals, with the descriptions thereof omitted. The differences over the twenty-first embodiment will mainly be described below.

The FDM section 1801 frequency-division-multiplexes a plurality of second electrical signals S1 to Sn, and outputs a signal Sm. The second FM modulation section 1802 subjects the signal Sm to frequency modulation, and outputs a frequency-modulated signal Sf. The combination/multiplex section 1807 subjects first and second frequency-converted signals outputted from two modulation sections 201 to frequency-division-multiplex, thereby generating an FDM signal, and further frequency-division-multiplexes the frequency-modulated signal Sf outputted from the second FM modulation section 1802 on the FDM signal. The resultant signal is outputted to the optical modulation section 102.

The frequency separation section 1613 subjects the electrical signal outputted from the optical detection section 104 to frequency separation so as to separately output the frequency-modulated signal Sf and the remaining FDM signal, so that the frequency-modulated signal Sf is outputted to the second FM demodulation section 1803 and the remaining FDM signal is outputted to the second frequency conversion section 811. The second FM demodulation section 1803 demodulates the frequency-modulated signal Sf to reproduce the original signal Sm. The FDM separation section 1804 subjects the signal Sm to frequency separation so as to separately output second electrical signals S1 to Sn.

Thus, the above-described transmission apparatus converts digital data signals on a plurality of channels into DSL modulated signals, which are subjected to frequency conversion and multiplexed. The resultant signal is then optically transmitted with a second electrical signal being frequency-division-multiplexed thereon. As a result, there is provided a transmission apparatus which has a high expandability and flexibility such that it is also capable of supporting services other than DSL services.

The second electrical signals Sx and S1 to Sn which are transmitted by the transmission apparatuses according to the eighteenth to twenty-seventh embodiments may be, for example, base-band digital data signals, low-frequency signals or base-band signals such as audio signals, or high-frequency signals or carrier-modulated signals such as television video signals.

The detailed structure of the modulation section 201 in each of the second to fourth embodiments was illustrated above with reference to the figures. Similarly, the modulation sections 201 in the transmission apparatus according to any other embodiment may each include a DSL modulation section for generating a DSL modulated signal based on an inputted digital data signal, and a frequency conversion section such that the respective frequency conversion sections convert the DSL modulated signals outputted from the DSL modulation sections so as to span respectively different frequency bands. In the case of adopting this structure, a transmission apparatus comprising a plurality of modulation sections can be constructed by utilizing common device or circuitry for a plurality of DSL modulation sections. Thus, there is provided a transmission apparatus which is capable of accommodating a large number of subscribers based on a more economical construction.

The number of split or branched-out signals coming out from the branching section 308, the splitter section 408, or the optical distribution section 908 correspond to the number of subscriber terminals. In a typical manner of using the transmission apparatus, it is desirable that the number of subscriber terminals is equal to the number of modulation sections 201 and 1101, i.e., the number of frequency-converted signals multiplexed by the combination section 207. However, depending on the manner in which the transmission apparatus is used, the number of subscriber terminals may be larger or smaller than the number of signals multiplexed by the combination section 207.

### (twenty-eighth embodiment)

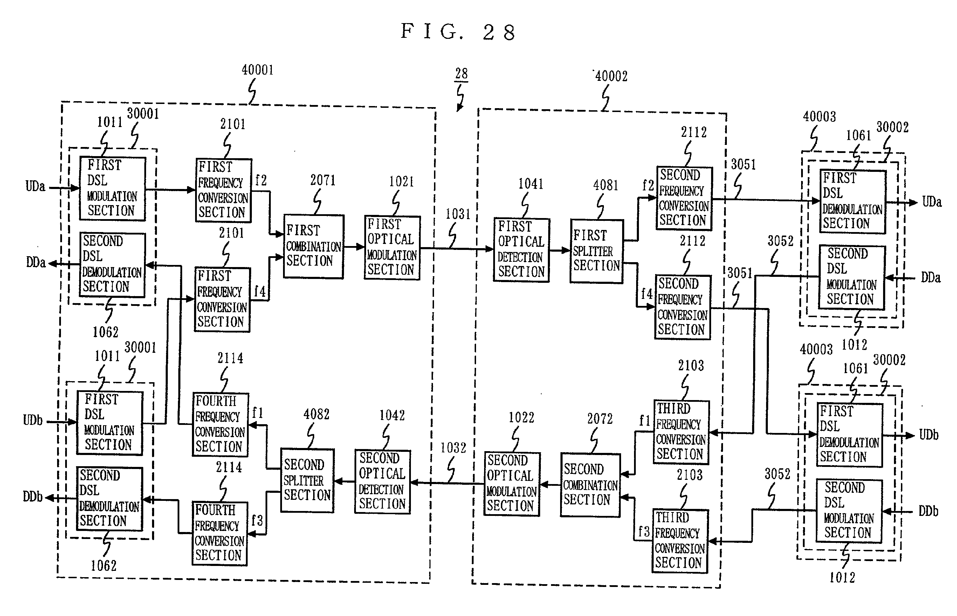

FIG. 28 is a block diagram illustrating the structure of a transmission apparatus according to the twenty-eighth embodiment of the present invention. The transmission apparatus according to the present embodiment exemplifies an application of any of the transmission apparatuses according to the above-described first to twenty-seventh embodiments to a bi-directional communication service. FIG. 28 illustrates an example where a bi-directional communication service is provided between two subscriber pairs. As shown in FIG. 28, the transmission apparatus 28 according to the present embodiment comprises two sets of components, each set including: a first transmission/reception circuit 30001, a second transmission/reception circuit 30002, a first frequency conversion section 2101, a second frequency conversion section 2112, a third frequency conversion section 2103, a fourth frequency conversion section 2114, a first electrical transmission section 3051, and a second electrical transmission section 3052. The transmission apparatus 28 further comprises a first combination section 2071, a second combination section 2072, a first optical modulation section 1021, a second optical modulation section 1022, a first optical transmission section 1031, a second optical transmission section 1032, a first optical detection section 1041, a second optical detection section 1042, a first splitter section 4081, and a second splitter section 4082. Each first transmission/reception circuit 30001 includes a first DSL modulation section 1011 and a second DSL demodulation section 1062. Each second transmission/reception circuit 30002 includes a first DSL demodulation section 1061 and a second DSL modulation section 1012. The two first transmission/reception circuits 30001, the two first frequency conversion sections 2101, the two fourth frequency conversion sections 2114, the first combination section 2071, the second aplitter section 4082, the first optical modulation section 1021, and the second optical detection section 1042 constitute an optical transmission/reception installation 40001. The first optical detection section 1041, the second optical modulation section 1022, the first splitter section 4081, the second combination section 2072, the two second frequency conversion sections 2112, and the two third frequency conversion sections 2103 constitute an optical terminal device 40002. Each transmission/reception circuit 30002 constitutes a subscriber terminal 40003.

The transmission apparatus 28 shown in FIG. 28 operates in the following manner. In the following description, the first digital data UDa and UDb shown in FIG. 28 will be collectively referred to as "first digital data UD", and the second digital data DDa and DDb will be collectively referred to as "second digital data DD". As many first transmission/reception circuits 30001 and second transmission/reception circuits 30002 are to be provided as there are subscriber pairs. The first DSL modulation section 1011 in each first transmission/reception circuit 30001 converts first digital data UD to be transmitted to a corresponding second transmission/reception circuit 30002 into a DSL modulated signal, and outputs it to the associated first frequency conversion section 2101.

The first frequency conversion sections 2101, which are provided in plurality corresponding to the first DSL modulation sections 1011, subject the DSL modulated signals outputted from the first DSL modulation sections 1011 to frequency conversion so as to span respectively different predetermined first frequency bands (denoted as "f2" and "f4" in FIG. 28). The first combination section 2071 frequency-division-multiplexes the signals outputted from the first frequency conversion sections 2101, and outputs a first FDM signal. The first optical modulation section 1021 converts the first FDM signal outputted from the first combination section 2071 into a first optical signal, which is sent onto the first optical transmission section 1031. The first optical transmission section 1031 transmits the first optical signal outputted from the first optical modulation section 1021. The first optical detection section 1041 reconverts the first optical signal which has been transmitted over the first optical transmission section 1031 into the first FDM signal, which is an electrical signal. The first splitter section 4081 subjects the first FDM signal outputted from the first optical detection section 1041 to frequency separation so as to separately output signals spanning respectively different frequency bands (i.e., f2 and f4 in FIG. 28).

The second frequency conversion sections 2112 are provided respectively corresponding to the plurality of signals separately outputted from the first splitter section 4081. Each second frequency conversion section 2112 converts either one of the signals separated by the first splitter section 4081 into a signal spanning a predetermined second frequency band, and sends it onto the associated first electrical transmission section 3051. The first electrical transmission sections 3051, which are provided respectively corresponding to the second frequency conversion sections 2112, transmit the respective electrical signals outputted from the associated second frequency conversion sections 2112. The first DSL demodulation section 1061 in each second transmission/reception circuit 30002 is connected to an associated one of the first electrical transmission sections 3051. Each first DSL demodulation section 1061 demodulates the signal which has been transmitted over the first electrical transmission section 3051 to reproduce the first digital data UD which has been transmitted from the corresponding first transmission/reception circuit 30001. The second DSL modulation section 1012 in each second transmission/reception circuit 30002 converts second digital data DD which is to be transmitted to the corresponding first transmission/reception circuit 30001 into a second DSL modulated signal, and sends it onto the associated second electrical transmission section 3052. The second electrical transmission sections 3052, which are provided respectively corresponding to the second DSL modulation sections 1012, transmit the second DSL modulated signals outputted from the associated second DSL modulation sections 1012.

The third frequency conversion sections 2103, which are provided respectively corresponding to the second electrical transmission sections 3052, convert the second DSL modulated signal which has been transmitted over the second electrical transmission section 3052 into signals having respectively different predetermined third frequency bands (denoted as "f1 and "f3" in FIG. 28). The second combination section 2072 frequency-division-multiplexes the signals outputted from the third frequency conversion sections 2103, and outputs a second FDM signal. The second optical modulation section 1022 converts the second FDM signal outputted from the second combination section 2072 into a second optical signal, which is sent onto the second optical transmission section 1032. The second optical transmission section 1032 transmits the second optical signal outputted from the second optical modulation section 1022. The second optical detection section 1042 reconverts the second optical signal which has been transmitted over the second optical transmission section 1032 into the second FDM signal, which is an electrical signal. The second splitter section 4082 subjects the second FDM signal outputted from the second optical detection section 1042 to frequency separation so as to separately output signals spanning respectively different frequency bands (i.e., f1 and f3 in FIG. 28) to the associated fourth frequency conversion sections 2114.

The fourth frequency conversion sections 2114 are provided respectively corresponding to the plurality of signals separately outputted from the second splitter section 4082. Each fourth frequency conversion section 2114 subjects either one of the signals separated by the second splitter section 4082 to frequency conversion so as to span a predetermined fourth frequency band. The second DSL demodulation sections 1062 in the first transmission/reception circuits 30001 are provided respectively corresponding to the fourth frequency conversion sections 2114. Each second DSL demodulation section 1062 demodulates a signal outputted from the fourth frequency conversion section 2114 to reproduce the original second digital data DD.

In accordance with the above-described transmission apparatus, a plurality of bi-directional transmission signals outputted from transmission/reception circuits respectively corresponding to a plurality of subscriber pairs are converted into signals spanning respectively different frequency bands, and are transmitted as one FDM signal. As a result, the number of optical transmission lines can be reduced. Thus, a low-cost bi-directional transmission apparatus can be provided even in the case where there is a large number of subscriber pairs.

### (twenty-ninth embodiment)

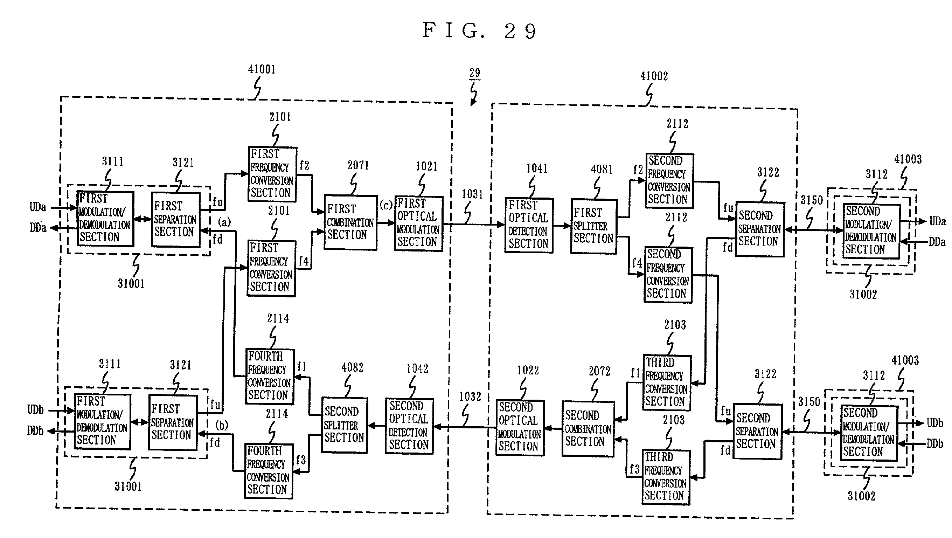

FIG. 29 is a block diagram illustrating the structure of a transmission apparatus according to the twenty-ninth embodiment of the present invention. The transmission apparatus according to the present embodiment provides a bi-directional communication service between two subscriber pairs. As shown in FIG. 29, the transmission apparatus 29 according to the present embodiment comprises two sets of components, each set including: a first transmission/reception circuit 31001, a second transmission/reception circuit 31002, a first frequency conversion section 2101, a second frequency conversion section 2112, a third frequency conversion section 2103, a fourth frequency conversion section 2114, a second separation section 3122, a bi-directional electrical transmission section 3150. The transmission apparatus 29 further comprises a first combination section 2071, a second combination section 2072, a first optical modulation section 1021, a second optical modulation section 1022, a first optical transmission section 1031, a second optical transmission section 1032, a first optical detection section 1041, a second optical detection section 1042, a first splitter section 4081, and a second splitter section 4082. Each first transmission/reception circuit 31001 includes a first modulation/demodulation section 3111 and a first separation section 3121. Each second transmission/reception circuit 31002 includes a second modulation/demodulation section 3112. The two first transmission/reception circuits 31001, the two first frequency conversion sections 2101, the two fourth frequency conversion sections 2114, the first combination section 2071, the second splitter section 4082, the first optical modulation section 1021, and the second optical detection section 1042 constitute an optical transmission/reception installation 41001. The first optical detection section 1041, the second optical modulation section 1022, the first splitter section 4081, the second combination section 2072, the two second frequency conversion sections 2112, the two third frequency conversion sections 2103, and the two second separation sections 3122 constitute an optical terminal device 41002. Each second transmission/reception circuit 31002 constitutes a subscriber terminal 41003.

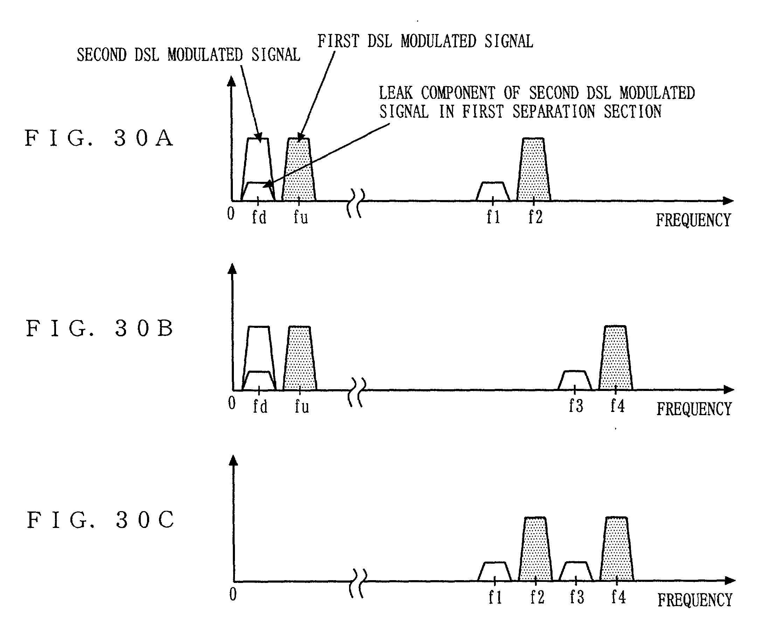

The transmission apparatus 29 shown in FIG. 29 operates in the following manner. In the following description, the first digital data UDa and UDb shown in FIG. 29 will be collectively referred to as "first digital data UD", and the second digital data DDa and DDb will be collectively referred to as "second digital data DD". FIGS. 30A, 30B, and 30C are schematic diagrams showing frequency allocation of the frequency bands of transmission signals from the respective components. As many first transmission/reception circuits 30001 and second transmission/reception circuits 30002 are to be provided as there are subscriber pairs. The first modulation/demodulation section 3111 in each first transmission/reception circuit 31001 converts first digital data UD to be transmitted to a corresponding second transmission/reception circuit 31002 into a first DSL modulated signal spanning a first base frequency band (fu), and outputs it to the first separation section 3121. Moreover, the first modulation/demodulation section 3111 reconverts the second DSL modulated signal spanning a second base frequency band (fd) outputted from the first separation section 3121 to reproduce second digital data DD which has been transmitted from the corresponding second transmission/reception circuit 31002. Each first separation section 3121 outputs the first DSL modulated signal outputted from the associated first modulation/demodulation section 3111 to the associated first frequency conversion section 2101, and outputs the second DSL modulated signal outputted from the associated fourth frequency conversion section 2114 to the associated first modulation/demodulation section 3111.

The first frequency conversion sections 2101, which are provided in plurality corresponding to the first transmission/reception circuits 31001, convert the first DSL modulated signals outputted from the respective first transmission/reception circuits 31001 into signals spanning respectively different predetermined frequency bands, as shown in FIGS. 30A and 30B (denoted as "f2" and "f4"), for example. The first combination section 2071 frequency-division-multiplexes signals outputted from the first frequency conversion sections 2101, and outputs a first FDM signal. The first optical modulation section 1021 converts the first FDM signal outputted from the first combination section 2071 into a first optical signal, which is sent onto the first optical transmission section 1031. The first optical detection section 1041 reconverts the first optical signal which has been transmitted over the first optical transmission section 1031 into the first FDM signal, which is an electrical signal. The first splitter section 4081 subjects the first FDM signal outputted from the first optical detection section 1041 to frequency separation so as to separately output signals spanning respectively different frequency bands.

Each of the second frequency conversion sections 2112, which are provided respectively corresponding to the signals separately outputted from the first splitter section 4081, converts the signal into a first DSL modulated signal spanning the first base frequency band (fu). The second separation sections 3122 are provided respectively corresponding to the first DSL modulated signals outputted from the respective second frequency conversion sections 2112. Each second separation section 3122 sends the first DSL modulated signal onto the associated bi-directional electrical transmission section 3150, and outputs the second DSL modulated signal which has been transmitted over the bi-directional electrical transmission section 3150 to the associated third frequency conversion section 2103. The second modulation/demodulation section 3112 included in each second transmission/reception circuit 31002 demodulates the first DSL modulated signal which has been transmitted over the associated bi-directional electrical transmission section 3150 to reproduce the first digital data UD transmitted from the corresponding first transmission/reception circuit 31001. Moreover, the second modulation/demodulation section 3112 converts the second digital data DD to be transmitted to the first transmission/reception circuit 31001 into the second DSL modulated signal spanning the second base frequency band (fd), and sends it onto the bi-directional electrical transmission section 3150.

The third frequency conversion sections 2103, which are provided in plurality corresponding to the second separation sections 3122, convert the second DSL modulated signals outputted from the respective second separation sections 3122 into signals spanning respectively different predetermined frequency bands (denoted as "f1 and "f3" in FIGS. 30A and 30B). The second combination section 2072 frequency-division-multiplexes the signals outputted from the third frequency conversion sections 2103, and outputs a second FDM signal. The second optical modulation section 1022 converts the second FDM signal outputted from the second combination section 2072 into a second optical signal, and sends it onto the second optical transmission section 1032. The second optical detection section 1042 reconverts the second optical signal which has been transmitted over the second optical transmission section 1032 into the second FDM signal, which is an electrical signal. From the second FDM signal outputted from the second optical detection section 1042, the second splitter section 4082 separately outputs the signals spanning the respectively different frequency bands, and outputs them to the corresponding fourth frequency conversion sections 2114. Each of the fourth frequency conversion sections 2114, which are provided respectively corresponding to the signals separately outputted from the second splitter section 4082, converts either one of the signals separated by the second splitter section 4082 into a second DSL modulated signal spanning the second base frequency band (fd).

Referring to FIGS. 30A, 30B, and 30C, the frequency allocation of the transmission signals in the transmission apparatus 29 will be described in more detail. The first digital data UD is transmitted based on the following principle. The plurality of first modulation/demodulation sections 3111, all of which have the same construction, each generate a first DSL modulated signal spanning the first base frequency band (fu). The first frequency conversion sections 2101 are provided in plurality corresponding to the first modulation/demodulation sections 3111. The two first frequency conversion sections 2101 each convert the first DSL modulated signals outputted from the two first separation sections 3121 into signals spanning respectively different frequency bands (f2, f4). The first combination section 2071 multiplexes the signals which have been subjected to frequency conversion by the first frequency conversion sections 2101, and outputs a first FDM signal. From the first FDM signal outputted from the first optical detection section 1041, the first splitter section 4081 separately outputs signals spanning respectively different frequency bands (f2, f4). Each of the second frequency conversion sections 2112, which are provided respectively corresponding to the signals which resulted from the frequency separation in the first splitter section 4081, converts either one of the separated signals to a signal spanning the first base frequency band (fu), and outputs it to the associated second modulation/demodulation section 3112 via the associated second separation section 3122 and the associated bi-directional electrical transmission section 3150.

The second digital data DD is transmitted based on the following principle. The plurality of second modulation/demodulation sections 3112, all of which have the same construction, each generate a second DSL modulated signal spanning the second base frequency band (fd). The third frequency conversion sections 2103 are provided in plurality corresponding to the second modulation/demodulation sections 3112. The two third frequency conversion sections 2103 each convert the second DSL modulated signal outputted from the two second separation sections 3122 via the bi-directional electrical transmission sections 3150 into signals spanning respectively different frequency bands (f1, f3). The second combination section 2072 multiplexes the signals which have been subjected to frequency conversion by the third frequency conversion section 2103, and outputs a second FDM signal. From the second FDM signal outputted from the second optical detection section 1042, the second splitter section 4082 separately outputs signals spanning respectively different frequency bands (f1, f3). Each of the fourth frequency conversion sections 2114, which are provided respectively corresponding to the signals which resulted from the frequency separation in the second splitter section 4082, converts either one of the separated signals to a signal spanning the second base frequency band (fd), and outputs it to the associated first modulation/demodulation section 3111 via the first separation section 3121.

As shown in FIG. 30A and FIG. 30B, the first DSL modulated signal and the second DSL modulated signal which are transmitted between a first transmission/reception circuit 31001 and a second transmission/reception circuit 31002 corresponding to one subscriber pair are converted into respectively different frequency bands (f1 and f2, or f3 and f4) and then multiplexed. It is conceivable that, for reasons associated with the frequency separation performance of the first separation section 3121 (or the second separation section 3122), a leak (i.e., cross-talk) component of the second DSL modulated signal (or the first DSL modulated signal) outputted from the fourth frequency conversion section 2114 (or the second frequency conversion section 2112) may be mixed in the first DSL modulated signal (or the second DSL modulated signal) which is inputted to the first frequency conversion section 2101 (or the third frequency conversion section 2103). Even in such cases, the transmission quality of the first DSL modulated signal or the second DSL modulated signal) is not degraded.

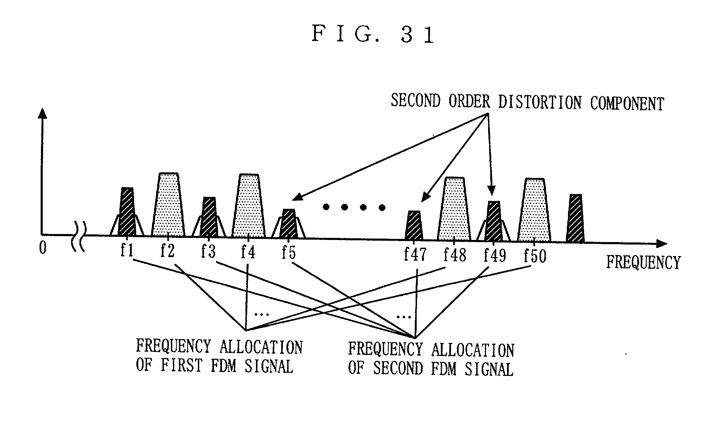

As shown in FIG. 30C, the first DSL modulated signal and the second DSL modulated signal, which are optically transmitted between the first transmission/reception circuit 31001 and the second transmission/reception circuit 31002 corresponding to a plurality of subscriber pairs, are converted into signals spanning respectively different but adjoining frequency bands, and then multiplexed. In other words, when in the form of optically transmitted signals, the first DSL modulated signals and the second DSL modulated signals alternate on the frequency axis. As a result, as shown in FIG. 31, a majority of the non-linear second-order distortions which may occur in the transmission process of the first FDM signal, i.e., the group of frequency-converted signals (f2, f4, ..., f48, f50) of the first DSL modulated signals lie in the frequency bands (f1, f3, ..., f47, f49) corresponding to the second FDM signal, so that they do not substantially undermine the transmission quality of the first DSL modulated signals. Similarly, a majority of the non-linear second-order distortions which may occur in the transmission process of the second FDM signal, i.e., the group of frequency-converted signals (f1, f3, ..., f47, f49) of the second DSL modulated signal lie in the frequency bands (f2, f4, ..., f48, f50) corresponding to the first FDM signal, so that they do not substantially undermine the transmission quality of the second DSL modulated signal.

In accordance with the above-described transmission apparatus, a plurality of bi-directional transmission signals outputted from transmission/reception circuits respectively corresponding to a plurality of subscriber pairs are converted into signals spanning respectively different frequency bands, and are transmitted as one FDM signal. As a result, the number of optical transmission lines can be reduced. Thus, a low-cost bi-directional transmission apparatus can be provided even in the case where there is a large number of subscriber pairs. Moreover, even if cross-talk between bi-directional signals and/or transmission distortion occurs for reasons associated with the characteristics of the circuitry and devices composing the apparatus, substantial deterioration in the transmission quality does not occur. Thus, a high-quality bi-directional transmission apparatus can be provided.

### (thirtieth embodiment)

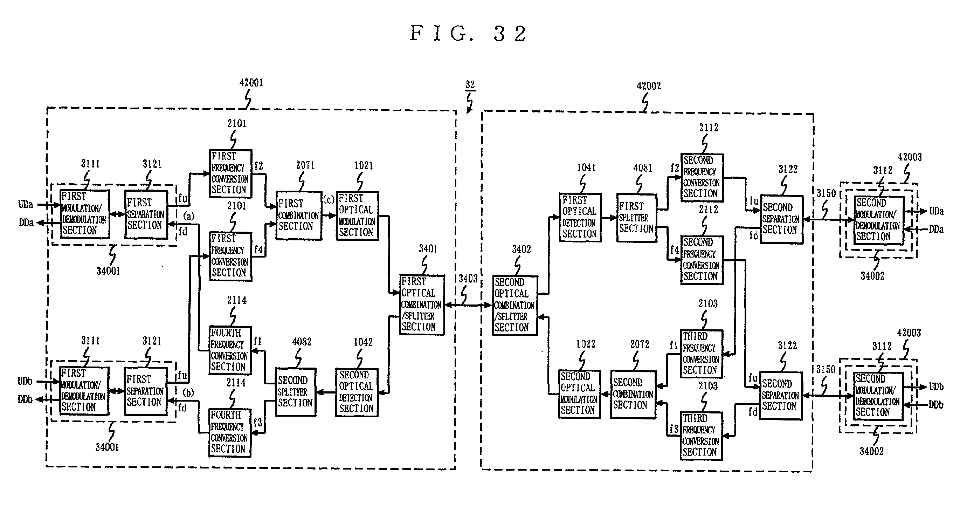

FIG. 32 is a block diagram illustrating the structure of a transmission apparatus according to the thirtieth embodiment of the present invention. The transmission apparatus according to the present embodiment provides a bi-directional communication service between two subscriber pairs. As shown in FIG. 32, the transmission apparatus 32 according to the present embodiment comprises two sets of components, each set including: a first transmission/reception circuit 34001, a second transmission/reception circuit 34002, a first frequency conversion section 2101, a second frequency conversion section 2112, a third frequency conversion section 2103, a fourth frequency conversion section 2114, a second separation section 3122, and a bi-directional electrical transmission section 31502. The transmission apparatus 32 further comprises a first combination section 2071, a second combination section 2072, a first optical modulation section 1021, a second optical modulation section 1022, a first optical detection section 1041, a second optical detection section 1042, a first splitter section 4081, a second splitter section 4082, a first optical combination/splitter section 3401, a second optical combination/splitter section 3402, and a bi-directional optical transmission section 3403. Each first transmission/reception circuit 34001 includes a first modulation/demodulation section 3111 and a first separation section 3121. Each second transmission/reception circuit 34002 includes a second modulation/demodulation section 3112. The two first transmission/reception circuits 34001, the two first frequency conversion sections 2101, the two fourth frequency conversion sections 2114, the first combination section 2071, the second splitter section 4082, the first optical modulation section 1021, the second optical detection section 1042, and the first optical combination/splitter section 3401 constitute an optical transmission/reception installation 42001. The second optical combination/splitter section 3402, the first optical detection section 1041, the second optical modulation section 1022, the first splitter section 4081, the second combination section 2072, the two second frequency conversion sections 2112, the two third frequency conversion sections 2103, and the two second separation sections 3122 constitute an optical terminal device 42002. Each second transmission/reception circuit 34002 constitutes a subscriber terminal 42003.

The present embodiment differs from the twenty-ninth embodiment in that the first optical combination/splitter section 3401, the second optical combination/splitter section 3402, and the bi-directional optical transmission section 3403 are comprised instead of a first optical transmission section 1031 and a second optical transmission section 1032. Therefore, any component elements which function in similar manners to their counterparts in the twenty-ninth embodiment are denoted by like numerals, with the descriptions thereof omitted. The differences over the twenty-ninth embodiment will mainly be described below.

The first optical combination/splitter section 3401 sends a first optical signal outputted from the first optical modulation section 1021 onto the bi-directional optical transmission section 3403, and outputs a second optical signal which has been outputted from the second optical modulation section 1022 and transmitted over the bi-directional optical transmission section 3403 to the second optical detection section 1042. The second optical combination/splitter section 3402 sends the second optical signal outputted from the second optical modulation section 1022 onto the bi-directional optical transmission section 3403, and outputs the first optical signal which has been outputted from the first optical modulation section 1021 and transmitted over the bi-directional optical transmission section 3403 to the first optical detection section 1041.

Thus, without employing dedicated optical transmission lines for the two optical signals which are transmitted in a bi-directional manner, the above-described transmission apparatus direction-multiplexes both signals onto a single optical fiber. As a result, a bi-directional transmission apparatus can be provided based on a simpler construction.

While the invention has been described in detail, the foregoing description is in all aspects illustrative and not restrictive. It is understood that numerous other modifications and variations can be devised without departing from the scope of the invention.

## Claims

1. A transmission apparatus (1) for providing a DSL (Digital Subscriber Line) service, comprising:
a DSL modulation section (101) for generating a DSL modulated signal based on an inputted digital data signal;
an optical modulation section (102) for converting the DSL modulated signal outputted from the DSL modulation section into an optical signal;
an optical transmission section (103) for transmitting the optical signal outputted from the optical modulation section;
an optical detection section (104) for reconverting the optical signal transmitted over the optical transmission section into the DSL modulated signal, the DSL modulated signal being an electrical signal;
an electrical transmission section (105) for transmitting the DSL modulated signal outputted from the optical detection section; and
a DSL demodulation section (106) for demodulating the DSL modulated signal transmitted over the electrical transmission section to reproduce the digital data signal.

2. A transmission apparatus (2) for providing a DSL service, comprising:
a modulation section (201) including a DSL modulation section (101) for generating a DSL modulated signal based on an inputted digital data signal, and a first frequency conversion section (210) for subjecting the DSL modulated signal outputted from the DSL modulation section to frequency conversion so as to span a predetermined first frequency band;
an optical modulation section (102) for converting a signal outputted from the modulation section into an optical signal;
an optical transmission section (103) for transmitting the optical signal outputted from the optical modulation section;
an optical detection section (104) for reconverting the optical signal transmitted over the optical transmission section into an electrical signal;
an electrical transmission section (105) for transmitting the electrical signal outputted from the optical detection section; and
a demodulation section (206) including a second frequency conversion section (211) for subjecting the electrical signal transmitted over the electrical transmission section to a frequency conversion so as to span a predetermined second frequency band, and a DSL demodulation section (106) for demodulating a signal outputted from the second frequency conversion section to reproduce the digital data signal.

3. A transmission apparatus (3) for providing a DSL service, comprising:
a modulation section (201) including a DSL modulation section (101) for generating a DSL modulated signal based on an inputted digital data signal, and a first frequency conversion section (210) for subjecting the DSL modulated signal outputted from the DSL modulation section to frequency conversion so as to span a predetermined first frequency band;
an optical modulation section (102) for converting a signal outputted from the modulation section into an optical signal;
an optical transmission section (103) for transmitting the optical signal outputted from the optical modulation section;
an optical detection section (104) for reconverting the optical signal transmitted over the optical transmission section into an electrical signal;
a second frequency conversion section (811) for subjecting a signal outputted from the optical detection section to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

4. A transmission apparatus (4) for providing a DSL service, comprising:
M modulation sections (201) provided respectively corresponding to M digital data signals (where M is an integer equal to or greater than two), each including a DSL modulation section (101) for generating a DSL modulated signal based on the respective inputted digital data signal, and a first frequency conversion section (210) for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM (Frequency Division Multiplexed) signal;
an optical modulation section (102) for converting the FDM signal outputted from the combination section into an optical signal;
an optical transmission section (103) for transmitting the optical signal outputted from the optical modulation section;
an optical detection section (104) for reconverting the optical signal transmitted over the optical transmission section into the FDM signal, the FDM signal being an electrical signal;
an electrical transmission section (105) for transmitting the FDM signal outputted from the optical detection section; and
a demodulation section (206) including a second frequency conversion section (211) for selecting one of the M signals contained in the FDM signal transmitted over the electrical transmission section and subjecting the selected signal to frequency conversion so as to span a predetermined second frequency band, and a DSL demodulation section (106) for demodulating a signal outputted from the second frequency conversion section to reproduce the digital data signal.

5. A transmission apparatus (5) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
an optical modulation section (102) for converting the FDM signal outputted from the combination section into an optical signal;
an optical transmission section (103) for transmitting the optical signal outputted from the optical modulation section;
an optical detection section (104) for reconverting the optical signal transmitted over the optical transmission section into the FDM signal, the FDM signal being an electrical signal;
a second frequency conversion section (811) for selecting one of the M signals contained in the FDM signal outputted from the optical detection section, and subjecting the selected signal to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

6. A transmission apparatus (6) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
an optical modulation section (102) for converting the FDM signal outputted from the combination section into an optical signal;
an optical transmission section (103) for transmitting the optical signal outputted from the optical modulation section;
an optical detection section (104) for reconverting the optical signal transmitted over the optical transmission section into the FDM signal, the FDM signal being an electrical signal;
a branching section (308) for branching the FDM signal outputted from the optical detection section into N FDM signals (where N is an integer equal to or greater than two);
N electrical transmission sections (105) provided respectively corresponding to the N FDM signals outputted from the branching section for transmitting the respective branched-out FDM signals;
N demodulation sections (206) provided respectively corresponding to the N electrical transmission sections, each including a second frequency conversion section for selecting one of the M signals contained in the FDM signal transmitted over the respective electrical transmission section and subjecting the selected signal to frequency conversion so as to span a predetermined second frequency band, and a DSL demodulation section for demodulating a signal outputted from the second frequency conversion section to reproduce the digital data signal.

7. A transmission apparatus (7) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
an optical modulation section (102) for converting the FDM signal outputted from the combination section into an optical signal;
an optical transmission section (103) for transmitting the optical signal outputted from the optical modulation section;
an optical detection section (104) for reconverting the optical signal transmitted over the optical transmission section into the FDM signal, the FDM signal being an electrical signal;
a splitter section (408) for extracting L different signals (where L is an integer equal to or greater than two and equal to or smaller than M) from among the M signals contained in the FDM signal outputted from the optical detection section, the L different signals being separately outputted;
L electrical transmission sections (105) provided respectively corresponding to the L signals outputted from the splitter section for transmitting the respective L signals;
L demodulation sections provided respectively corresponding to the L electrical transmission sections, each including a second frequency conversion section for subjecting the signal transmitted over the respective electrical transmission section to frequency conversion so as to span a predetermined second frequency band, and a DSL demodulation section for demodulating a signal outputted from the second frequency conversion section to reproduce the digital data signal.

8. A transmission apparatus (8) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
an optical modulation section (102) for converting the FDM signal outputted from the combination section into an optical signal;
an optical transmission section (103) for transmitting the optical signal outputted from the optical modulation section;
an optical detection section (104) for reconverting the optical signal transmitted over the optical transmission section into the FDM signal, the FDM signal being an electrical signal;
a splitter section (408) for extracting L different signals (where L is an integer equal to or greater than two and equal to or smaller than M) from among the M signals contained in the FDM signal outputted from the optical detection section, the L different signals being separately outputted;
L second frequency conversion sections (811) provided respectively corresponding to the L signals outputted from the splitter section, wherein each second frequency conversion section subjects the respective signal to frequency conversion so as to span a predetermined second frequency band;
L electrical transmission sections (105) provided respectively corresponding to the L second frequency conversion sections for transmitting the respective L signals outputted therefrom; and
L DSL demodulation sections (106) provided respectively corresponding to the L electrical transmission sections for demodulating the respective signals transmitted over the respective electrical transmission sections to reproduce the digital data signals.

9. The transmission apparatus (6) according to claim 6, wherein M is equal to N.

10. The transmission apparatus (7) according to claim 7, wherein M is equal to L.

11. The transmission apparatus (8) according to claim 8, wherein M is equal to L.

12. The transmission apparatus (2) according to claim 2, wherein the second frequency band is a frequency band spanned by the DSL modulated signal.

13. The transmission apparatus (3) according to claim 3, wherein the second frequency band is a frequency band spanned by the DSL modulated signal.

14. The transmission apparatus (8) according to claim 8, wherein the second frequency band is a frequency band spanned by each DSL modulated signal.

15. The transmission apparatus (1) according to claim 1, wherein the DSL modulated signal is one selected from the group consisting of: a signal modulated by DMT (Discrete Multi Tone)modulation technique, a signal modulated by CAP (Carrierless Amplitude/Phase modulation) modulation technique, and a signal modulated by QAM (Quadrature Amplitude Modulation) modulation technique.

16. The transmission apparatus (3) according to claim 3, wherein the DSL modulated signal is one selected from the group consisting of: a signal modulated by DMT modulation technique, a signal modulated by CAP modulation technique, and a signal modulated by QAM modulation technique.

17. The transmission apparatus (8) according to claim 8, wherein each DSL modulated signal is one selected from the group consisting of: a signal modulated by DMT modulation technique, a signal modulated by CAP modulation technique, and a signal modulated by QAM modulation technique.

18. The transmission apparatus (1) according to claim 1, wherein the electrical transmission section comprises a twisted-pair cable or a coaxial cable.

19. The transmission apparatus (3) according to claim 3, wherein the electrical transmission section comprises a twisted-pair cable or a coaxial cable.

20. The transmission apparatus (8) according to claim 8, wherein each electrical transmission section comprises a twisted-pair cable or a coaxial cable.

21. A transmission apparatus (9) for providing a DSL service, comprising:
a DSL modulation section (101) for generating a DSL modulated signal based on an inputted digital data signal;
a first FM modulation section (1301) for generating a frequency-modulated signal based on the DSL modulated signal outputted from the DSL modulation section;
an optical modulation section (102) for converting the frequency-modulated signal outputted from the first FM modulation section into an optical signal;
an optical transmission section (103) for transmitting the optical signal outputted from the optical modulation section;
an optical detection section (104) for reconverting the optical signal transmitted over the optical transmission section into the frequency-modulated signal, the frequency-modulated signal being an electrical signal;
a first FM demodulation section (1302) for demodulating the frequency-modulated signal outputted from the optical detection section to reproduce the DSL modulated signal;
an electrical transmission section (105) for transmitting the DSL modulated signal outputted from the first FM demodulation section; and
a DSL demodulation section (106) for demodulating the DSL modulated signal transmitted over the electrical transmission section to reproduce the digital data signal.

22. A transmission apparatus (10) for providing a DSL service, comprising:
a modulation section (201) including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band;
a first FM modulation section (1301) for generating a frequency-modulated signal based on a signal outputted from the modulation section;
an optical modulation section (102) for converting the frequency-modulated signal outputted from the first FM modulation section into an optical signal;
an optical transmission section (103) for transmitting the optical signal outputted from the optical modulation section;
an optical detection section (104) for reconverting the optical signal transmitted over the optical transmission section into the frequency-modulated signal, the frequency-modulated signal being an electrical signal;
a first FM demodulation section (1302) for demodulating the frequency-modulated signal outputted from the optical detection section to reproduce the signal outputted from the modulation section;
a second frequency conversion section (811) for subjecting a signal outputted from the first FM demodulation section to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

23. A transmission apparatus (12) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a first combination section (207) for multiplexing the M signals outputted from the M modulation sections and outputting an FDM signal;
a first FM modulation section (1301) for generating a frequency-modulated signal based on the FDM signal outputted from the first combination section;
an optical modulation section (102) for converting the frequency-modulated signal outpurred from the first FM modulation section into an optical signal;
an optical transmission section (103) for transmitting the optical signal outputted from the optical modulation section;
an optical detection section (104) for reconverting the optical signal transmitted over the optical transmission section into the frequency-modulated signal, the frequency-modulated signal being an electrical signal;
a first FM demodulation section (1302) for demodulating the frequency-modulated signal outputted from the optical detection section to reproduce the FDM signal;
a second frequency conversion section (811) for selecting one of the M signals contained in the FDM signal outputted from the first FM demodulation section and subjecting the selected signal to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

24. A transmission apparatus (13) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a first combination section (207) for multiplexing the M signals outputted from the M modulation sections and outputting an FDM signal;
a first FM modulation section (1301) for generating a frequency-modulated signal based on the FDM signal outputted from the first combination section;
an optical modulation section (102) for converting the frequency-modulated signal outputted from the first FM modulation section into an optical signal;
an optical transmission section (103) for transmitting the optical signal outputted from the optical modulation section;
an optical detection section (104) for reconverting the optical signal transmitted over the optical transmission section into the frequency-modulated signal, the frequency-modulated signal being an electrical signal;
a first FM demodulation section (1302) for demodulating the frequency-modulated signal outputted from the optical detection section to reproduce the FDM signal;
a splitter section (408) for extracting L different signals (where L is an integer equal to or greater than two and equal to or smaller than M) from among the M signals contained in the FDM signal outputted from the first FM demodulation section, the L different signals being separately outputted;
L second frequency conversion sections (811) provided respectively corresponding to the L signals outputted from the splitter section, wherein each second frequency conversion section subjects the respective signal to frequency conversion so as to span a predetermined second frequency band;
L electrical transmission sections (105) provided respectively corresponding to the L second frequency conversion sections for transmitting the respective L signals outputted therefrom; and
L DSL demodulation sections (106) provided respectively corresponding to the L electrical transmission sections for demodulating the respective signals transmitted over the respective electrical transmission sections to reproduce the digital data signals.

25. A transmission apparatus (14) for providing a DSL service, comprising:
a DSL modulation section (101) for generating a DSL modulated signal based on an inputted digital data signal;
an optical modulation section (102) for converting the DSL modulated signal outputted from the DSL modulation section into an optical signal;
an optical transmission section (103) for transmitting the optical signal outputted from the optical modulation section;
an optical distribution section (908) for distributing the optical signal transmitted over the optical transmission section as a plurality of optical signals;
a plurality of optical detection sections (104) provided respectively corresponding to the plurality of optical signals outputted from the optical distribution section for reconverting each of the distributed optical signals into the DSL modulated signal, the DSL modulated signal being an electrical signal;
a plurality of electrical transmission sections (105) provided respectively corresponding to the plurality of optical detection sections for transmitting the respective DSL modulated signals outputted therefrom; and
a plurality of DSL demodulation sections (106) provided respectively corresponding to the plurality of electrical transmission sections for demodulating the respective DSL modulated signals transmitted over the respective electrical transmission sections to reproduce the digital data signal.

26. A transmission apparatus (15) for providing a DSL service, comprising:
a modulation section (201) including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band;
an optical modulation section (102) for converting a signal outputted from the modulation section into an optical signal;
an optical transmission section (103) for transmitting the optical signal outputted from the optical modulation section;
an optical distribution section (908) for distributing the optical signal transmitted over the optical transmission section as a plurality of optical signals;
a plurality of optical detection sections (104) provided respectively corresponding to the plurality of optical signals outputted from the optical distribution section for reconverting each of the distributed optical signals into an electrical signal;
a plurality of second frequency conversion sections (811) provided respectively corresponding to the plurality of optical detection sections, wherein each second frequency conversion section subjects the signal outputted from the respective optical detection section to frequency conversion so as to span a predetermined second frequency band;
a plurality of electrical transmission sections (105) provided respectively corresponding to the plurality of second frequency conversion sections for transmitting the respective signals outputted therefrom; and
a plurality of DSL demodulation sections (106) provided respectively corresponding to the plurality of electrical transmission sections for demodulating the respective signals transmitted over the respective electrical transmission sections to reproduce the digital data signal.

27. A transmission apparatus (17) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
an optical modulation section (102) for converting the FDM signal outputted from the combination section into an optical signal;
an optical transmission section (103) for transmitting the optical signal outputted from the optical modulation section;
an optical distribution section (908) for distributing the optical signal transmitted over the optical transmission section as a plurality of optical signals;
a plurality of optical detection sections (104) provided respectively corresponding to the plurality of optical signals outputted from the optical distribution section for reconverting each of the distributed optical signals into the FDM signal, the FDM signal being an electrical signal;
a plurality of second frequency conversion sections (811) provided respectively corresponding to the plurality of optical detection sections, wherein each second frequency conversion section selects one of the M signals contained in the FDM signal outputted from the respective optical detection section, and subjects the selected signal to frequency conversion so as to span a predetermined second frequency band;
a plurality of electrical transmission sections (105) provided respectively corresponding to the plurality of second frequency conversion sections for transmitting the respective signals outputted therefrom;
a plurality of DSL demodulation sections (106) provided respectively corresponding to the plurality of electrical transmission sections for demodulating the respective signals transmitted over the respective electrical transmission sections to reproduce the digital data signals.

28. The transmission apparatus (17) according to claim 27, wherein the respective optical detection sections, the respective second frequency conversion sections, the respective electrical transmission sections, and the respective DSL demodulation sections select to process signals spanning respectively different frequency bands from among the M signals contained in the FDM signal resulting from the reconversion by the optical detection section.

29. A transmission apparatus (18) for providing a DSL service, comprising:
a DSL modulation section (101) for generating a DSL modulated signal based on an inputted digital data signal;
a frequency division multiplex section (1112) for multiplexing a predetermined second electrical signal onto the DSL modulated signal outputted from the DSL modulation section;
an optical modulation section (102) for converting a signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the DSL modulated signal from the second electrical signal in the electrical signal outputted from the optical detection section;
an electrical transmission section (105) for transmitting the DSL modulated signal outputted from the frequency separation section;
a DSL demodulation section (106) for demodulating the DSL modulated signal transmitted over the electrical transmission section to reproduce the digital data signal.

30. A transmission apparatus (20) for providing a DSL service, comprising:
a modulation section (201) including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band;
a frequency division multiplex section (1112) for multiplexing a predetermined second electrical signal onto a signal outputted from the modulation section;
an optical modulation section (102) for converting the signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating a signal corresponding to the outputted signal from the modulation section from the second electrical signal in the electrical signal outputted from the optical detection section;
a second frequency conversion section (811) for subjecting the signal corresponding to the outputted signal from the modulation section separated by the frequency separation section to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

31. A transmission apparatus (21) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination/multiplex section (1807) for multiplexing the M signals outputted from the M modulation sections to generate an FDM signal, and multiplexing a predetermined second electrical signal onto the FDM signal;
an optical modulation section (102) for converting a signal outputted from the combination/multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the FDM signal from the second electrical signal in the electrical signal outputted from the optical detection section;
a second frequency conversion section (811) for selecting one of the M signals contained in the FDM signal outputted from the frequency separation section, and subjecting the selected signal to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

32. A transmission apparatus (22) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination/multiplex section (1807) for multiplexing the M signals outputted from the M modulation sections to generate an FDM signal, and multiplexing a predetermined second electrical signal onto the FDM signal;
an optical modulation section (102) for converting a signal outputted from the combination/multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the FDM signal from the second electrical signal in the electrical signal outputted from the optical detection section;
a splitter section (408) for extracting L different signals (where L is an integer equal to or greater than two and equal to or smaller than M) from among the M signals contained in the FDM signal outputted from the frequency separation section, the L different signals being separately outputted;
L second frequency conversion sections (811) provided respectively corresponding to the L signals outputted from the splitter section, wherein each second frequency conversion section subjects the respective signal to frequency conversion so as to span a predetermined second frequency band;
L electrical transmission sections (105) provided respectively corresponding to the L second frequency conversion sections for transmitting the respective L signals outputted therefrom; and
L DSL demodulation sections (106) provided respectively corresponding to the L electrical transmission sections for demodulating the respective signals transmitted over the respective electrical transmission sections to reproduce the digital data signals.

33. The transmission apparatus (20) according to claim 30, wherein the second electrical signal is a base-band digital data signal.

34. The transmission apparatus (22) according to claim 32, wherein the second electrical signal is a base-band digital data signal.

35. The transmission apparatus (20) according to claim 30, wherein the second electrical signal is an audio signal.

36. The transmission apparatus (22) according to claim 32, wherein the second electrical signal is an audio signal.

37. A transmission apparatus (23) for providing a DSL service, comprising:
a DSL modulation section (101) for generating a DSL modulated signal based on an inputted digital data signal;
a first FM modulation section (1301) for generating a frequency-modulated signal based on the DSL modulated signal outputted from the DSL modulation section;
a frequency division multiplex section (1112) for multiplexing a predetermined second electrical signal onto the frequency-modulated signal outputted from the first FM modulation section;
an optical modulation section (102) for converting a signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the frequency-modulated signal from the second electrical signal in the electrical signal outputted from the optical detection section;
a first FM demodulation section (1302) for demodulating the frequency-modulated signal outputted from the frequency separation section to reproduce the DSL modulated signal, the DSL modulated signal being an electrical signal;
an electrical transmission section (105) for transmitting the DSL modulated signal outputted from the first FM demodulation section; and
a DSL demodulation section (106) for demodulating the DSL modulated signal transmitted over the electrical transmission section to reproduce the digital data signal.

38. A transmission apparatus (24) for providing a DSL service, comprising:
a modulation section (201) including a DSL modulation section for generating a DSL modulated signal based on an inputted digital data signal, and a first frequency conversion section for subjecting the DSL modulated signal outputted from the DSL modulation section to frequency conversion so as to span a predetermined first frequency band;
a first FM modulation section (1301) for generating a frequency-modulated signal based on a signal outputted from the modulation section;
a frequency division multiplex section (1112) for multiplexing a predetermined second electrical signal onto the frequency-modulated signal outputted from the first FM modulation section;
an optical modulation section (102) for converting a signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the frequency-modulated signal from the second electrical signal in the electrical signal outputted from the optical detection section;
a first FM demodulation section (1302) for demodulating the frequency-modulated signal outputted from the frequency separation section to reproduce a signal corresponding to the outputted signal from the modulation section;
a second frequency conversion section (811) for subjecting a signal outputted from the first FM demodulation section to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

39. A transmission apparatus (25) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
a first FM modulation section (1301) for generating a frequency-modulated signal based on the FDM signal outputted from the combination section;
a frequency division multiplex section (1112) for multiplexing a predetermined second electrical signal onto the frequency-modulated signal outputted from the first FM modulation section;
an optical modulation section (102) for converting a signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the frequency-modulated signal from the second electrical signal in the electrical signal outputted from the optical detection section;
a first FM demodulation section (1302) for demodulating the frequency-modulated signal outputted from the frequency separation section to reproduce the FDM signal;
a second frequency conversion section (811) for selecting one of the M signals contained in the FDM signal outputted from the first FM demodulation section and subjecting the selected signal to frequency conversion so as to span a predetermined second frequency band;
an electrical transmission section (105) for transmitting a signal outputted from the second frequency conversion section; and
a DSL demodulation section (106) for demodulating the signal transmitted over the electrical transmission section to reproduce the digital data signal.

40. A transmission apparatus (26) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
a combination section (207) for multiplexing the M signals outputted from the M modulation sections and outputting an FDM signal;
a first FM modulation section (1301) for generating a frequency-modulated signal based on the FDM signal outputted from the combination section;
a frequency division multiplex section (1112) for multiplexing a predetermined second electrical signal onto the frequency-modulated signal outputted from the first FM modulation section;
an optical modulation section (102) for converting a signal outputted from the frequency division multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the frequency-modulated signal from the second electrical signal in the electrical signal outputted from the optical detection section;
a first FM demodulation section (1302) for demodulating the frequency-modulated signal outputted from the frequency separation section to reproduce the FDM signal;
a splitter section (408) for extracting L different signals (where L is an integer equal to or greater than two and equal to or smaller than M) from among the M signals contained in the FDM signal outputted from the first FM demodulation section, the L different signals being separately outputted;
L second frequency conversion sections (811) provided respectively corresponding to the L signals outputted from the splitter section, wherein each second frequency conversion section subjects the respective signal to frequency conversion so as to span a predetermined second frequency band;
L electrical transmission sections (105) provided respectively corresponding to the L second frequency conversion sections for transmitting the respective L signals outputted therefrom; and
L DSL demodulation sections (106) provided respectively corresponding to the L electrical transmission sections for demodulating the respective signals transmitted over the respective electrical transmission sections to reproduce the digital data signals.

41. A transmission apparatus (27) for providing a DSL service, comprising:
M modulation sections (201) provided respectively corresponding to M digital data signals (where M is an integer equal to or greater than two), each including a DSL modulation section for generating a DSL modulated signal based on the respective inputted digital data signal, and a first frequency conversion section for subjecting the DSL modulated signal outputted from the DSL modulation section to frequency conversion so as to span a predetermined first frequency band, the M modulation sections generating M signals spanning respectively different first frequency bands;
an FDM section (1801) for multiplexing a plurality of second electrical signals;
a second FM modulation section (1802) for generating a frequency-modulated signal based on a signal outputted from the FDM section;
a combination/multiplex section (1807) for multiplexing the M signals outputted from the M modulation sections to generate an FDM signal, and multiplexing the frequency-modulated signal outputted from the second FM modulation section onto the FDM signal;
an optical modulation section (102) for converting a signal outputted from the combination/multiplex section into an optical signal;
an optical transmission section (103) for transmitting the optical signal outputted from the optical modulation section;
an optical detection section (104) for reconverting the optical signal transmitted over the optical transmission section into an electrical signal;
a frequency separation section (1613) for separating the FDM signal from the frequency-modulated signal in the electrical signal outputted from the optical detection section;
a second frequency conversion section (811) for selecting one of the M signals contained in the FDM signal outputted from the frequency separation section, and subjecting the selected signal to frequency conversion so as to span a predetermined second frequency band;
an electrical transmission section (105) for transmitting a signal outputted from the second frequency conversion section;
a DSL demodulation section (106) for demodulating the signal transmitted over the electrical transmission section to reproduce the digital data signals;
a second FM demodulation section (1803) for demodulating the frequency-modulated signal outputted from the frequency separation section to reproduce the signal outputted from the FDM section; and
an FDM separation section (1804) for subjecting a signal outputted from the second FM demodulation section to frequency separation to output the plurality of second electrical signals.

42. A transmission apparatus (28) for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices,
M first DSL modulation sections (1011) provided respectively corresponding to the M first communication devices, wherein each first DSL modulation section generates a first DSL modulated signal based on the first digital data signal outputted from the respective first communication device;
M first frequency conversion sections (2101) provided respectively corresponding to the M first DSL modulation sections for subjecting the respective first DSL modulated signals outputted from the respective first DSL modulation sections to frequency conversion so as to span respectively different predetermined first frequency bands;
a first combination section (2071) for multiplexing the M signals outputted from the M first frequency conversion sections and outputting a first FDM signal;
a first optical modulation section (1021) for converting the first FDM signal outputted from the first combination section into an optical signal;
a first optical transmission section (1031) for transmitting the optical signal outputted from the first optical modulation section;
a first optical detection section (1041) for reconverting the optical signal transmitted over the first optical transmission section into the first FDM signal, the first FDM signal being an electrical signal;
a first splitter section (4081) for separately outputting the M signals contained in the first FDM signal outputted from the first optical detection section;
M second frequency conversion sections (2112) provided respectively corresponding to the M signals outputted from the first splitter section, wherein each second frequency conversion section subjects the respective separated signal to frequency conversion so as to span a predetermined second frequency band;
M first electrical transmission sections (3051) provided respectively corresponding to the M second frequency conversion sections for transmitting the respective signals outputted from the respective second frequency conversion sections;
M first DSL demodulation sections (1061) provided respectively corresponding to the M first electrical transmission sections, wherein each first DSL demodulation section demodulates the signal transmitted over the respective first electrical transmission section to reproduce the first digital data signal for output to the corresponding second communication device;
M second DSL modulation sections (1012) provided respectively corresponding to the M second communication devices, wherein each second DSL modulation section generates a second DSL modulated signal based on the second digital data signal outputted from the respective second communication device;
M second electrical transmission sections (3052) provided respectively corresponding to the M second DSL modulation sections for transmitting the respective second DSL modulated signals outputted from the respective second DSL modulation sections;
M third frequency conversion sections (2103) provided respectively corresponding to the M second electrical transmission sections for subjecting the respective second DSL modulated signals transmitted over the respective second electrical transmission sections to frequency conversion so as to span respectively different predetermined third frequency bands;
a second combination section (2072) for multiplexing the M signals outputted from the M third frequency conversion sections and outputting a second FDM signal;
a second optical modulation section (1022) for converting the second FDM signal outputted from the second combination section into an optical signal;
a second optical transmission section (1032) for transmitting the optical signal outputted from the second optical modulation section;
a second optical detection section (1042) for reconverting the optical signal transmitted over the second optical transmission section into the second FDM signal, the second FDM signal being an electrical signal;
a second splitter section (4082) for separately outputting the M signals contained in the second FDM signal outputted from the second optical detection section;
M fourth frequency conversion sections (2114) provided respectively corresponding to the M signals outputted from the second splitter section, wherein each fourth frequency conversion section subjects the respective separated signal to frequency conversion so as to span a predetermined fourth frequency band; and
M second DSL demodulation sections (1062) provided respectively corresponding to the M fourth frequency conversion sections, wherein each second DSL demodulation section demodulates the signal outputted from the respective fourth frequency conversion section to reproduce the second digital data signal for output to the corresponding first communication device.

43. A transmission apparatus (29) for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices,
M first modulation/demodulation sections (3111) provided respectively corresponding to the M first communication devices, wherein each first modulation/demodulation section generates a first DSL modulated signal based on the first digital data signal outputted from the respective first communication device, and demodulates an inputted second DSL modulated signal to reproduce the respective second digital data signal for output to the corresponding first communication device;
M first separation sections (3121) provided respectively corresponding to the M first modulation/demodulation sections, where each first separation section outputs the first DSL modulated signal outputted from the respective first modulation/demodulation section, and outputs the respective inputted second DSL modulated signal to the corresponding first modulation/demodulation section;
M first frequency conversion sections (2101) provided respectively corresponding to the M first separation sections for subjecting the respective first DSL modulated signals outputted from the respective first separation sections to frequency conversion so as to span respectively different predetermined first frequency bands;
a first combination section (2071) for multiplexing the M signals outputted from the M first frequency conversion sections and outputting a first FDM signal;
a first optical modulation section (1021) for converting the first FDM signal outputted from the first combination section into an optical signal;
a first optical transmission section (1031) for transmitting the optical signal outputted from the first optical modulation section;
a first optical detection section (1041) for reconverting the optical signal transmitted over the first optical transmission section into the first FDM signal, the first FDM signal being an electrical signal;
a first splitter section (4081) for separately outputting the M signals contained in the first FDM signal outputted from the first optical detection section;
M second frequency conversion sections (2112) provided respectively corresponding to the M signals outputted from the first splitter section, wherein each second frequency conversion section subjects the respective separated signal to frequency conversion so as to span a predetermined second frequency band, thereby obtaining the respective first DSL modulated signal;
M bi-directional electrical transmission sections (3150) provided respectively corresponding to the M second communication devices;
M second separation sections (3122) provided respectively corresponding to the M second frequency conversion sections, wherein each second separation section transmits the first DSL modulated signal outputted from the respective second frequency conversion section to a corresponding one of the M bi-directional electrical transmission sections, and receives for output the second DSL modulated signal transmitted over the corresponding bi-directional electrical transmission section;
M second modulation/demodulation sections (3112) provided respectively corresponding to the M bi-directional electrical transmission sections, wherein each second modulation/demodulation section demodulates the first DSL modulated signal transmitted over the respective bi-directional electrical transmission section to reproduce the respective first digital data signal for output to the corresponding second communication device, and generates the second DSL modulated signal based on the second digital data signal outputted from the second communication device for output to the corresponding bi-directional electrical transmission section;
M third frequency conversion sections (2103) provided respectively corresponding to M second separation sections for subjecting the respective second DSL modulated signals outputted from the respective second separation sections to frequency conversion so as to span respectively different predetermined third frequency bands;
a second combination section (2072) for multiplexing the M signals outputted from the M third frequency conversion sections and outputting a second FDM signal;
a second optical modulation section (1022) for converting the second FDM signal outputted from the second combination section into an optical signal;
a second optical transmission section (1032) for transmitting the optical signal outputted from the second optical modulation section;
a second optical detection section (1042) for reconverting the optical signal transmitted over the second optical transmission section into the second FDM signal, the second FDM signal being an electrical signal;
a second splitter section (4082) for separately outputting the M signals contained in the second FDM signal outputted from the second optical detection section; and
M fourth frequency conversion sections (2114) provided respectively corresponding to the M signals outputted from the second splitter section, wherein each fourth frequency conversion section subjects the respective separated signal to frequency conversion so as to span a predetermined fourth frequency band, thereby obtaining the second DSL modulated signal for output to the corresponding first separation section.

44. A transmission apparatus (32) for realizing one-on-one bi-directional communications between M first communication devices and M second communication devices (where M is an integer equal to or greater than two) using a DSL service, wherein the transmission apparatus transmits a first digital data signal from one of the M first communication devices to a corresponding one of the M second communication devices and transmits a second digital data signal from one of the M second communication devices to a corresponding one of the M first communication devices,
M first modulation/demodulation sections (3111) provided respectively corresponding to the M first communication devices, wherein each first modulation/demodulation section generates a first DSL modulated signal based on the first digital data signal outputted from the respective first communication device, and demodulates an inputted second DSL modulated signal to reproduce the respective second digital data signal for output to the corresponding first communication device;
M first separation sections (3121) provided respectively corresponding to the M first modulation/demodulation sections, where each first separation section outputs the first DSL modulated signal outputted from the respective first modulation/demodulation section, and outputs the respective inputted second DSL modulated signal to the corresponding first modulation/demodulation section;
M first frequency conversion sections (2101) provided respectively corresponding to the M first separation sections for subjecting the respective first DSL modulated signals outputted from the respective first separation sections to frequency conversion so as to span respectively different predetermined first frequency bands;
a first combination section (2071) for multiplexing the M signals outputted from the M first frequency conversion sections and outputting a first FDM signal;
a first optical modulation section (1021) for converting the first FDM signal outputted from the first combination section into a first optical signal;
a bi-directional optical transmission section (3403) for transmitting an optical signal in a bi-directional manner;
a first optical combination/splitter section (3401) for transmitting the first optical signal outputted from the first optical modulation section to the bi-directional optical transmission section, and receiving and outputting a second optical signal transmitted over the bi-directional optical transmission section;
a second optical combination/splitter section (3402) for receiving and outputting the first optical signal transmitted over the bi-directional optical transmission section, and sending the inputted second optical signal onto the bi-directional optical transmission section,
a first optical detection section (1041) for reconverting the first optical signal outputted from the second optical combination/splitter section into the first FDM signal, the first FDM signal being an electrical signal;
a first splitter section (4081) for separately outputting the M signals contained in the first FDM signal outputted from the first optical detection section;
M second frequency conversion sections (2112) provided respectively corresponding to the M signals outputted from the first splitter section, wherein each second frequency conversion section subjects the respective separated signal to frequency conversion so as to span a predetermined second frequency band, thereby obtaining the respective first DSL modulated signal;
M bi-directional electrical transmission sections (3150) provided respectively corresponding to the M second communication devices;
M second separation sections (3122) provided respectively corresponding to the M second frequency conversion sections, wherein each second separation section transmits the first DSL modulated signal outputted from the respective second frequency conversion section to a corresponding one of the M bi-directional electrical transmission sections, and receives for output the second DSL modulated signal transmitted over the corresponding bi-directional electrical transmission section;
M second modulation/demodulation sections (3112) provided respectively corresponding to the M bi-directional electrical transmission sections, wherein each second modulation/demodulation section demodulates the first DSL modulated signal transmitted over the respective bi-directional electrical transmission section to reproduce the respective first digital data signal for output to the corresponding second communication device, and generates the second DSL modulated signal based on the second digital data signal outputted from the second communication device for output to the corresponding bi-directional electrical transmission section;
M third frequency conversion sections (2103) provided respectively corresponding to M second separation sections for subjecting the respective second DSL modulated signals outputted from the respective second separation sections to frequency conversion so as to span respectively different predetermined third frequency bands;
a second combination section (2072) for multiplexing the M signals outputted from the M third frequency conversion sections and outputting a second FDM signal;
a second optical modulation section (1022) for converting the second FDM signal outputted from the second combination section into the second optical signal and outputting the second optical signal to the second optical combination/splitter section;
a second optical detection section (1042) for reconverting the second optical signal outputted from the second optical combination/splitter section into the second FDM signal, the second FDM signal being an electrical signal;
a second splitter section (4082) for separately outputting the M signals contained in the second FDM signal outputted from the second optical detection section; and
M fourth frequency conversion sections (2114) provided respectively corresponding to the M signals outputted from the second splitter section, wherein each fourth frequency conversion section subjects the respective separated signal to frequency conversion so as to span a predetermined fourth frequency band, thereby obtaining the second DSL modulated signal for output to the corresponding first separation section.

45. The transmission apparatus (29) according to claim 43, wherein a frequency band spanned by the first DSL modulated signal outputted from each first modulation/demodulation section and a frequency band spanned by the second DSL modulated signal outputted from each second modulation/demodulation section adjoin each other on a frequency axis.

46. The transmission apparatus (32) according to claim 44, wherein a frequency band spanned by the first DSL modulated signal outputted from each first modulation/demodulation section and a frequency band spanned by the second DSL modulated signal outputted from each second modulation/demodulation section adjoin each other on a frequency axis.

47. The transmission apparatus (29) according to claim 43, wherein a frequency band spanned by a first signal and a frequency band spanned by a second signal adjoin each other on a frequency axis,
wherein the first signal is defined as the signal obtained by subjecting the first DSL modulated signal outputted from each first modulation/demodulation section to frequency conversion by the first frequency conversion section, and the second signal is defined as the signal obtained by subjecting the second DSL modulated signal outputted from the second modulation/demodulation section corresponding to the first modulation/demodulation section to frequency conversion by the second frequency conversion section.

48. The transmission apparatus (32) according to claim 44, wherein a frequency band spanned by a first signal and a frequency band spanned by a second signal adjoin each other on a frequency axis,
wherein the first signal is defined as the signal obtained by subjecting the first DSL modulated signal outputted from each first modulation/demodulation section to frequency conversion by the first frequency conversion section, and the second signal is defined as the signal obtained by subjecting the second DSL modulated signal outputted from the second modulation/demodulation section corresponding to the first modulation/demodulation section to frequency conversion by the second frequency conversion section.

49. The transmission apparatus (29) according to claim 43, wherein frequency bands spanned by first signals and frequency bands spanned by second signals alternate on a frequency axis,
wherein each first signal is defined as the signal obtained by subjecting the first DSL modulated signal outputted from each first modulation/demodulation section to frequency conversion by the first frequency conversion section, and each second signal is defined as the signal obtained by subjecting the second DSL modulated signal outputted from the second modulation/demodulation section corresponding to the first modulation/demodulation section to frequency conversion by the second frequency conversion section.

50. The transmission apparatus (32) according to claim 44, wherein frequency bands spanned by first signals and frequency bands spanned by second signals alternate on a frequency axis,
wherein each first signal is defined as the signal obtained by subjecting the first DSL modulated signal outputted from each first modulation/demodulation section to frequency conversion by the first frequency conversion section, and each second signal is defined as the signal obtained by subjecting the second DSL modulated signal outputted from the second modulation/demodulation section corresponding to the first modulation/demodulation section to frequency conversion by the second frequency conversion section.
